# EUROPÄISCHE PATENTSCHRIFT

(11) **EP 3 615 634 B1**
(45) Veröffentlichungstag und Bekanntmachung des Hinweises auf die Patenterteilung: **01.03.2023**
(21) Anmeldenummer: 18720213.0
(22) Anmeldetag: 24.04.2018
(51) Int. Cl.: C09K 19/42, G02F 1/139, C09K 19/04, C09K 19/30, C09K 19/34

(54) **FLÜSSIGKRISTALLINES MEDIUM**
LIQUID CRYSTAL MEDIUM
MILIEU CRISTAL LIQUIDE

(30) Priorität: 27.04.2017 DE 102017004059
(43) Veröffentlichungstag der Anmeldung: 04.03.2020
(73) Patentinhaber: Merck Patent GmbH, 64293 Darmstadt (DE)
(72) Erfinder: WITTEK, Michael, 64390 Erzhausen (DE); KLASS, Dagmar, 64291 Darmstadt (DE)
(86) Internationale Anmeldenummer: PCT/EP2018/060401
(87) Internationale Veröffentlichungsnummer: WO 2018/197444

(56) Entgegenhaltungen:
- WO-A1-2017/071790
- WO-A1-2017/129216
- CN-B- 104 673 323
- DE-A1- 10 004 636
- DE-A1-102015 107 966
- US-A1- 2004 046 150
- US-A1- 2017 096 602

## Beschreibung

Die vorliegende Erfindung betrifft ein flüssigkristallines Medium sowie dessen Verwendung für elektrooptische Zwecke, insbesondere für Flüssigkristallichtventile für den Einsatz in Beleuchtungseinrichtungen für Fahrzeuge, dieses Medium enthaltende Flüssigkristallichtventile und auf solchen Flüssigkristallichtventilen basierende Beleuchtungseinrichtungen.

Flüssigkristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise TN-Zellen mit verdrillt nematischer ("twisted nematic") Struktur oder STN-Zellen ("super-twisted nematic"). Moderne TN- und STN-Displays basieren auf einer aktiven Matrix von individuell adressierbaren Flüssigkristallichtventilen (den Bildpunkten) mit integrierten roten, grünen und blauen Farbfiltern zur additiven Erzeugung der Farbbilder.

Die in Flüssigkristallanzeigen ausgenutzten elektrooptischen Effekte finden in neuerer Zeit auch für andere Anwendungen Verwendung.

In der DE 19910004 A1 werden LCD-Bildschirme als Blende zur beliebigen Ausgestaltung der Helligkeitsverteilung von Beleuchtungseinrichtungen für Kraftfahrzeuge beschrieben, wodurch die Helligkeitsverteilung flexibel an die Fahrsituation angepaßt werden soll.

Solche adaptiven Beleuchtungseinrichtungen für Kraftfahrzeuge (engl.: adaptive front lighting system, AFS) erzeugen ein an die jeweilige Situation und die Umweltbedingungen angepaßtes Scheinwerferlicht und sind in der Lage beispielsweise auf die Licht- und Wetterverhältnisse, die Fahrzeugbewegung oder das Vorhandensein anderer Verkehrsteilnehmer zu reagieren, um die Umgebung konstant und optimal auszuleuchten und andere Verkehrsteilnehmer nicht zu stören. In der US 4,985,816 sind beispielsweise Bauteile offengelegt, in denen ein räumlicher Lichtmodulator in der Form einer Flüssigkristall-(LCD)anzeigeplatte bestehend aus einem Raster von lichtdurchlässigen Elementen, analog den Bildpunkten einer Flüssigkristallanzeige, eine elektrisch schaltbare, vollständige oder partielle Abschattung des Lichtkegels erzeugt mit dem Ziel, die Fahrer entgegenkommender Fahrzeuge nicht oder weniger zu blenden. Solche räumlichen Lichtmodulatoren werden wie bereits erwähnt auch als Flüssigkristallichtventile bezeichnet. Aufgrund der ähnlichen Funktionsweise wie bei Projektoren spricht man auch von Fahrzeugbeleuchtungen vom Projektor-Typ. Die Bildinformation zur kontrollierten Abschattung des Lichtkegels liefert dabei bevorzugt eine Digitalkamera.

Ein Flüssigkristallichtventil im Sinne der vorliegenden Erfindung kann eine einzige Fläche zur Modulierung des Lichts umfassen oder ein Raster (Matrix) einer Vielzahl gleicher oder verschiedener Teilflächen entsprechend den Bildpunkten (engl. "Pixel") einer Flüssigkristallanzeige. Ein Raster von Flüssigkristallichtventilen stellt somit einen Spezialfall einer einfarbigen Matrix-Flüssigkristallanzeige dar oder kann als Teil einer solchen betrachtet werden.

Eine Beleuchtungseinrichtung im Sinne der Erfindung ist insbesondere ein AFS bzw. Teil eines AFS. Eine Beleuchtungseinrichtung im Sinne der Erfindung dient insbesondere der Ausleuchtung eines Bereichs vor einem Fahrzeug bzw. Kraftfahrzeug.

Fahrzeuge im Sinne der Erfindung sind ganz allgemein Fortbewegungsmittel wie beispielsweise, aber nicht beschränkt auf, Flugzeuge, Schiffe, und Landfahrzeuge wie Automobile, Motorräder und Fahrräder, sowie schienengebundene Landfahrzeuge wie Lokomotiven.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

In dem in der oben erwähnten US 4,985,816 offenbarten Flüssigkristallichtventil wird eine TN-Zelle als optisches Modulationselement verwendet, welches Bildelemente entsprechend dem gewünschten Helligkeitsprofil der Fahrzeugbeleuchtung darstellt, wobei beispielsweise eine Ansteuerspannung an den TN-Flüssigkristall zur Modulierung (Steuerung) des Transmissionsgrades eines Bildelementes angelegt wird. Wegen der dort erforderlichen Polarisatoren ist nur etwa die Hälfte des Lichtes der Lichtquelle nutzbar. Eine ebenfalls auf einer TN-Zelle basierende Alternative, die es ermöglicht, mehr als nur die Hälfte des Lichtes der Lichtquelle der Beleuchtungseinrichtung nutzbar zu machen ist in DE 10 2013 113 807 A1 offengelegt. Darin wird das Licht mittels eines polarisierenden Strahlteilers in zwei Teilstrahlen mit zueinander senkrechter Polarisationsebene geteilt und durch zwei separate, getrennt voneinander schaltbare Flüssigkristallelemente gelenkt.

Solche Beleuchtungseinrichtungen zeichnen sich durch vergleichsweise hohe Betriebstemperaturen von typischerweise 60-80°C aus, was besondere Anforderungen an die verwendeten Flüssigkristallmedien stellt: die Klärpunkte müssen höher als 120°C, bevorzugt höher als 140°C sein und wegen der starken Lichtbelastung müssen diese Medien eine besonders hohe Lichtstabilität aufweisen. Dies kann u.U. beispielsweise durch Verwendung von Materialien mit möglichst geringer Doppelbrechung begünstigt werden.

Solche Medien mit relativ niedriger Doppelbrechung sind zur Verwendung in Flüssigkristallanzeigen beispielsweise aus DE 102015107966 A1, DE 10004636 A1, CN 104673323 B, US 2017/096602 A1 und US 2004/046150 A1 grundsätzlich bekannt. Hohe Klärpunkte und niedrige Doppelbrechung weisen auch die Medien zur Verwendung in Beleuchtungseinrichtungen für Kraftfahrzeuge auf, die in WO 2017/129216 A1 und in WO 2017/071790 A1 beschrieben sind.

Die Flüssigkristallmaterialien müssen außerdem eine gute chemische und thermische Stabilität und eine gute Stabilität gegenüber elektrischen Feldern besitzen. Ferner sollten die Flüssigkristallmaterialien niedrige Viskosität aufweisen und in den Zellen relativ kurze Ansprechzeiten, möglichst tiefe Betriebsspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase, vorzugsweise von -40°C bis 150°C. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Lichtventile in Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter Licht- und Temperaturstabilität und geringerem Dampfdruck erwünscht. Derartige Matrix-Flüssigkristallanzeigen sind bekannt und das bauartliche Prinzip kann auch für die erfindungsgemäße Beleuchtungseinrichtung verwendet werden.

Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht.

Die TFT-Anzeigen und entsprechende Lichtventile für Beleuchtungseinrichtungen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder Licht-Belastung zeigt. Dies ist auch beim Einsatz von Lichtventilen in Beleuchtungseinrichtungen für Fahrzeuge relevant, da der Flüssigkristall darin extremen Temperatur- und Lichtbelastungen ausgesetzt ist und ein geringer spezifischer Anfangswiderstand und eine schnelle Zunahme des spezifischen Widerstands bei Belastung in der Regel mit einer geringen Langzeitstabilität korreliert.

Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den Anforderungen für die Anwendung in Beleuchtungseinrichtungen.

Es besteht somit immer noch ein großer Bedarf nach Flüssigkristallmischungen mit sehr hohem spezifischen Widerstand bei gleichzeitig großem Arbeitstemperaturbereich und hoher Lichtstabilität.

Bei Flüssigkristallichtventilen für Beleuchtungseinrichtungen für Fahrzeuge sind Medien erwünscht, die folgende Vorteile in den Zellen ermöglichen:
- erweiterter nematischer Phasenbereich (insbesondere zu hohen Temperaturen)
- lagerstabil, auch bei tiefen Temperaturen
- Schaltbarkeit bei tiefen Temperaturen
- erhöhte Beständigkeit gegenüber Licht.

Mit den aus dem Stand der Technik zur Verfügung stehenden Medien ist es nicht möglich, diese Vorteile unter gleichzeitigem Erhalt der übrigen Parameter zu realisieren. Beispielsweise weisen Flüssigkristallmedien der Offenlegungsschrift DE 102 23 061 A1 und DE 10 2008 062858 A1 ein niedriges Δn auf, allerdings liegen die Klärpunkte mit um die 80 °C in einem für die erfindungsgemäße Anwendung zu niedrigen Bereich.

Der Erfindung liegt die Aufgabe zugrunde, Medien, insbesondere für die oben erwähnten Flüssigkristallichtventile für Beleuchtungseinrichtungen für Fahrzeuge bereitzustellen, die die oben angegebenen Nachteile nicht oder nur in geringerem Maße, und vorzugsweise gleichzeitig sehr hohe Klärpunkte und niedrige Doppelbrechung aufweisen.

Es wurde nun gefunden, daß diese Aufgabe gelöst werden kann, wenn man in Flüssigkristallbauteilen erfindungsgemäße Medien verwendet. Gegenstand der Erfindung ist eine Beleuchtungseinrichtung für Fahrzeuge enthaltend ein elektrooptisches Bauelement, dadurch gekennzeichnet, daß das elektrooptische Bauelement ein ein flüssigkristallines Medium enthält, welches eine oder mehrere Verbindungen der Formel CC enthält: 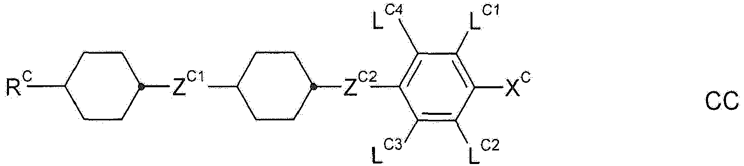 worin
- R^{C}: einen Alkyl-, Alkenyl oder Alkoxyrest mit 1 bis 15 C-Atomen, in denen eine Methylengruppe durch 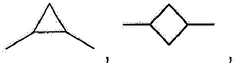 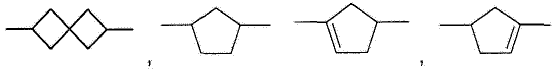 oder 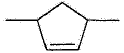 ersetzt sein kann und worin jeweils ein oder mehrere H-Atome durch F ersetzt sein können,
- X^{C}: F, CI, halogenierter Alkylrest, halogenierter Alkenylrest, halogenierter Alkoxyrest oder halogenierter Alkenyloxyrest mit bis zu 6 C-Atomen,
- Z^{C1} und Z^{C2}: unabhängig voneinander -CH₂CH₂- oder eine Einfachbindung,
- L^{C1} und L^{C2}: unabhängig voneinander H oder F,
- L^{C3} und L^{C4}: unabhängig voneinander H oder Methyl
bedeuten,
wobei das Medium einen Klärpunkt von 120°C oder mehr aufweist und
wobei die Gesamtkonzentration der einen oder mehreren Verbindungen der Formel CC im Medium 55 Gew.-% oder mehr beträgt.

In der vorliegenden Anmeldung umfassen sämtliche Atome auch ihre Isotope. Insbesondere können ein oder mehrere Wasserstoffatome (H) durch Deuterium (D) ersetzt sein, was in einigen Ausführungsformen besonders bevorzugt ist; ein hoher Deuterierungsgrad ermöglicht oder erleichtert den analytischen Nachweis von Verbindungen, insbesondere im Falle geringer Konzentrationen.

In der vorliegenden Anmeldung bedeutet Alkyl oder Alkoxy einen geradkettigen oder verzweigten Alkyl- oder Alkoxyrest. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Ein Alkylrest, in dem eine CH₂-Gruppe durch -CH=CH- ersetzt ist, kann geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

In einem Alkylrest, in dem eine CH₂-Gruppe durch -O- und eine durch -COersetzt ist, sind diese bevorzugt benachbart. Somit beinhaltet dieser eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Verbindungen mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

In einer bevorzugten Ausführungsform enhält die Beleuchtungseinrichtung ein elektrooptisches Bauelement enthaltend ein flüssigkristatlines Medium, welches eine oder mehrere Verbindungen der Formel CP in einer Gesamtkonzentration von 2% oder weniger enthält: 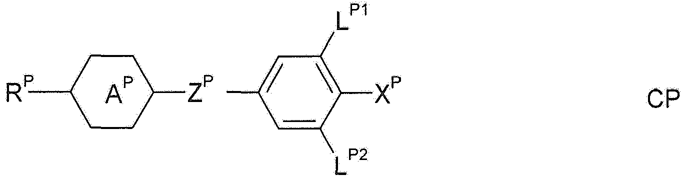 worin
- R^{P}: einen Alkyl-, Alkenyl oder Alkoxyrest mit 1 bis 15 C-Atomen, in denen eine Methylengruppe durch 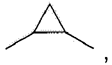 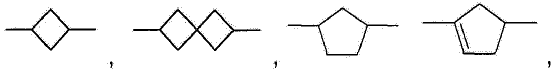 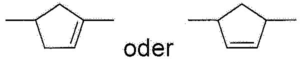 ersetzt sein kann und worin jeweils ein oder mehrere H-Atome durch F ersetzt sein können,
- A^{P}: 1,4-Cyclohexylen, worin ein oder zwei nicht benachbarte CH₂-Gruppen durch -O- ersetzt sein können, oder 1,4-Phenylen, worin ein oder zwei CH-Gruppen durch N ersetzt sein können,
- X^{P}: F, CI, halogenierter Alkylrest, halogenierter Alkenylrest, halogenierter Alkoxyrest oder halogenierter Alkenyloxyrest mit bis zu 6 C-Atomen,
- Z^{P}: unabhängig voneinander -CH₂CH₂- oder eine Einfachbindung,
- L^{P1} und L^{P2}: unabhängig voneinander H oder F
bedeuten.

Besonders bevorzugt enthält das Medium eine oder mehrere Verbindungen der Formel CP in einer Gesamtkonzentration von 0,5% oder weniger, ganz besonders bevorzugt 0,1 % oder weniger.

In einer bevorzugten Ausführungsform enthält das Medium eine oder mehrere Verbindungen der Formel CP in einer Gesamtkonzentration in einem Bereich von 0,01% bis 2%.

In einer weiteren bevorzugten Ausführungsform enthält das Medium keine Verbindung der Formel CP.

Die Verbindungen der Formel CC sind bevorzugt ausgewählt aus der Gruppe der Verbindungen CC-1 bis CC-12, besonders bevorzugt aus der Gruppe der Verbindungen CC-1- bis CC-6: 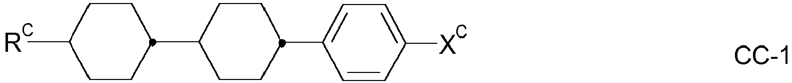 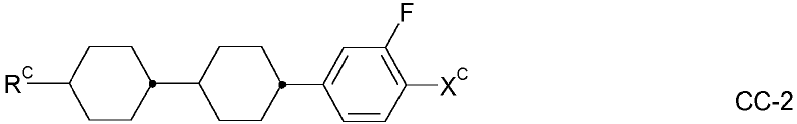 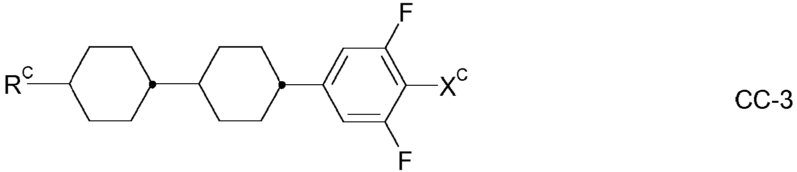 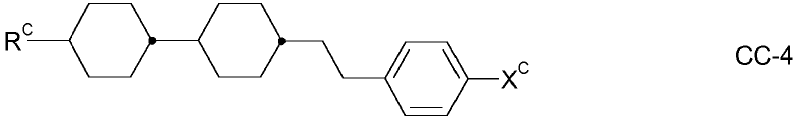 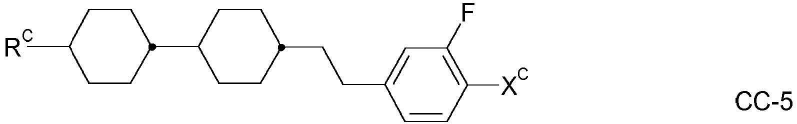 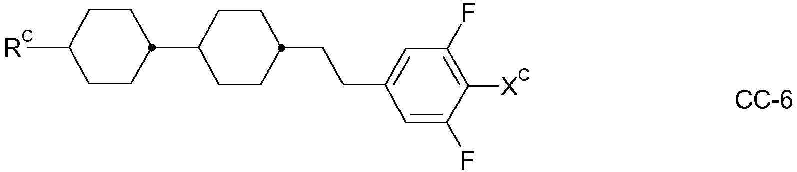 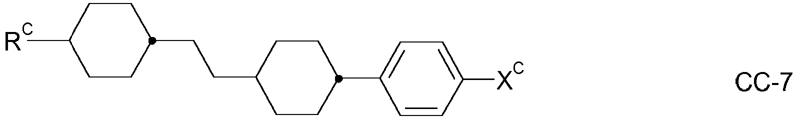 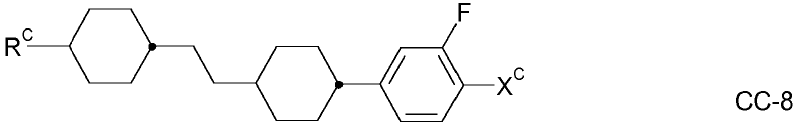 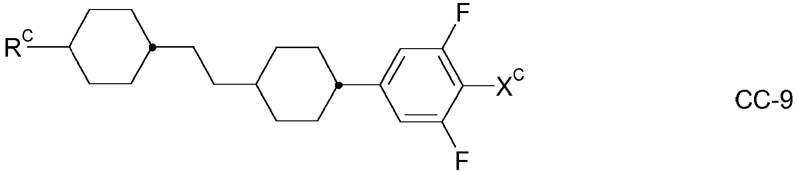 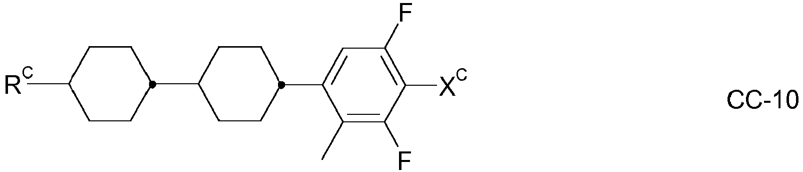 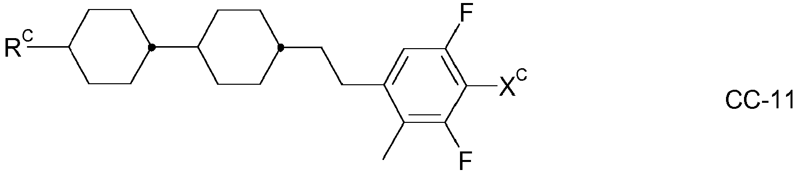 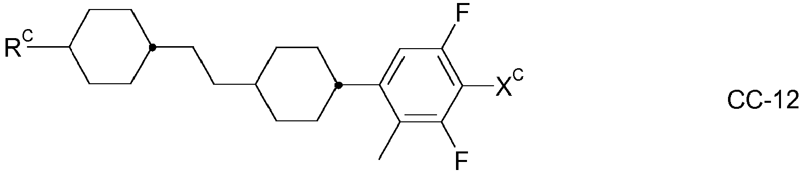 worin R^{C} und X^{C} die oben angegebenen Bedeutungen haben und bevorzugt
- R^{C}: Alkyl mit 1 bis 7 C-Atomen, in dem eine Methylengruppe durch 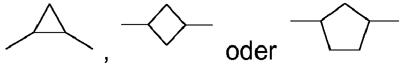 ersetzt sein kann und worin jeweils ein oder mehrere H-Atome durch F ersetzt sein können, besonders bevorzugt Ethyl, n-Propyl, n-Butyl oder n-Pentyl,
und
- X^{C}: F, Cl, OCF₂H oder OCH₂CF₂H
bedeuten.

Ganz besonders bevorzugte Verbindungen der Formeln CC-1 bis CC-6 sind ausgewählt aus den Unterformeln CC-1-1 bis CC-6-10:

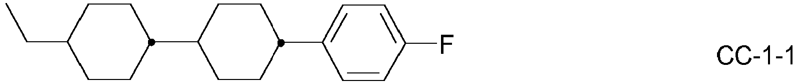

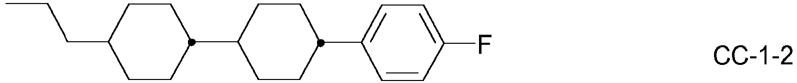

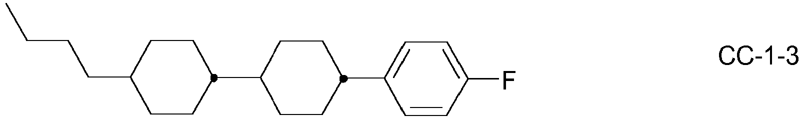

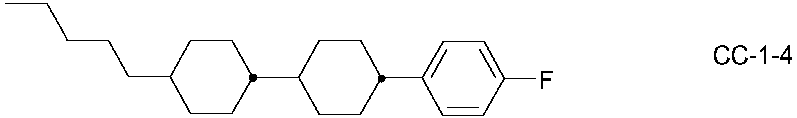

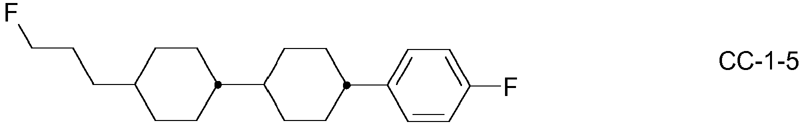

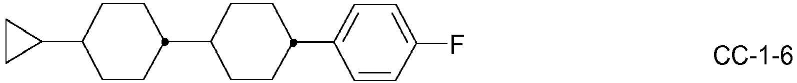

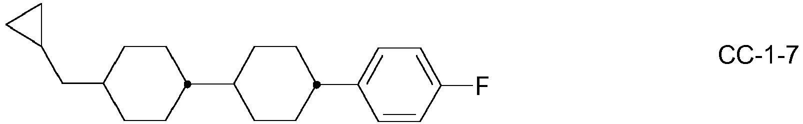

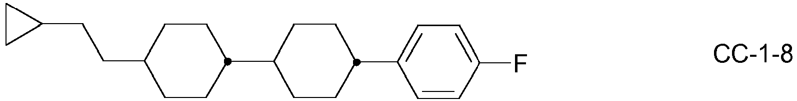

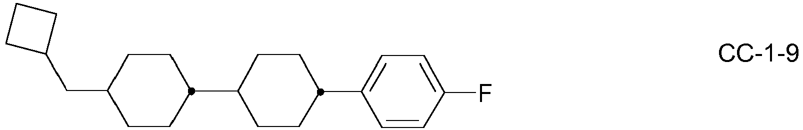

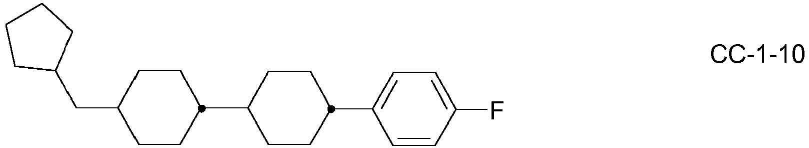

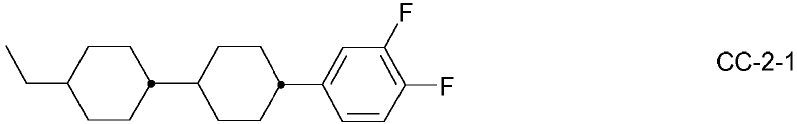

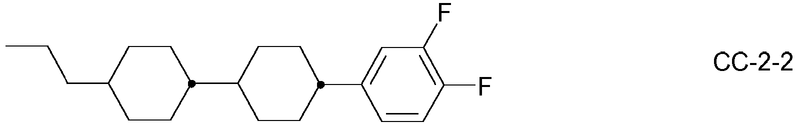

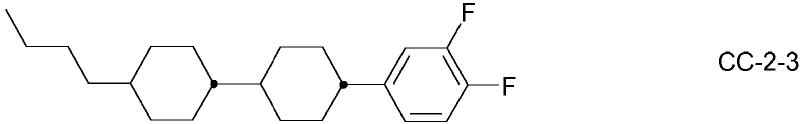

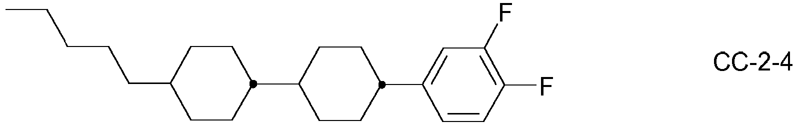

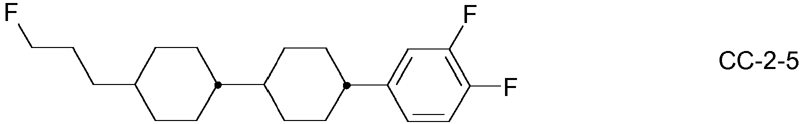

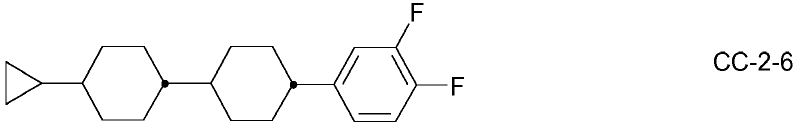

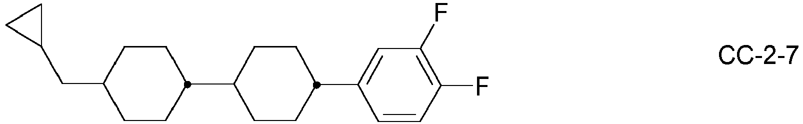

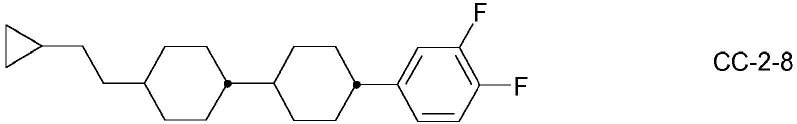

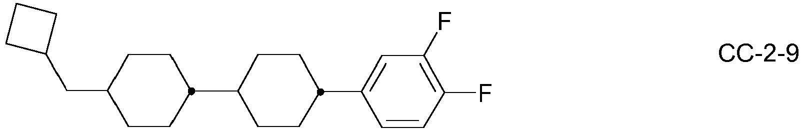

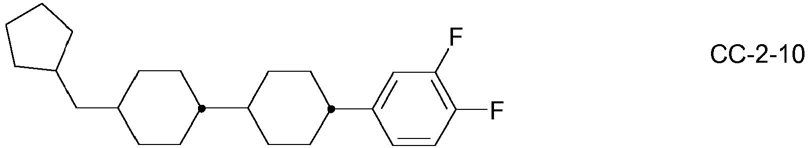

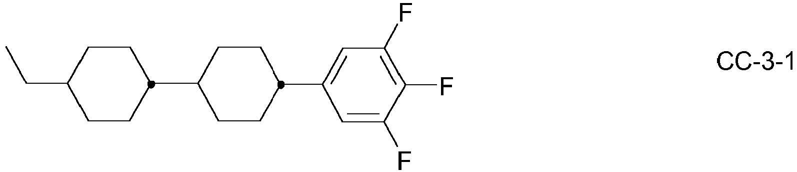

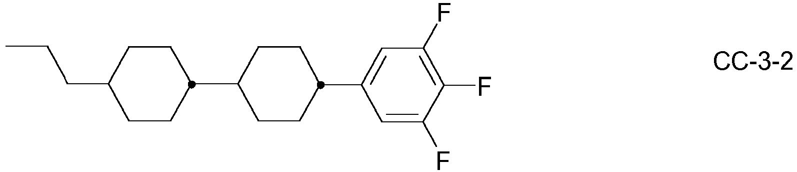

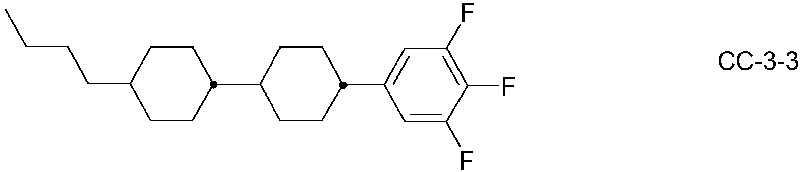

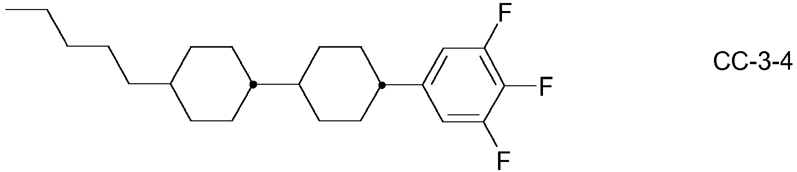

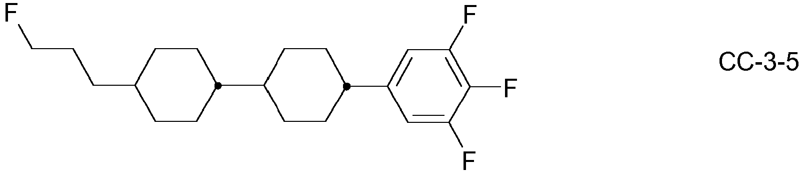

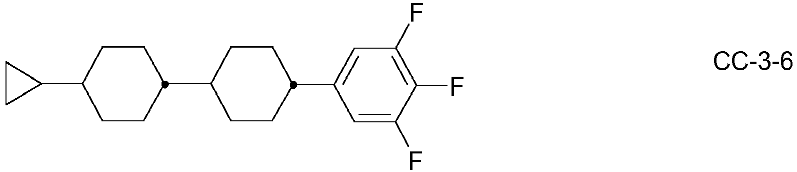

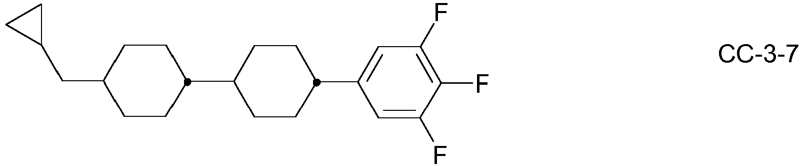

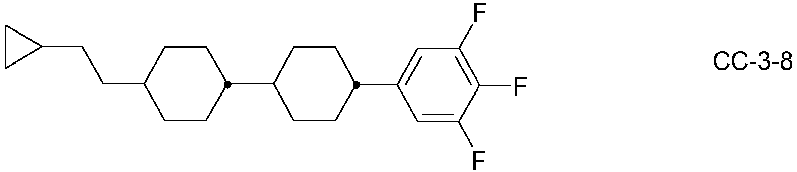

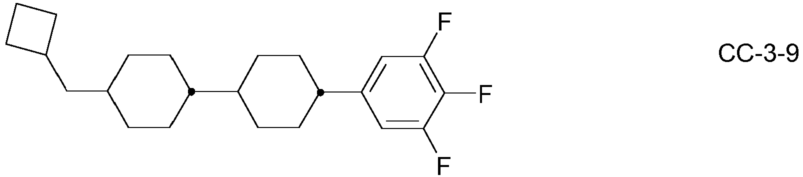

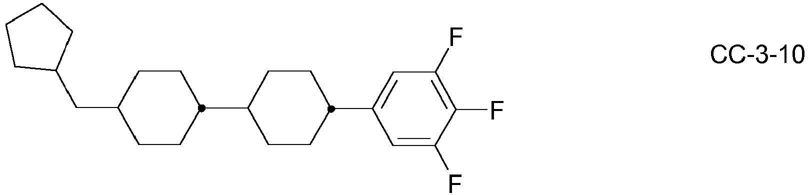

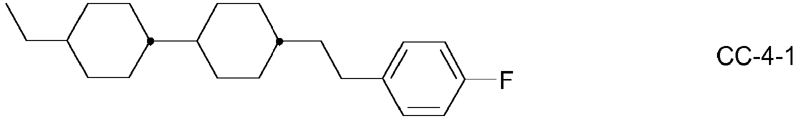

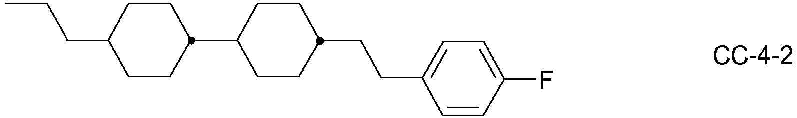

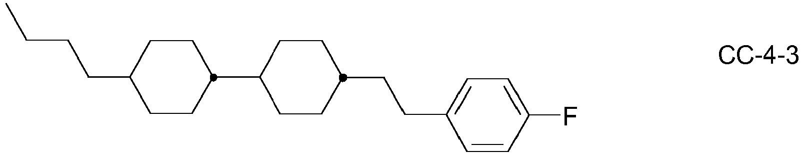

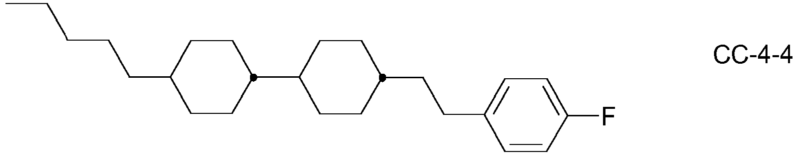

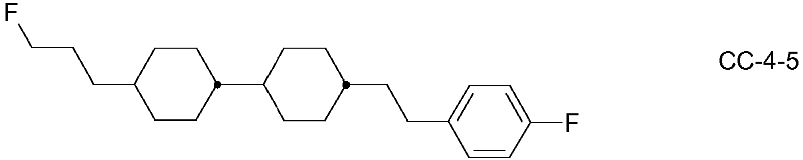

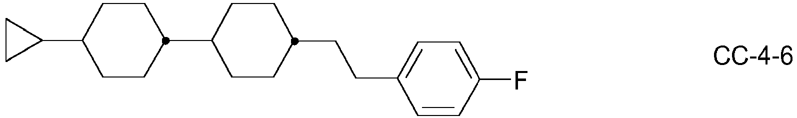

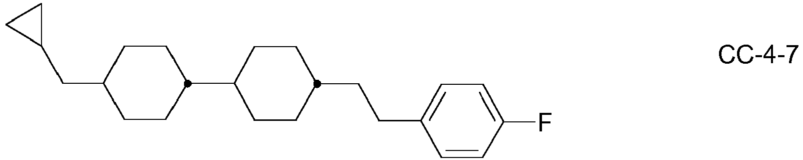

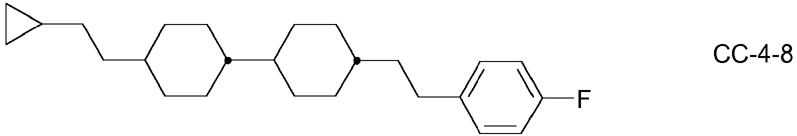

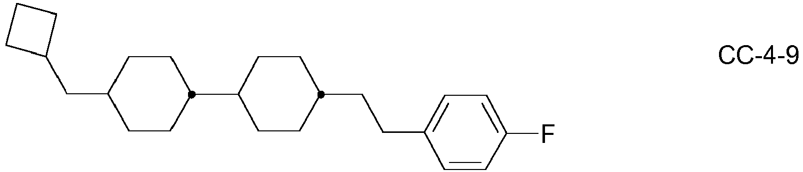

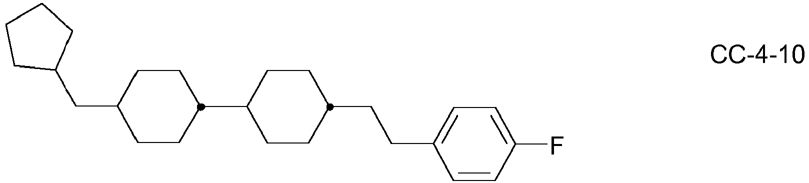

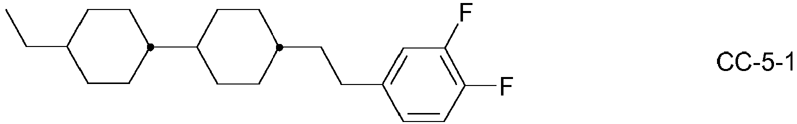

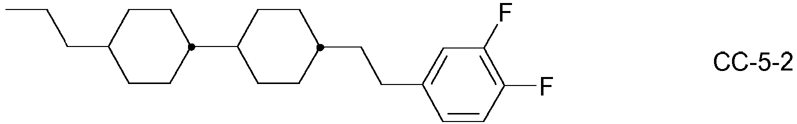

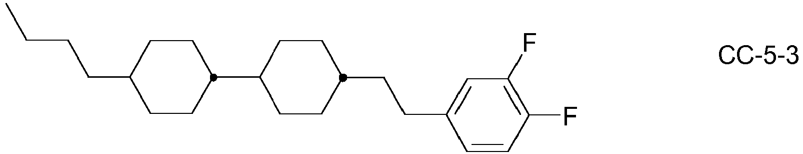

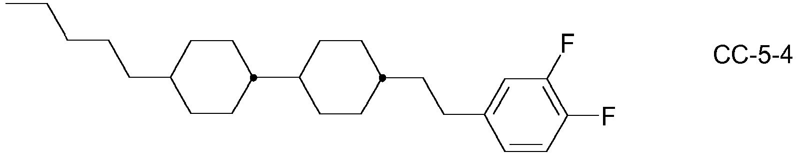

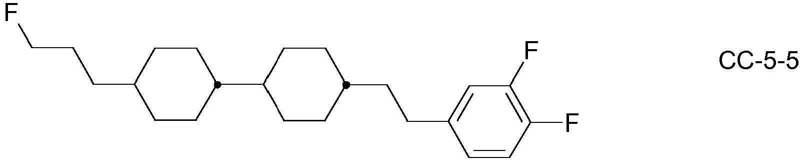

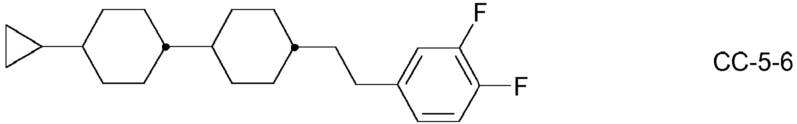

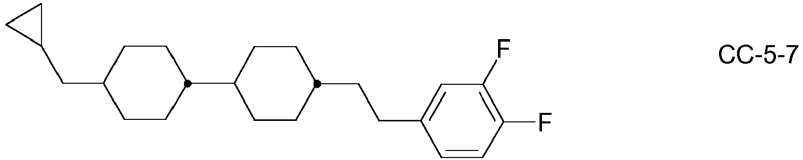

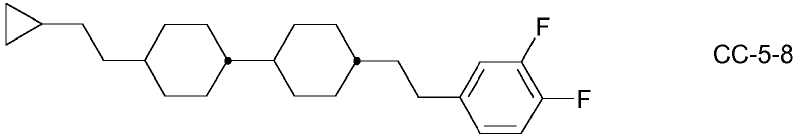

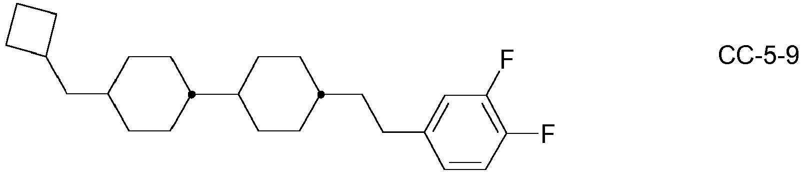

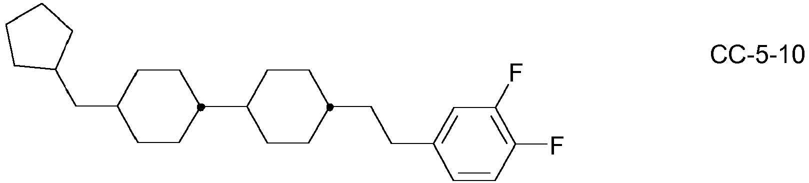

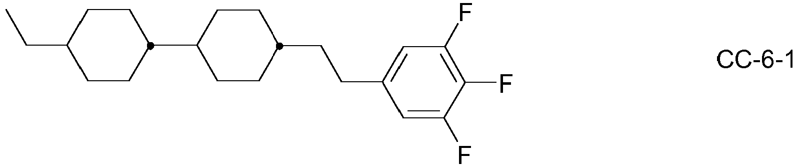

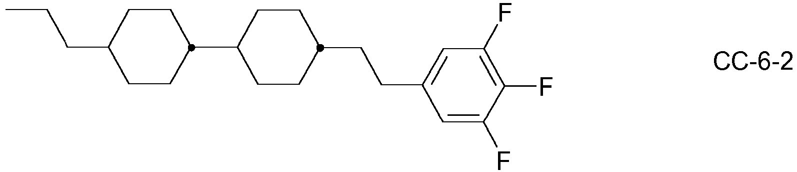

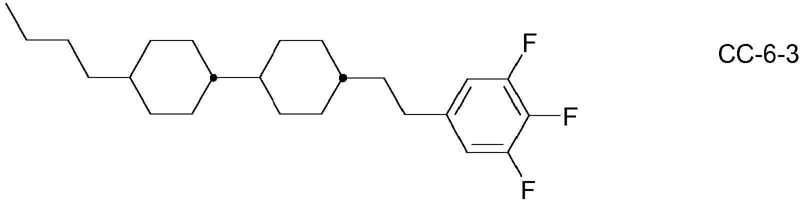

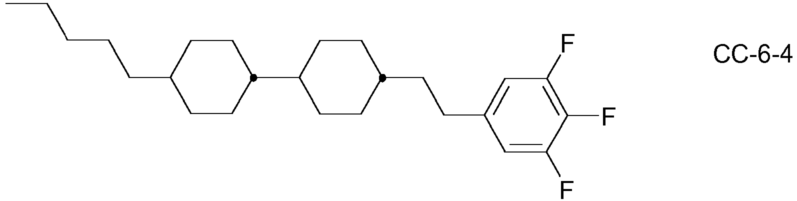

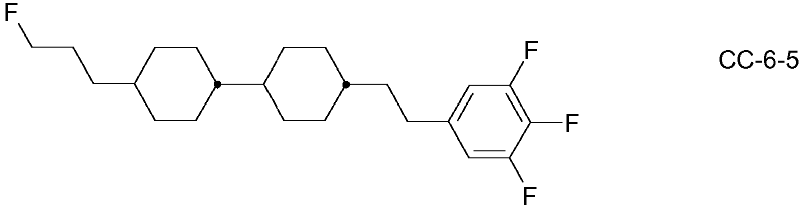

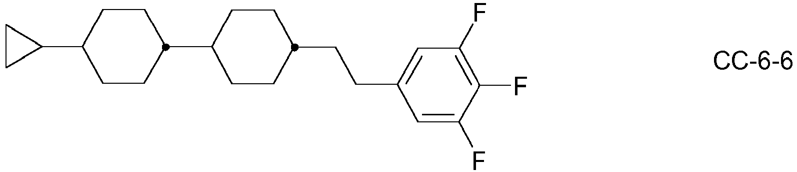

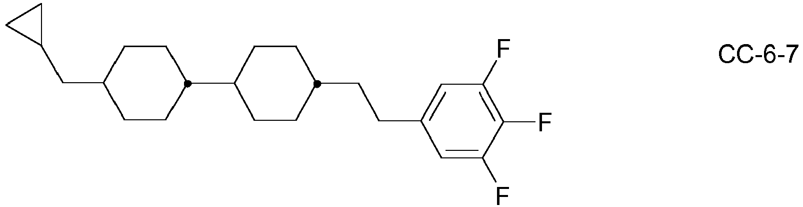

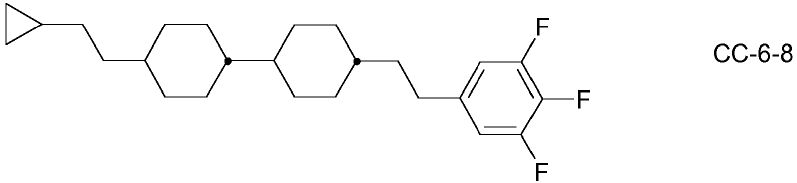

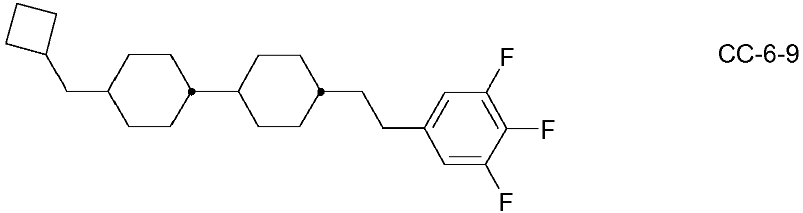

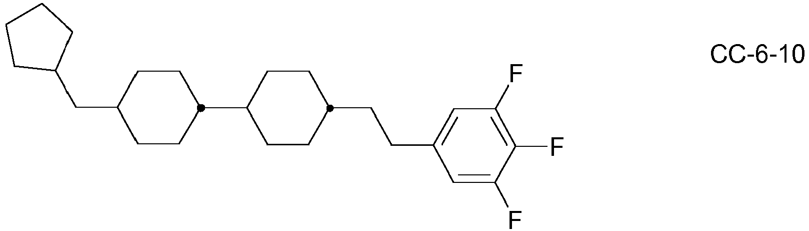

In einer besonderen Ausführungsform enthält das Medium zusätzlich eine oder mehrere Verbindungen der Formel I 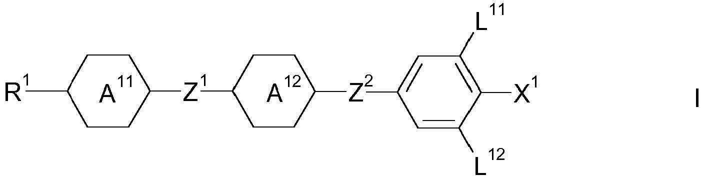 worin
- R¹: einen Alkyl-, Alkenyl oder Alkoxyrest mit 1 bis 15 C-Atomen, in denen eine Methylengruppe durch 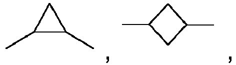 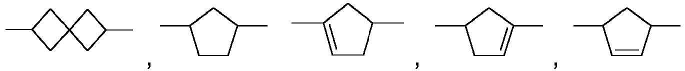 ersetzt sein kann und worin jeweils ein oder mehrere H-Atome durch F ersetzt sein können, 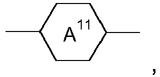 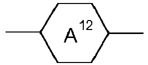 bei jedem Auftreten gleich oder verschieden 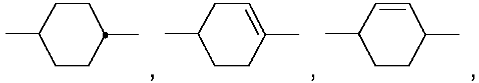 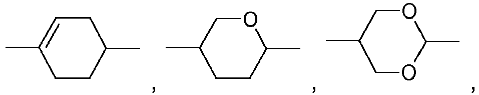 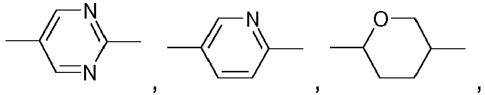 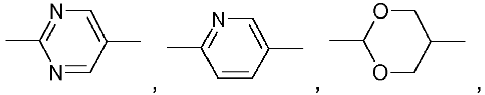 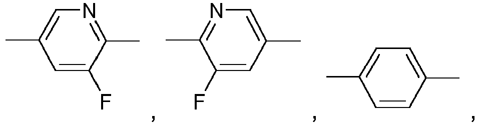 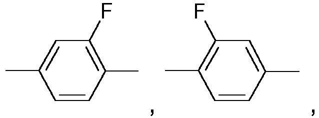 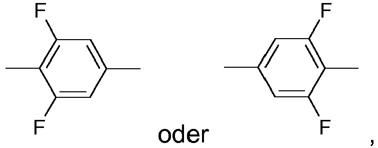
- L¹¹ und L¹²: unabhängig voneinander H oder F,
- X¹: F, Cl, halogenierter Alkylrest, halogenierter Alkenylrest, halogenierter Alkoxyrest oder halogenierter Alkenyloxyrest mit bis zu 6 C-Atomen,
- Z¹ und Z²: unabhängig voneinander -CH₂CH₂-, -CF₂CF₂-, -COO-, *trans-*CH=CH-, trans-CF=CF-, -CH₂O- oder eine Einfachbindung,
bedeuten,
mit der Maßgabe, daß die Verbindungen der Formel CC ausgeschlossen sind.

Die Verbindungen der Formel I sind bevorzugt ausgewählt aus den Verbindungen der folgenden Unterformeln: 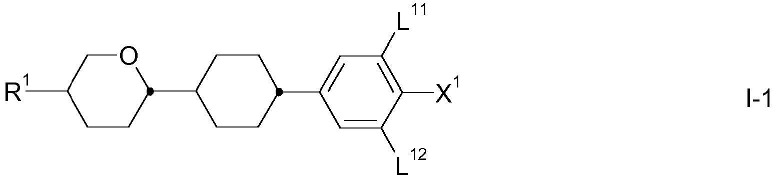 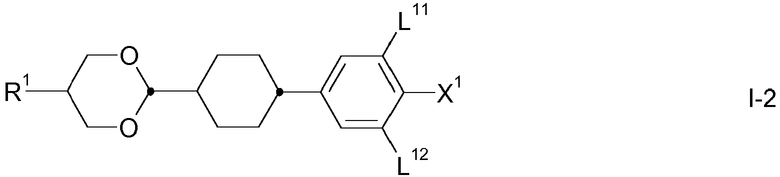 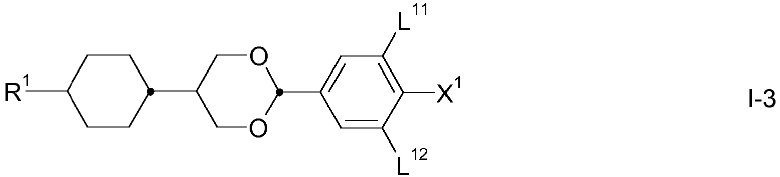 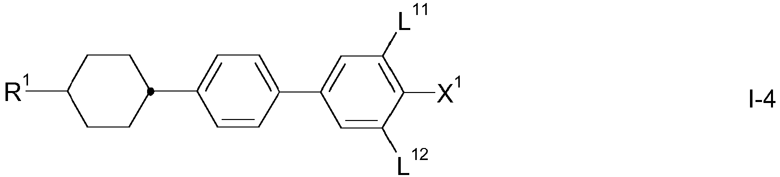 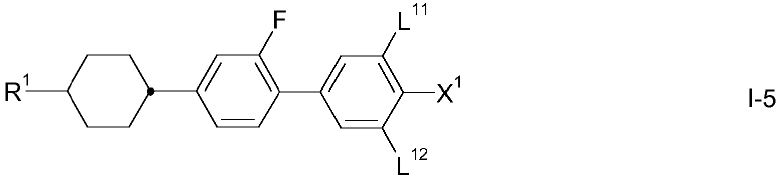 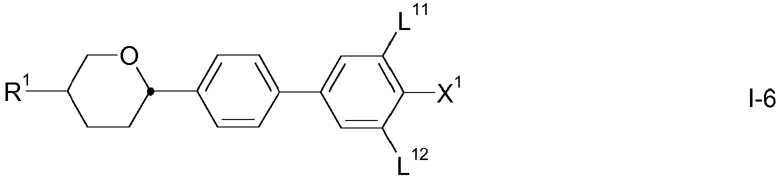 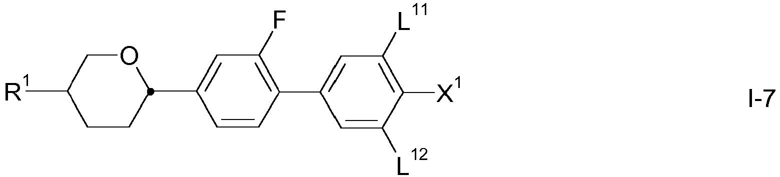 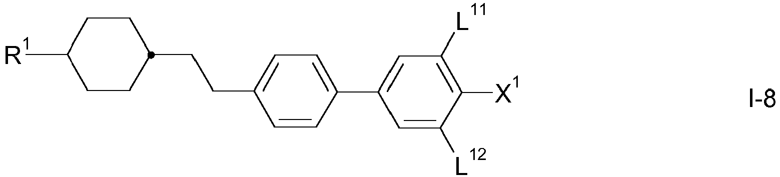 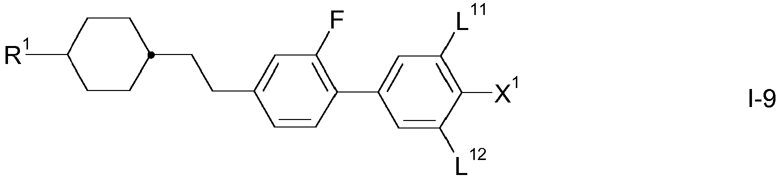 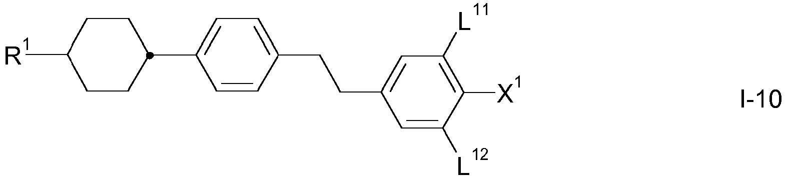 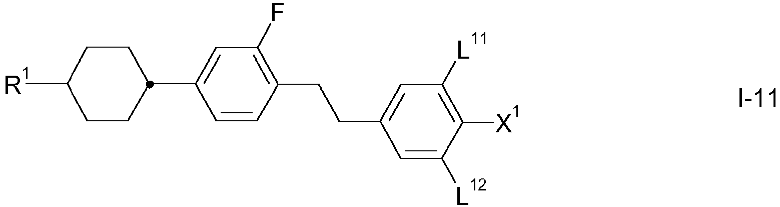 wobei die auftretenden Gruppen die oben angegebenen Bedeutungen haben.

Besonders bevorzugt sind die Verbindungen der Formel I ausgewählt aus der Gruppe der Verbindungen I-4 und I-5, ganz besonders bevorzugt ausgewählt aus den folgenden Unterformeln:

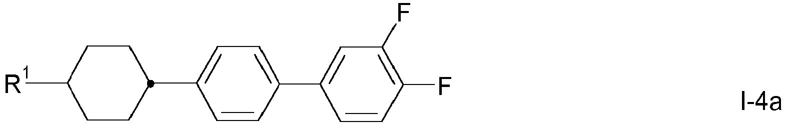

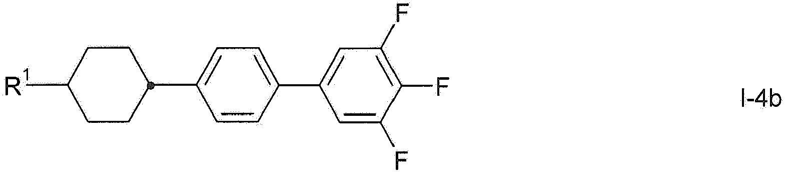

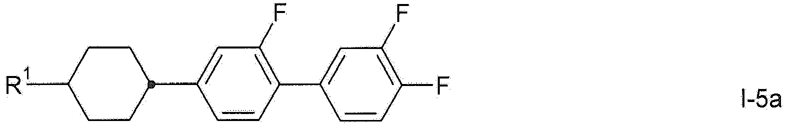

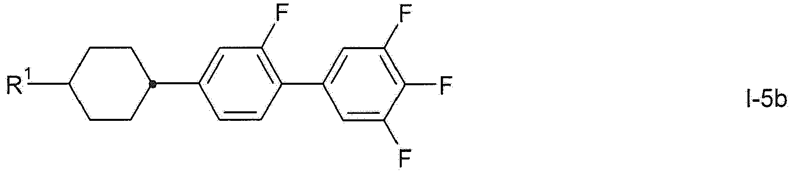

Bevorzugt enthält das Medium zusätzlich eine oder mehrere Verbindungen der Formel II 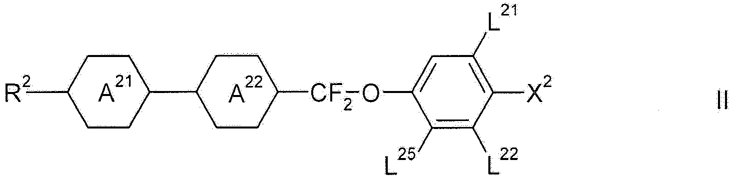 worin
- R²: einen Alkyl-, Alkenyl oder Alkoxyrest mit 1 bis 15 C-Atomen, in denen eine Methylengruppe durch 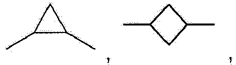 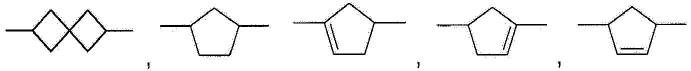 ersetzt sein kann und worin jeweils ein oder mehrere H-Atome durch F ersetzt sein können, 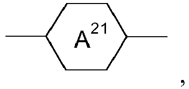 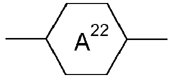 bei jedem Auftreten gleich oder verschieden 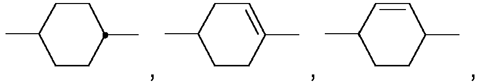 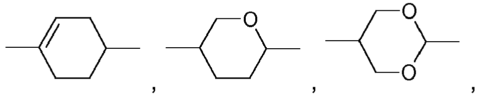 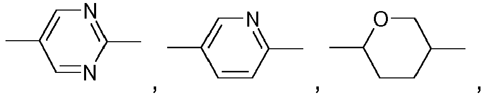 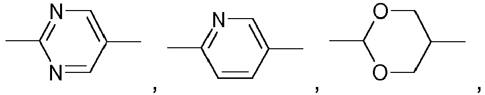 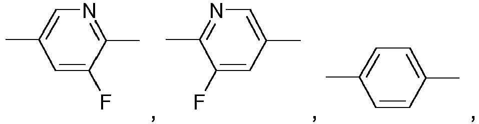 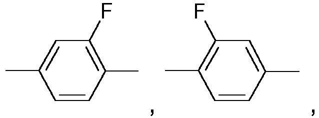 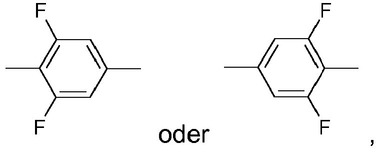
- L²¹ und L²²: unabhängig voneinander H oder F,
- L²⁵: H oder Methyl, bevorzugt H,
- X²: F, Cl, CN, halogenierter Alkylrest, halogenierter Alkenylrest, halogenierter Alkoxyrest oder halogenierter Alkenyloxyrest mit 1 bis 6 C-Atomen,
bedeuten,
bevorzugt in einer Gesamtkonzentration von 40 % oder weniger.

Die Verbindungen der Formel II sind bevorzugt ausgewählt aus der Gruppe der Verbindungen der Formeln II-1 bis II-6 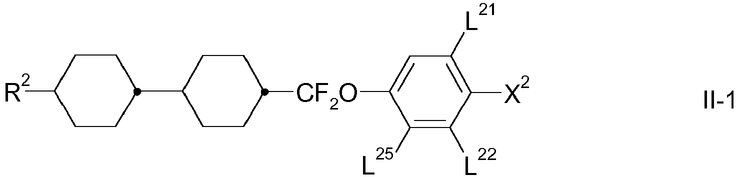 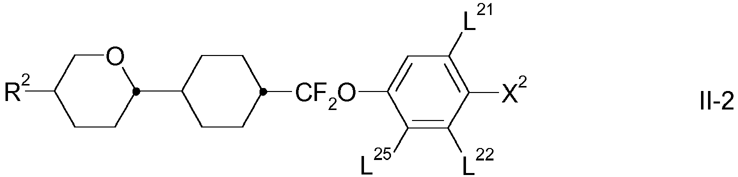 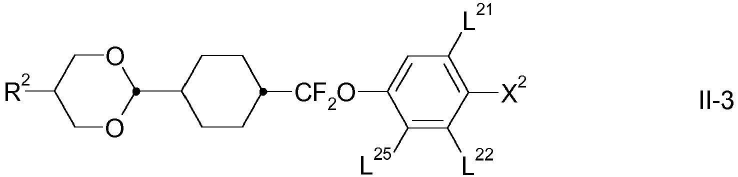 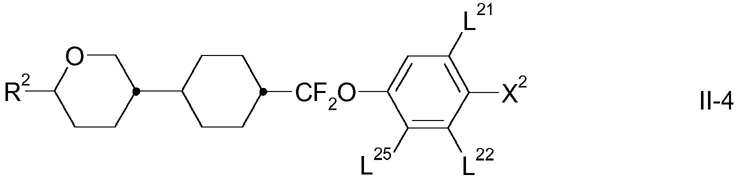 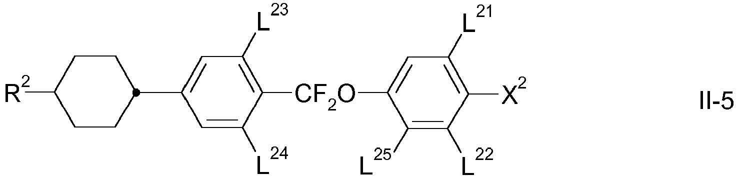 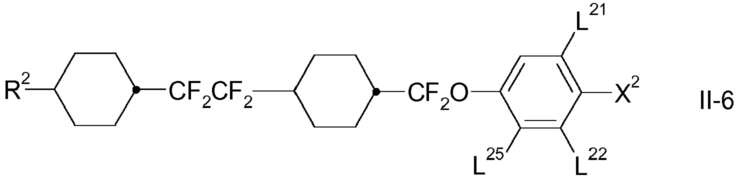 worin
- R²: Alkyl mit 1 bis 7 C-Atomen, in dem eine Methylengruppe durch 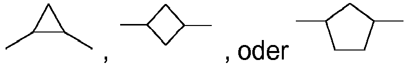 ersetzt sein kann und worin jeweils ein oder mehrere H-Atome durch F ersetzt sein können,
- L²¹, L²², L²³ und L²⁴: unabhängig voneinander H oder F,
- L²⁵: H oder Methyl, bevorzugt H, und
- X²: F, Cl, halogeniertes Alkyl oder halogeniertes Alkoxy mit 1 bis 6 C-Atomen
bedeuten.

In einer besonders bevorzugten Ausführungsform sind die Verbindungen der Formel II ausgewählt aus den Verbindungen der Formeln II-1a bis II-1e 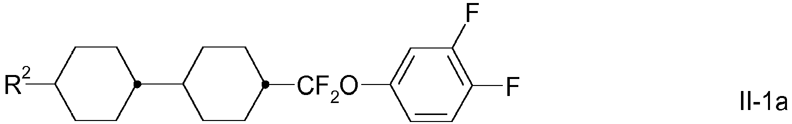 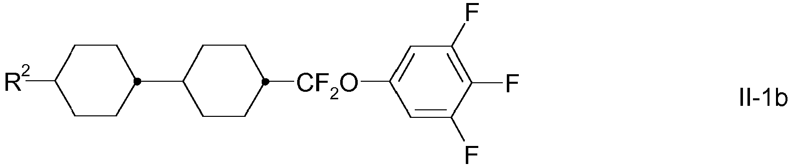 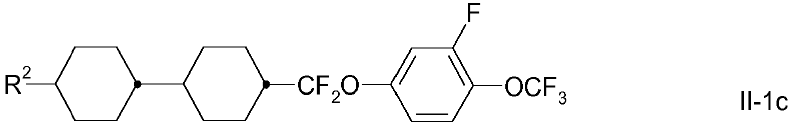 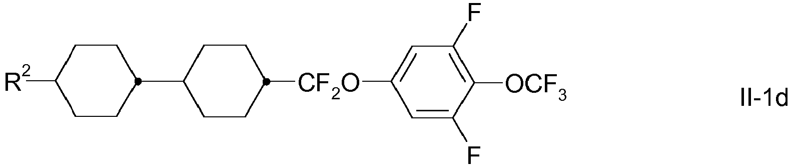 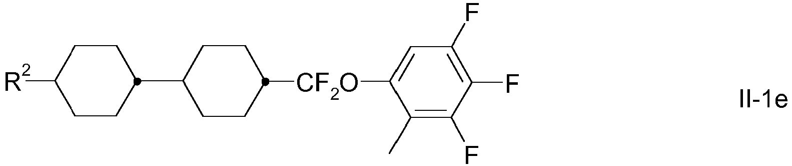 worin R² die für Formel II-1 angegebene Bedeutung hat.

Ganz besonders bevorzugt enthält das Medium mindestens eine Verbindung der Formel II-1b, bevorzugt ausgewählt aus den Verbindungen der Formeln II-1b-1 bis II-1b-10:

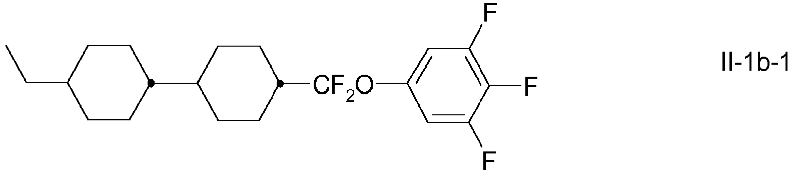

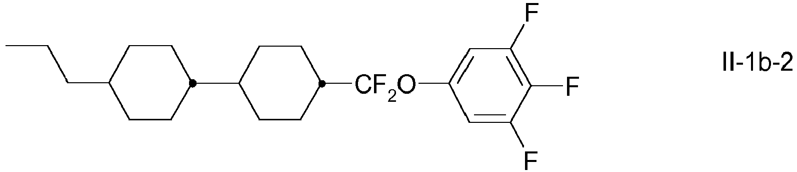

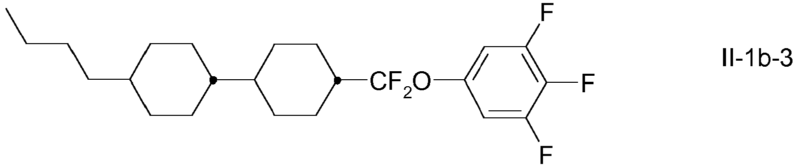

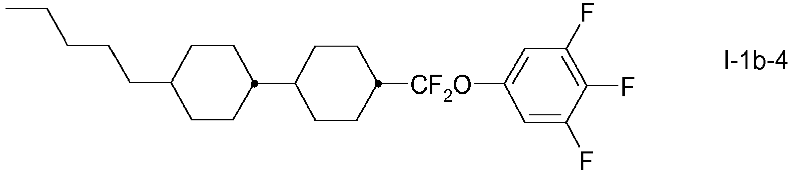

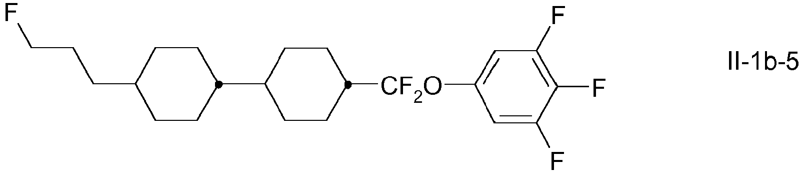

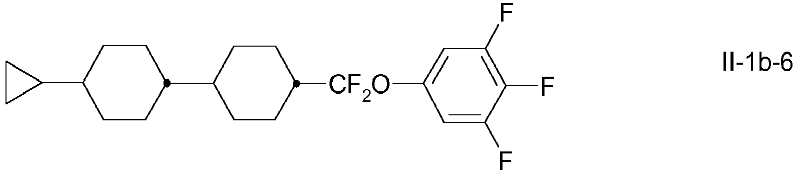

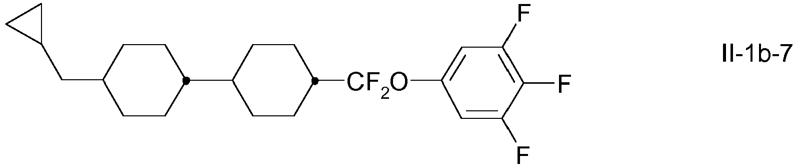

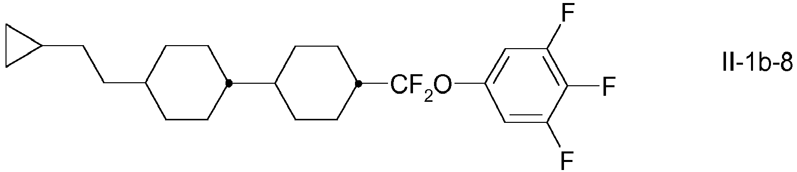

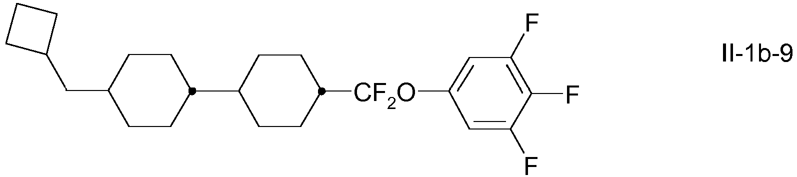

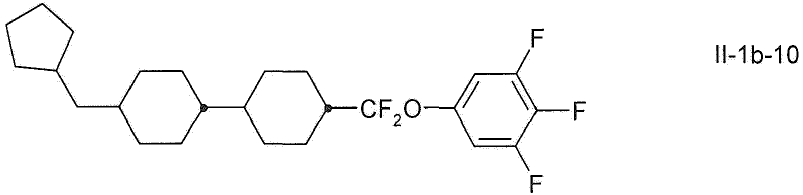

In einer weiteren bevorzugten Ausführungsform enthalten die Medien eine oder mehrere Verbindungen ausgewählt aus der Gruppe der Verbindungen der Formeln IIA und IIB, 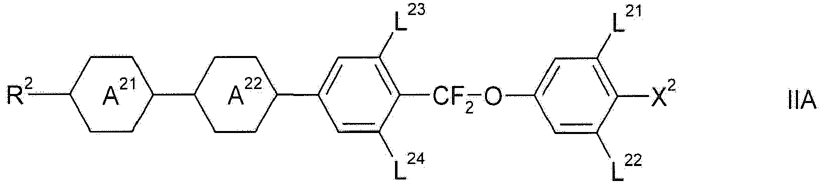 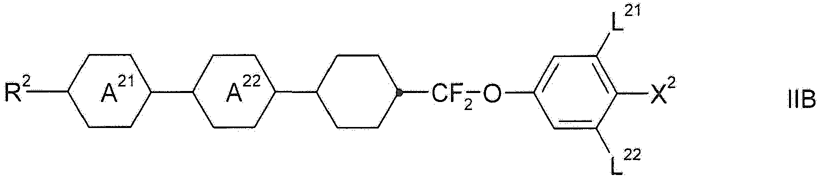 worin die auftretenden Gruppen die für Formel II angegebene Bedeutung haben und bevorzugt
- R²: n-Alkyl mit bis zu 7 C-Atomen,
- X²: F, CI, halogeniertes Alkyl oder halogeniertes Alkoxy mit bis zu 6 C-Atomen,
- L²¹, L²², L²³ und L²⁴: jeweils unabhängig voneinander H oder F,
bedeuten.

X² bedeutet besonders bevorzugt F, CI, CF₃, OCF₃, oder OCHF₂.

Die Verbindungen der Formel IIA sind bevorzugt ausgewählt aus den folgenden Unterformeln IIA-1bis IIA-7, besonders bevorzugt aus den Verbindungen der Formel IIA-1. 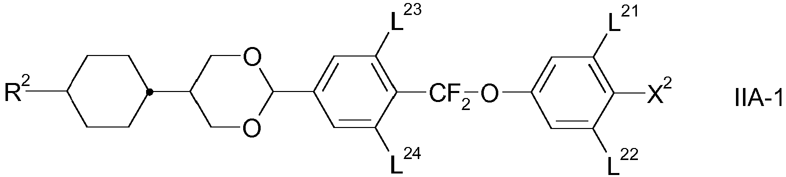 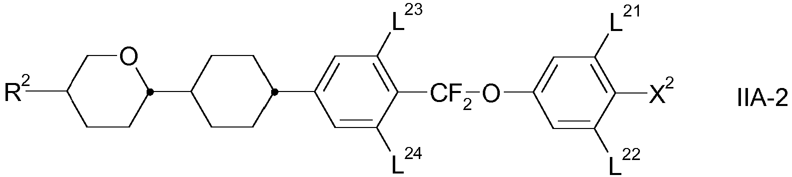 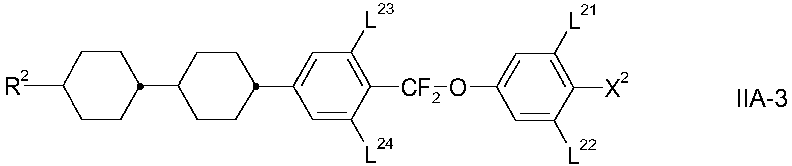 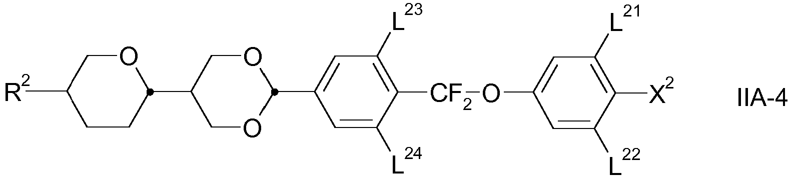 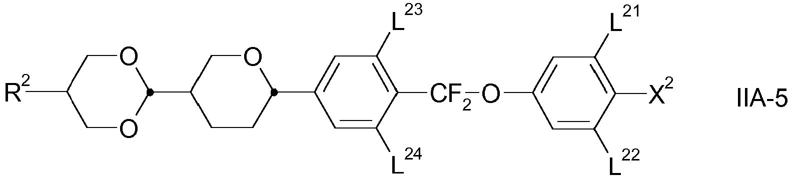 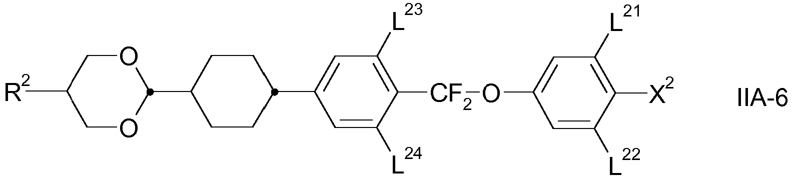 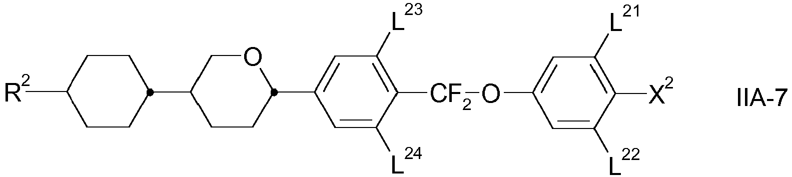 wobei die auftretenden Gruppen die oben angegebene Bedeutung haben.

Besonders bevorzugt sind die Verbindungen der Formel IIA ausgewählt aus den Verbindungen der Formeln IIA-1a bis IIA-1d 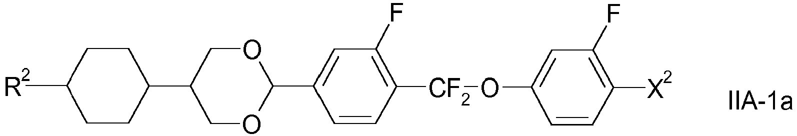 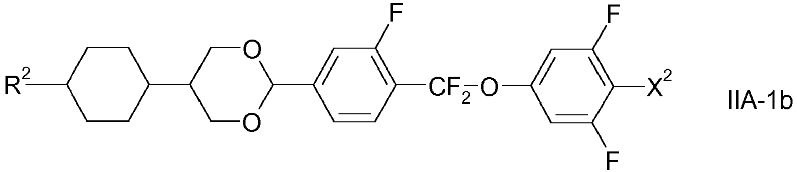 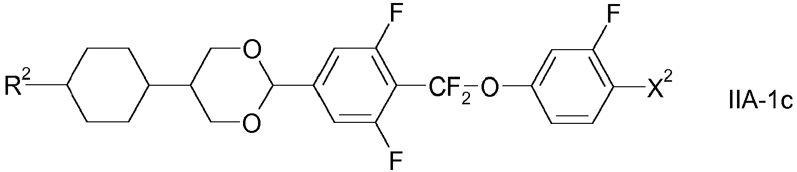 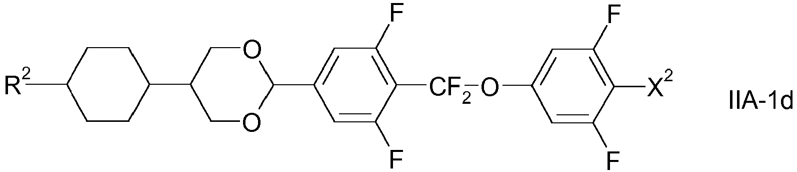 worin R² die oben angegebene Bedeutung hat und X² bevorzugt F oder OCF₃ bedeutet.

Ganz besonders bevorzugt sind die Verbindungen der Formel IIA-1d.

Besonders bevorzugte Verbindungen der Formel IIB sind ausgewählt aus den Verbindungen der Formel IIB-1 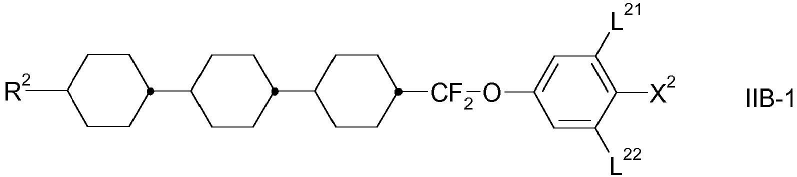 worin die Parameter die oben angegebene Bedeutung haben und bevorzugt mindestens einer der Reste L²¹ und L²² F bedeutet und X² F, Cl, CF₃ oder OCF₃ bedeutet.

In einer bevorzugten Ausführungsform enthält das Medium eine oder mehrere Verbindungen der allgemeinen Formel III 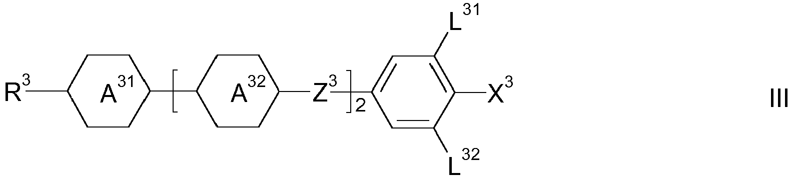 worin
R³ die oben unter Formel II für R² angegebene Bedeutung hat, 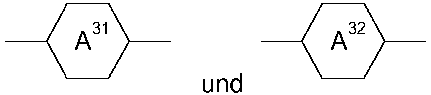 bei jedem Auftreten unabhängig voneinander 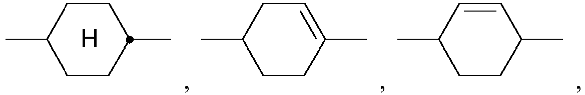 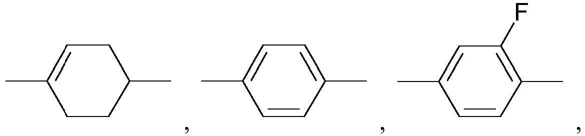 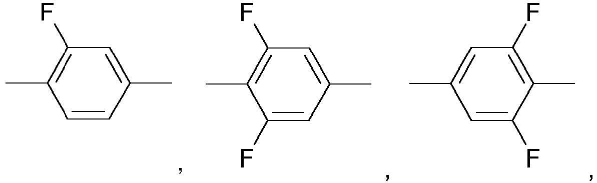 oder 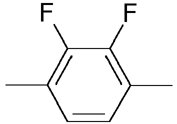 bedeuten,
vorzugsweise einer oder mehrere von 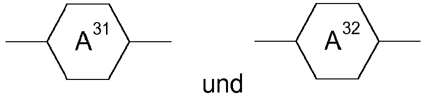 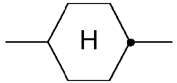 bedeutet,
L³¹ und L³², unabhängig voneinander H oder F,
- X³: F, Cl, CN, halogenierter Alkylrest, halogenierter Alkenylrest, halogenierter Alkoxyrest oder halogenierter Alkenyloxyrest mit bis zu 6 C-Atomen,
- Z³: bei jedem Auftreten unabhängig voneinander -CH₂CH₂-, -COO-, *trans-* -CH=CH-, *trans-* -CF=CF-, -CH₂O-, -C=C- oder eine Einfachbindung bedeuten, vorzugsweise einer oder beide eine Einfachbindung bedeuten.

Die Verbindungen der Formel III sind bevorzugt ausgewählt aus der Gruppe der Verbindungen der Formeln III-1 bis III-9: 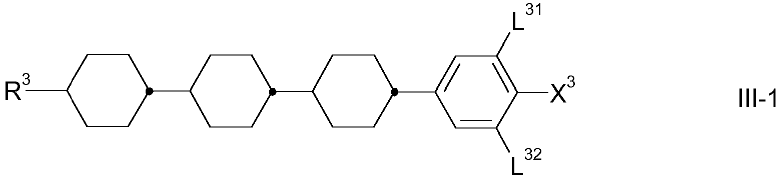 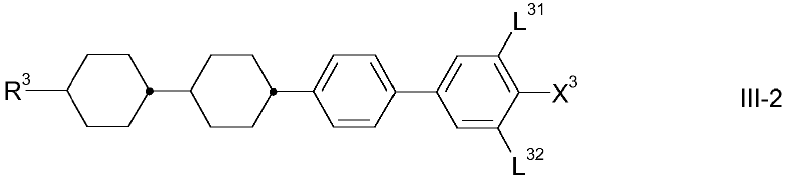 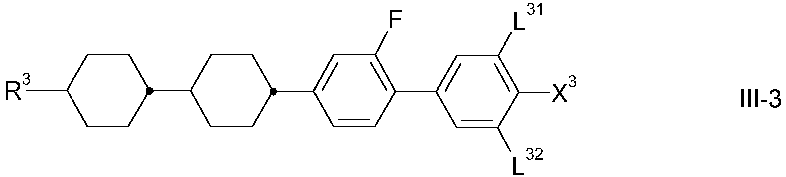 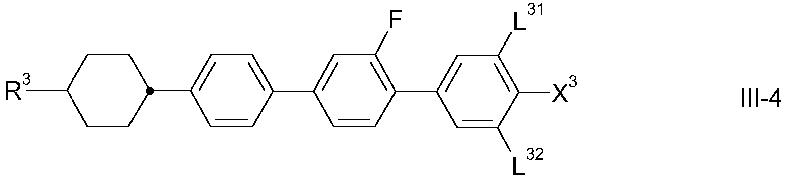 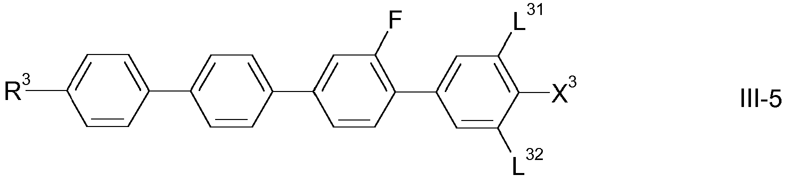 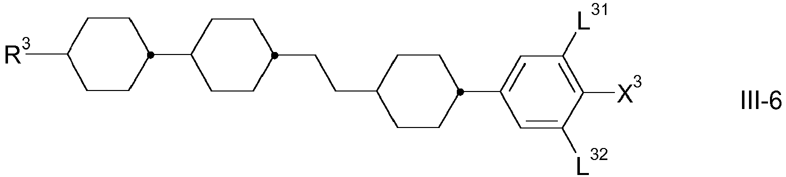 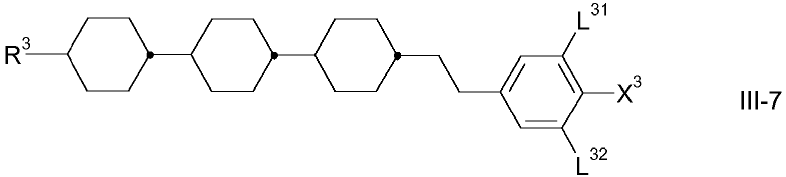 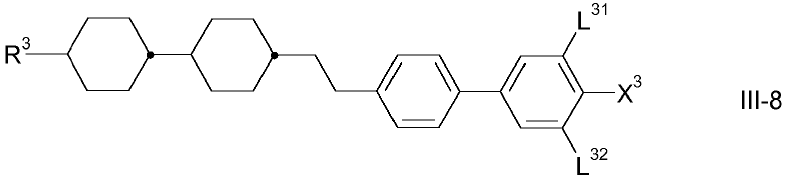 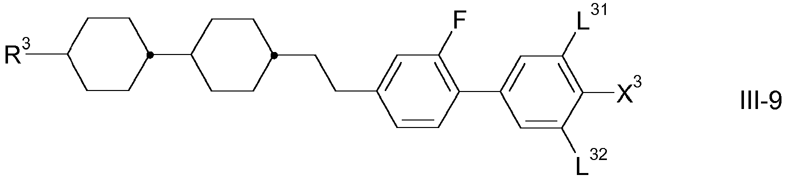 worin
- L³¹ und L³²: unabhängig voneinander H oder F bedeuten,
- X³: F, Cl, halogeniertes Alkyl oder halogeniertes Alkoxy mit bis zu 6 C-Atomen und bevorzugt F oder OCF₃ bedeutet.

Besonders bevorzugt enthält das Medium eine oder mehrere Verbindungen ausgewählt aus der Gruppe der Verbindungen der Formeln III-1 und III-3.

Ganz besonders bevorzugt enthält das Medium eine oder mehrere Verbindungen der folgenden Unterformeln : 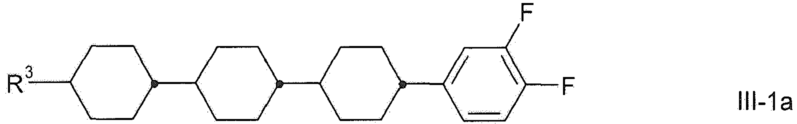 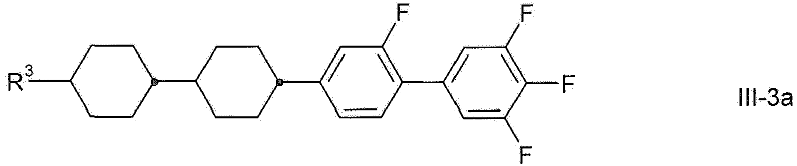 worin R³ bevorzugt n-Alkyl mit 1 bis 7 C-Atomen bedeutet.

Bevorzugt enthält das Medium eine oder mehrere Verbindungen der Formel IV 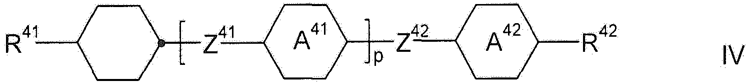 worin
- R⁴¹ und R⁴¹: unabhängig voneinander die oben unter Formel II für R² angegebene Bedeutung besitzen, und vorzugsweise
- R⁴¹: Alkyl mit bis zu 7 C-Atomen und
- R⁴²: Alkyl oder Alkoxy mit jeweils bis zu 7 C-Atomen,
oder
- R⁴¹: Alkenyl mit bis zu 7 C-Atomen und
- R⁴²: Alkyl oder Alkenyl mit jeweils bis zu 7 C-Atomen
bedeutet, wobei in den Resten R⁴¹ und R⁴² ein oder mehrere H-Atome durch F ersetzt sein können, 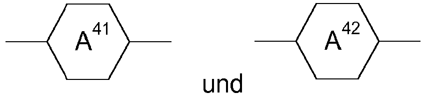 bei jedem Auftreten unabhängig voneinander 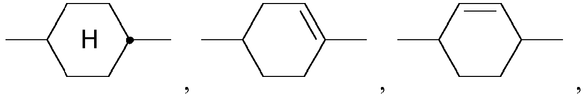 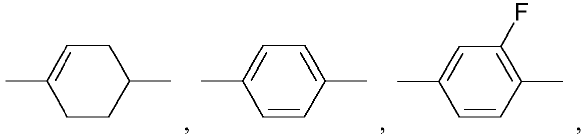 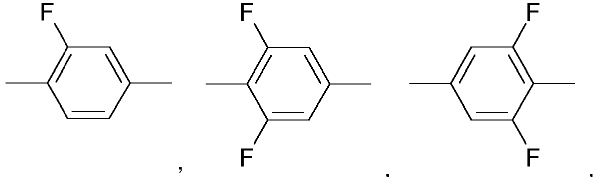 oder 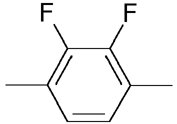 bedeuten,
vorzugsweise einer oder mehrere von 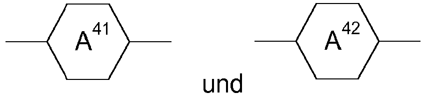 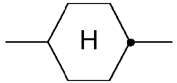 bedeutet bzw. bedeuten,
- Z⁴¹ und Z⁴²: bei jedem Auftreten unabhängig voneinander -CH₂CH₂-, -CF₂CF₂-, -CF₂CH₂-, -COO-, *trans-* -CH=CH-, trans--CF=CF-, -CH₂O-, -CF₂O-, -C=C- oder eine Einfachbindung bedeuten, vorzugsweise eines oder mehrere von ihnen eine Einfachbindung bedeutet/bedeuten und
- p: 0, 1 oder 2, vorzugsweise 0 oder 1 bedeutet.

Die Verbindungen der Formel IV sind bevorzugt ausgewählt aus der Gruppe der Verbindungen IV-1 bis IV-13 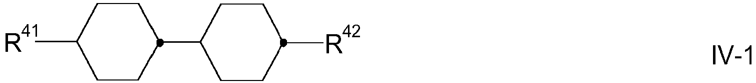 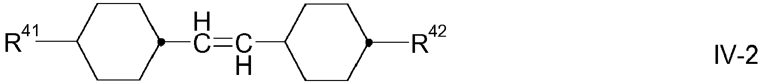 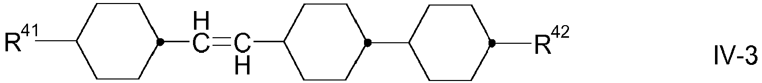 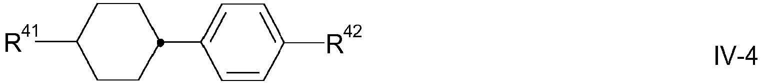 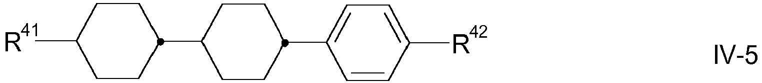 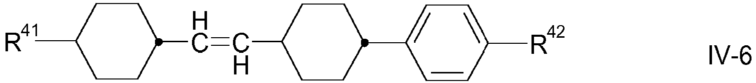 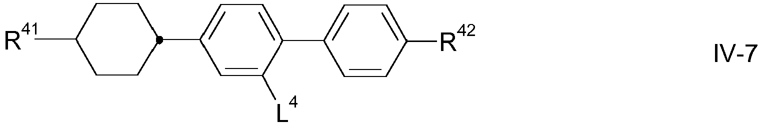 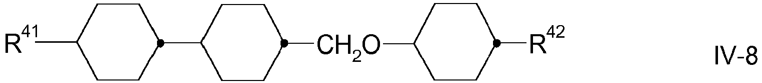 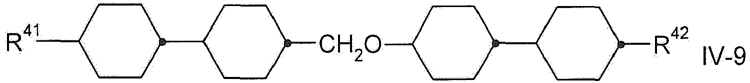 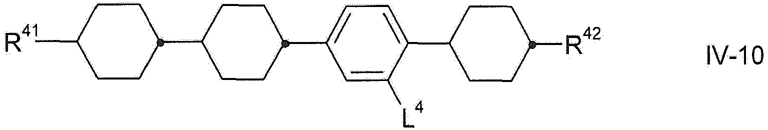 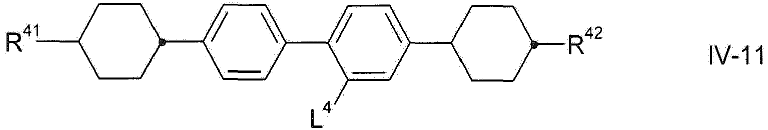 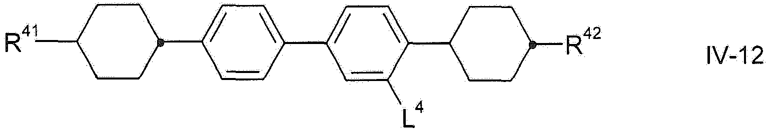 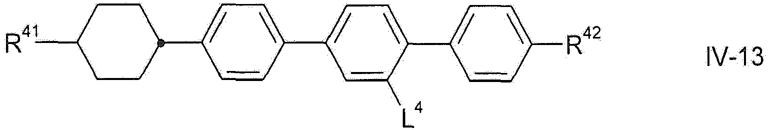 worin R⁴¹ und R⁴² die oben angegebenen Bedeutungen haben und L⁴ H oder F bedeutet und bevorzugt
- R⁴¹ und R⁴²: unabhängig voneinander n-Alkyl mit 1 bis 7 C-Atomen, und
- L⁴: F
bedeuten.

Besonders bevorzugt enthält das Medium eine oder mehrere Verbindungen ausgewählt aus der Gruppe der Verbindungen der Formeln IV-5, IV-8 und IV-11.

In einer weiteren bevorzugten Ausführungsform enthält das Medium eine oder mehrere Verbindungen der Formel V 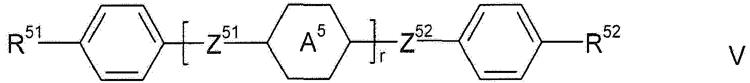 worin
- R⁵¹ und R⁵²: unabhängig voneinander die oben unter Formel II für R² angegebene Bedeutung besitzen, vorzugsweise R⁶¹ Alkyl und R⁶² Alkyl oder Alkenyl bedeutet, 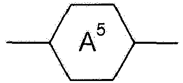 bei jedem Auftreten unabhängig voneinander 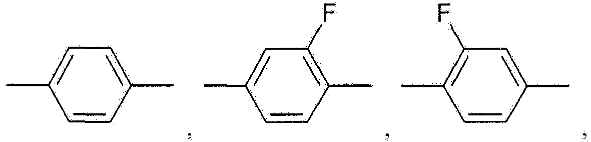 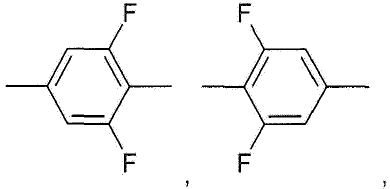 oder 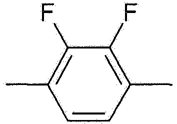 bedeuten,
vorzugsweise einer oder mehrere von 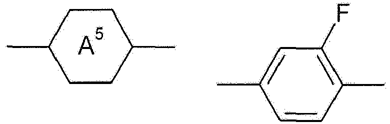 bedeuten,
- Z⁵¹ und Z⁵²: unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, oder eine Einfachbindung bedeuten, vorzugsweise eines oder mehrere von ihnen eine Einfachbindung bedeutet/bedeuten, und
- r: 0, 1 oder 2, vorzugsweise 1 oder 2, besonders bevorzugt 1, bedeutet.

In einer weiteren bevorzugten Ausführungsform enthält das Medium eine oder mehrere Verbindungen ausgewählt aus der Gruppe der Verbindungen der Formeln V-1 und V-2 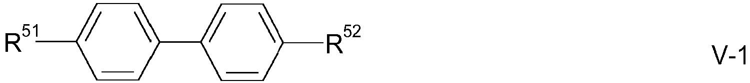 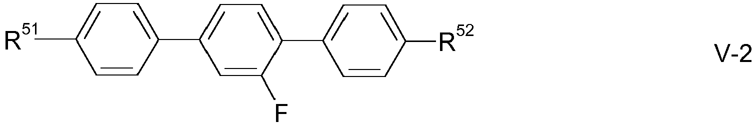 worin R⁵¹ und R⁵² die jeweiligen oben unter Formel V angegebenen Bedeutungen besitzen und vorzugsweise Alkyl bedeuten.

Die Verbindungen der Formeln CC und I bis V werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel II und IIA sind beispielsweise aus der DE 10 2008 062858 A1 bekannt. Die Verbindungen der Formel IIB sind in DE 102223061 A1 offengelegt.

Weiterer Gegenstand der Erfindung ist ein flüssigkristallines Medium gemäß Anspruch 12. Die erfindungsgemäßen Flüssigkristallmischungen ermöglichen eine bedeutende Erweiterung des zur Verfügung stehenden Parameterraumes. Die erzielbaren Kombinationen aus Klärpunkt, Phasenbreite, Viskosität bei tiefer Temperatur, thermischer und UV-Stabilität und dielektrischer Anisotropie übertreffen bei weitem bisherige Materialien aus dem Stand der Technik.

Weiterer Gegenstand der Erfindung sind auch elektrooptische Bauteile, insbesondere Lichtventile, basierend auf dem VA-, IPS-, FFS-, TN oder STN -Effekt, mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand, die die erfindungsgemäßen Medien enthalten sowie die Verwendung dieser Medien für für elektrooptische Zwecke.

Weiterer Gegenstand der Erfindung ist die Verwendung der flüssigkristallinen Medien in Flüssigkristallichtventilen in Beleuchtungseinrichtungen für Fahrzeuge

Eine erfindungsgemäße Beleuchtungseinrichtung für Fahrzeuge weist zumindest eine Lichtquelle auf. Von dieser Lichtquelle wird Licht emittiert, so daß weiter wenigstens eine Blendenvorrichtung für die Beeinflussung des von der Lichtquelle emittierten Lichts vorgesehen ist. Die Blendenvorrichtung ist als LCD-Blende ausgebildet und weist dementsprechend mindestens ein Flüssigkristallichtventil auf, welches von hinten durchleuchtbar ist.

Bei einer erfindungsgemäßen Beleuchtungseinrichtung kann die Lichtquelle in unterschiedlichster Weise ausgestaltet sein. Sie kann ein oder mehrere Leuchtmittel aufweisen. Als Leuchtmittel kommen z. B. konventionelle Leuchtmittel in Form von Glühlampen oder Gasentladungslampen in Frage. Auch moderne Leuchtmittel, z. B. LEDs, sind im Rahmen der vorliegenden Erfindung als Leuchtmittel für die Lichtquelle denkbar, sowie insbesondere auch die für Flüssigkristallanzeigen verwendeten Kaltkathodenlampen (CCFL). Die einzelnen Leuchtmittel können unterschiedlich, z. B. in matrixartiger Weise, angeordnet sein. Selbstverständlich können in der Lichtquelle bzw. in der Beleuchtungseinrichtung ein oder mehrere Anordnungen von weiteren optischen Bauteilen Vorteile mit sich bringen. Dabei kann es sich z. B. um ein oder mehrerer Reflektoren oder ein oder mehrere Linsen handeln. Vorteilhaft ist es ebenfalls, wenn bei einer erfindungsgemäßen Beleuchtungseinrichtung das Flüssigkristallichtventil einen ersten Polarisator, durch welchen das von der Lichtquelle zur Verfügung gestellte Licht eindringt, aufweist. Weiter ist ein zweiter Polarisator vorgesehen, durch welchen das Licht das Flüssigkristallichtventil verläßt. Zwischen dem ersten Polarisator und dem zweiten Polarisator ist eine Schicht enthaltend das erfindungsgemäße Flüssigkristallmedium angeordnet. Diese Flüssigkristallschicht dient dazu, die Polarisationsebene des durch diese Flüssigkristallschicht hindurchdringenden Lichts in Abhängigkeit einer anliegenden Spannung zu drehen. Je nach Art und Weise der Ausbildung der Flüssigkristallschicht kann diese Flüssigkristallschicht im elektrischen Feld ein Drehen der Polarisation des Lichts oder ein Unterlassen dieser Drehfunktion des durchtretenden Lichts bewirken. Bei einer solchen Ausführungsform ist das Flüssigkristallichtventil und insbesondere der erste Polarisator temperaturbeständig bis ca. 200 °C ausgebildet. Dies ist insbesondere beim ersten Polarisator wichtig, da dieser bis zu ca. 50% des von der Lichtquelle emittierten Lichts und der zugehörigen Energie aufnimmt. Die verschiedenen Ausgestaltungen der Polarisatoren im Zusammenhang mit der Orientierung der Flüssigkristallmoleküle in der Flüssigkristallschicht entsprechen im wesentlichen den in Flüssigkristallanzeigen verwendeten und sind dem Fachmann bekannt. Grundsätzlich sind alle bekannten Konfigurationen geeignet und bevorzugt sind Flüssigkristallichtventile vom TN-, STN-, VA-, IPS- oder FFS-Typ, besonders bevorzugt vom TN- oder STN-Typ.

Es versteht sich, daß durch geeignete Wahl der Komponenten der erfindungsgemäßen Mischungen auch höhere Klärpunkte (z.B. oberhalb von 150 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen elektrooptischen Bauteile arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke des Bauteils erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel CC eine deutlich kleinere Abnahme des HR mit steigender Temperatur aufweisen als analoge Mischungen enthaltend Cyanophenylcyclohexane der Formel 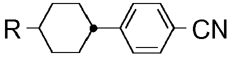 oder Ester der Formel 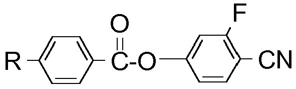 anstelle der Verbindungen der Formel CC.

Auch die UV-Stabilität der erfindungsgemäßen Mischungen ist erheblich besser, d.h. sie zeigen eine deutlich kleinere Abnahme des HR unter UV-Belastung.

Die erfindungsgemäßen Flüssigkristallmischungen ermöglichen es unter Beibehaltung der nematischen Phase bis -20 °C und bevorzugt bis -30 °C, besonders bevorzugt bis -40 °C, einen Klärpunkt von 120 °C oder mehr, gleichzeitig dielektrische Anisotropiewerte Δε ≥ 4, vorzugsweise ≥ 8 und einen hohen Wert für den spezifischen Widerstand zu erreichen, wodurch hervorragende erfindungsgemäße Lichtventile erzielt werden können. Insbesondere sind die Mischungen durch kleine Betriebsspannungen gekennzeichnet. Die TN-Schwellen liegen unterhalb 2,0 V, vorzugsweise unterhalb 1,5 V, besonders bevorzugt < 1,3 V.

Vorzugsweise ist der Klärpunkt der erfindungsgemäßen Flüssigkristallmischungen 125°C oder mehr, bevorzugt 130°C oder mehr, besonders bevorzugt 135°C oder mehr, ganz besonders bevorzugt 140°C oder mehr und insbesondere 145°C oder mehr.

Die erfindungsgemäßen Flüssigkristallmischungen weisen eine optische Anisotropie (Δn) im Bereich von 0,050 bis 0,110 auf, bevorzugt von 0,060 bis 0,100, besonders bevorzugt von 0,065 bis 0,090 und ganz besonders bevorzugt von 0,070 bis 0,085.

Die Rotationsviskosität γ₁ der erfindungsgemäßen Mischungen bei 20 °C ist vorzugsweise < 350 mPa·s, besonders bevorzugt < 300 mPa·s. Der nematische Phasenbereich ist vorzugsweise mindestens 140 K, insbesondere mindestens 180 K. Vorzugsweise erstreckt sich dieser Bereich mindestens von -40° bis +140°.

Weitere Ausführungsformen der vorliegenden Erfindung, die sowohl für sich genommen als auch in Kombination miteinander bevorzugt sind, sind im folgenden angegeben (die Bedeutung der nachfolgend verwendeten Akronyme kann den unten aufgeführten Tabellen A bis D entnommen werden):
- Die Gesamtkonzentration der Verbindungen der Formel CC im Medium beträgt insbesondere 60% oder mehr.
- Die Gesamtkonzentration der Verbindungen der Formeln CC und I im Medium beträgt 35 % oder mehr, bevorzugt 45 % oder mehr, besonders bevorzugt 50 % oder mehr, ganz besonders bevorzugt 55 % oder mehr.
- Das Medium enthält eine oder mehrere Verbindungen der Formel CC in einer Gesamtkonzentration im Bereich von 55 % bis 100 %, bevorzugt von 55 % bis 95 %, besonders bevorzugt von 55 % bis 75 %.
- Die Gesamtkonzentration an Verbindungen der Formel II im Medium beträgt 40 % oder weniger, bevorzugt 37 % oder weniger, besonders bevorzugt 33 % oder weniger und ganz besonders bevorzugt 30 % oder weniger, insbesondere 25% oder weniger.
- Die Gesamtkonzentration an Verbindungen der Formel II im Medium beträgt, falls vorhanden, 2 % bis 35 %, bevorzugt 5 % bis 30 % und besonders bevorzugt 10 % bis 25 %.
- Die Gesamtkonzentration der Verbindungen der Formeln CC und II im Medium beträgt 60 % bis 90 %, besonders bevorzugt 62 bis 85 % und ganz besonders bevorzugt 65 % bis 80 %.
- Die Gesamtkonzentration der Verbindungen der Formeln IV-1, IV-2, IV-3, IV-4, IV-5, IV-6 und IV-7 im Medium beträgt 3 bis 25, bevorzugt 5 bis 18, besonders bevorzugt 8 % bis 16 %. Vorzugsweise enthält das Medium mindestens eine Verbindung der Formel IV-5.
- Das Medium enthält eine, zwei, drei oder mehr Verbindungen der Formel IV-1 in einer Gesamtkonzentration von 0 bis 25 %, bevorzugt 0,5 bis 15 %, besonders bevorzugt 1 bis 10 % und ganz besonders bevorzugt 2 bis 5 %.
- Das Medium enthält zwei, drei oder mehr Verbindungen der Formel IV-1 in einer Gesamtkonzentration von 25 % oder weniger.
- Die Gesamtkonzentration an Verbindungen der Formeln IV-7, IV-8, IV-9, IV-10, IV-11, IV-12 und IV-13 beträgt 2 % bis 20 %, bevorzugt 4 % bis 16 % und besonders bevorzugt 6 % bis 13 %. Bevorzugt enthält das Medium mindestens eine Verbindung der Formel IV-8 oder IV-11, besonders bevorzugt IV-11.
- Das Medium enthält eine oder mehrere Verbindungen der Formel IIA und/oder IIB und eine oder mehrere Verbindungen der Formel IV-11.
- Das Medium enthält eine oder mehrere Verbindungen ausgewählt aus der Gruppe der Verbindungen IIA, IIB und III, bevorzugt ausgewählt aus CCGU-n-F, CCPU-n-F, CCCG-n-F, CCCQU-n-F, CCCQU-n-OT und CDUQU-n-F in einer Gesamtkonzentration von 3 % bis 15 %, bevorzugt 5 % bis 13 %, besonders bevorzugt 7 % bis 10 %.
- Das Medium enthält eine, zwei, drei oder mehr Verbindungen CCU-n-O1D bevorzugt in einer Gesamtkonzentration von 20% bis 60%, besonders bevorzugt von 25% bis 50% und ganz besonders bevorzugt von 30% bis 40%
   und/oder
   eine, zwei, drei oder mehr Verbindungen CCU-n-OD bevorzugt in einer Gesamtkonzentration von 30% bis 65%, besonders bevorzugt von 40% bis 60% und ganz besonders bevorzugt von 45% bis 55%.
- Das Medium enthält eine, zwei, drei, vier oder mehr Verbindungen CCG-n-F, bevorzugt in einer Gesamtkonzentration von 20% bis 70%, besonders bevorzugt von 40% bis 65% und ganz besonders bevorzugt von 45% bis 55%.
- Das Medium enthält eine, zwei, drei oder mehr Verbindungen CCU-n-F, bevorzugt in einer Gesamtkonzentration von 5% bis 60%, besonders bevorzugt von 10% bis 45% und ganz besonders bevorzugt von 20% bis 30%.
- Das Medium enthält drei oder mehr Verbindungen CCG-n-F und drei oder mehr Verbindungen der Formel CCU-n-F.
- Das Medium enthält die Verbindung CCG-1-F.
- Das Medium enthält eine, zwei, drei oder mehr Verbindungen CCP-n-Cl, bevorzugt in einer Gesamtkonzentration im Bereich von 30 bis 70 %, besonders bevorzugt von 40 bis 60 % und ganz besonders bevorzugt von 45 bis 55 %.
- Das Medium enthält zwei, drei oder mehr Verbindungen CCEG-n-F und drei oder mehr Verbindungen der Formel CCP-n-Cl.
- Das Medium enthält eine, zwei, drei, vier oder mehr Verbindungen CCEG-n-F.
- Das Medium enthält drei oder mehr Verbindungen CCEG-n-F und drei oder mehr Verbindungen der Formel CCU-n-F.
- Das Medium enthält die Verbindung CCEG-1-F.
- Das Medium enthält zwei, drei oder mehr Verbindungen CCEG-n-F und drei oder mehr Verbindungen der Formel CCP-n-Cl.
- Das Medium enthält zwei, drei oder mehr Verbindungen CCEP-n-F, bevorzugt in einer Gesamtkonzentration von 20 % bis 60 %, besonders bevorzugt von 30 % bis 50 % und ganz besonders bevorzugt von 35 % bis 45 %.
- Das Medium enthält CCEP-1-F, bevorzugt in einer Konzentration von 15 % bis 35 %, besonders bevorzugt von 20 % bis 30 %, ganz besonders bevorzugt von 23 % bis 27 %.
- Das Medium enthält zwei, drei oder mehr Verbindungen CCEU-n-F und zwei drei oder mehr Verbindungen ausgewählt aus CCEP-n-F und CCEG-n-F.
- Der Anteil der Verbindungen mit ungesättigten Seitenketten (R bedeutet Alkenyl oder Alkinyl) im Medium ist 0 bis 10 %, bevorzugt 0,5 bis 5 %, besonders bevorzugt 1 bis 2 %.

Die Konzentration der im Medium enthaltenen Verbindungen insgesamt beträgt 100 %. Die Konzentration der genannten Verbindungen im Medium beträgt 100 % oder weniger.

Es wurde gefunden, daß die erfindungsgemäßen Flüssigkristallmischungen unter Verwendung einer oder mehrerer Verbindungen ausgewählt aus den Verbindungen der Formeln CC, I, II, IIA, IIB und III bis V gegenüber dem Stand der Technik zu niedrigen Werten für die Doppelbrechung führt, wobei gleichzeitig breite nematische Phasen, sehr hohe Klärpunkte und tiefe Übergangstemperaturen smektischnematisch beobachtet werden, wodurch die Lagerstabilität verbessert wird. Bevorzugt sind insbesondere Mischungen, die neben einer oder mehreren Verbindungen der Formeln CC, I und II eine oder mehrere Verbindungen der Formel IIA und/oder IIB und/oder III und/oder IV enthalten. Alle genannten Verbindungen sind farblos, stabil und untereinander und mit anderen Flüssigkristallmaterialien gut mischbar.

Das optimale Mengenverhältnis der Verbindungen der Formeln CC, I, II, IIA, IIB und III bis V hängt weitgehend von den gewünschten Eigenschaften, von der Wahl der Komponenten der Formeln CC, I, II, IIA, IIB und III bis V und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln CC, I, II, IIA, IIB und III bis V in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel um so größer je höher die Gesamtkonzentration an Verbindungen der Formeln CC, I, IIA, IIB, II und III sind. Weiterhin ist der Klärpunkt umso höher, je größer der Anteil an Verbindungen der Formeln IIA, IIB, III und IV ist.

Der Aufbau der erfindungsgemäßen Lichtventile aus Polarisatoren, Elektrodengrundplatten und Elektroden mit Oberflächenbehandlung entspricht der für derartige Bauteile üblichen Bauweise. Dabei ist der Begriff der üblichen Bauweise hier weit gefaßt und umfaßt auch alle Abwandlungen und Modifikationen der Bauteile, insbesondere auch Matrix-Anzeigeelemente auf Basis poly-Si TFT oder MIM.

Ein wesentlicher Unterschied der erfindungsgemäßen Flüssigkristallichtventile zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie und nₒ den Brechungsindex. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · An-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Für die vorliegende Erfindung und in den folgenden Beispielen sind die Strukturen der Flüssigkristallverbindungen durch Akronyme angegeben, wobei die Transformation in chemische Formeln gemäß folgender Tabellen A bis C erfolgt. Alle Reste CₙH₂ₙ₊₁, CₘH₂ₘ₊₁ und CₗH₂ₗ₊₁ bzw. CₙH₂ₙ, CₘH₂ₘ und CₗH₂ₗ sind geradkettige Alkylreste bzw. Alkylenreste jeweils mit n, m bzw. I C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 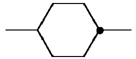 | | |
| **D** | 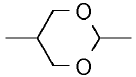 | **DI** | 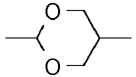 |
| **A** | 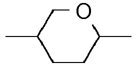 | **AI** | 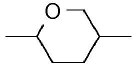 |
| **P** | 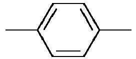 | | |
| **G** | 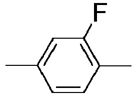 | **GI** | 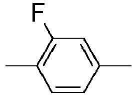 |
| **U** | 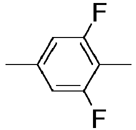 | **UI** | 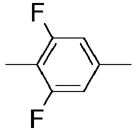 |
| **Y** | 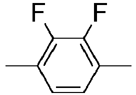 | | |
| **P(F, CI)Y** | 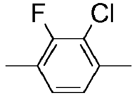 | **P(CI,F)Y** | 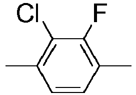 |
| **np** | 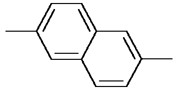 | | |
| **n3f** | 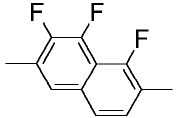 | **nN3fl** | 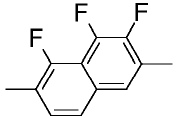 |
| **th** | 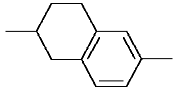 | **thl** | 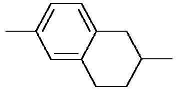 |
| **tH2f** | 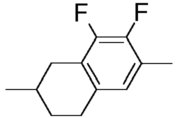 | **tH2fl** | 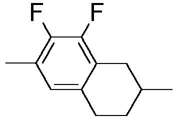 |
| **o2f** | 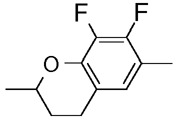 | **o2fl** | 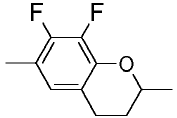 |
| **dh** | 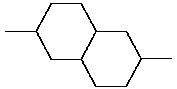 | | |
| **K** | 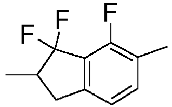 | **KI** | 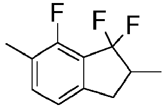 |
| **L** | 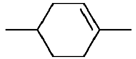 | **LI** | 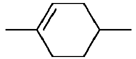 |
| **F** | 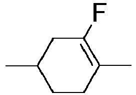 | **FI** | 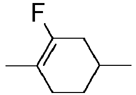 |

**Tabelle B: Brückenglieder**

| | | | |
|---|---|---|---|
| **E** | -CH₂-CH₂- | | |
| **V** | -CH=CH- | | |
| **T** | -C=C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Tabelle C: Endgruppen**

| **Links einzelstehend oder in Kombination** | | **Rechts einzelstehend oder in Kombination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | -**F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C=C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Links nur in Kombination** | | **Rechts nur in Kombination** | |
|---|---|---|---|
| **-...n...-** | -CₙH₂ₙ- | -...n... | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen und die drei Punkte "..." Platzhalter für andere Abkürzungen aus dieser Tabelle sind.

Vorzugsweise enthalten die erfindungsgemäßen Mischungen neben den Verbindungen der Formel CC eine oder mehrere Verbindungen der nachfolgend genannten Verbindungen.

### Folgende Abkürzungen werden verwendet:

(n, m und z unabhängig voneinander jeweils eine ganze Zahl, bevorzugt 1 bis 6)

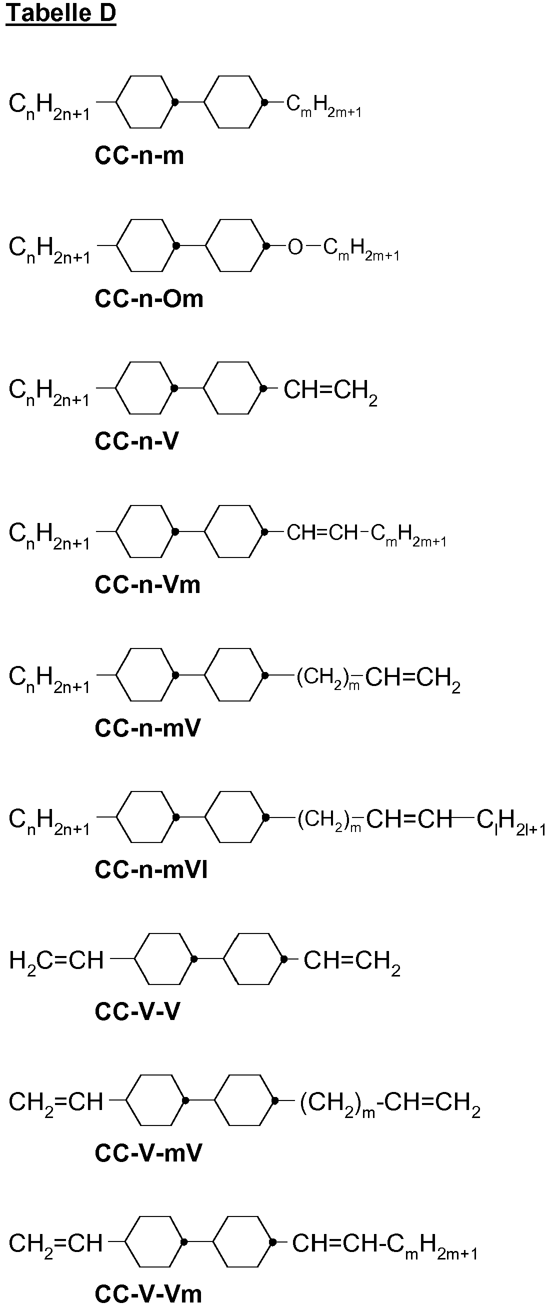

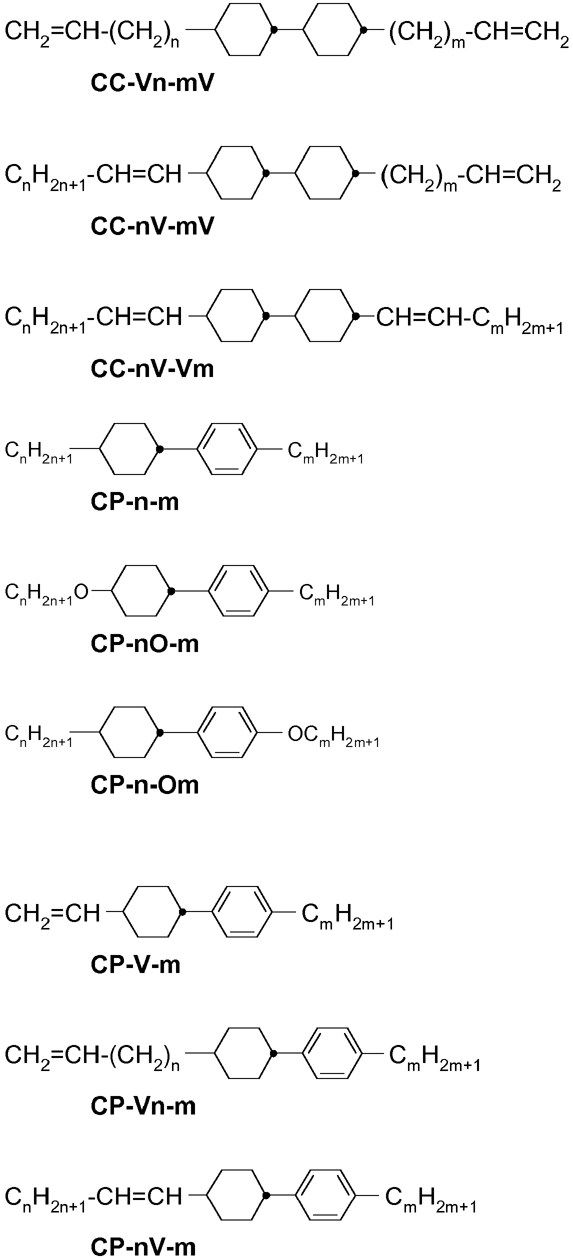

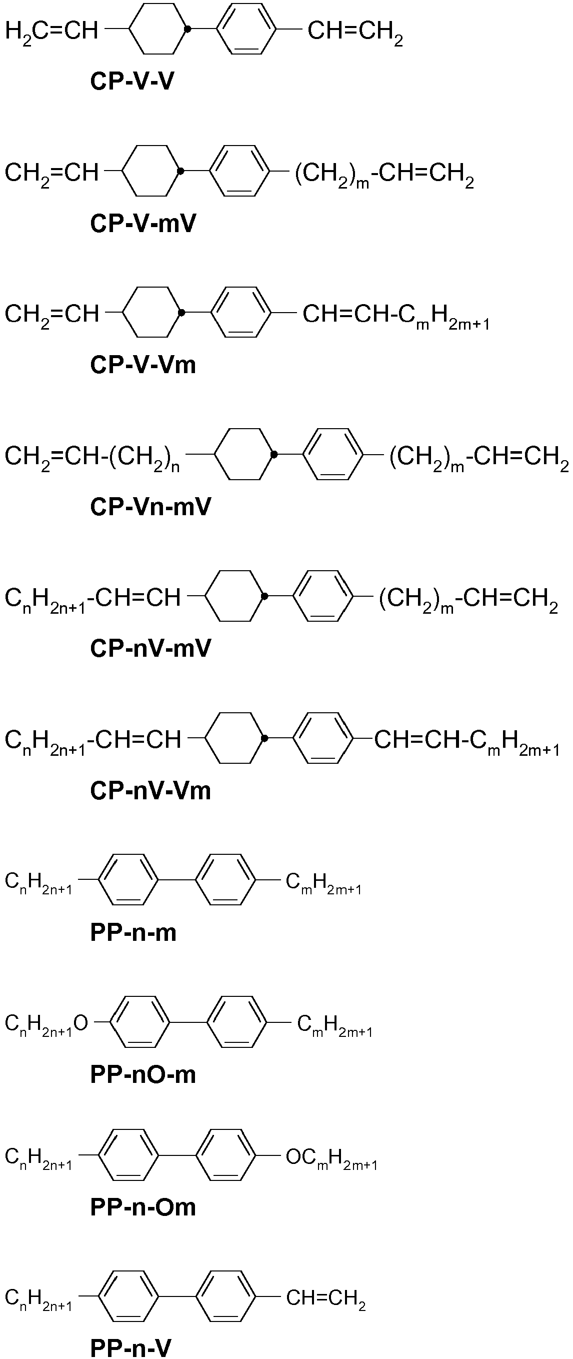

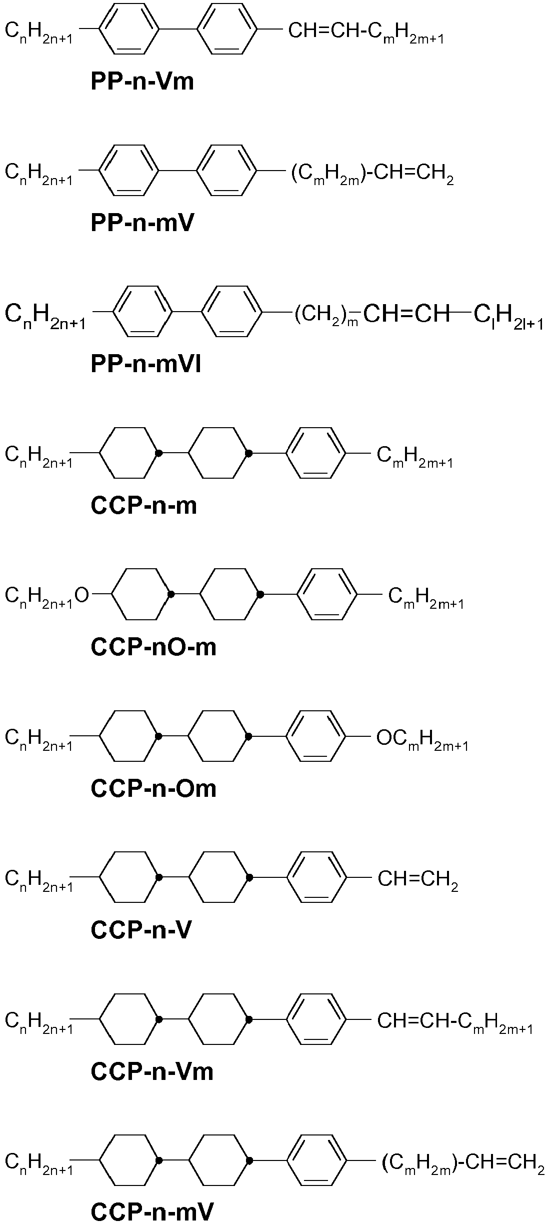

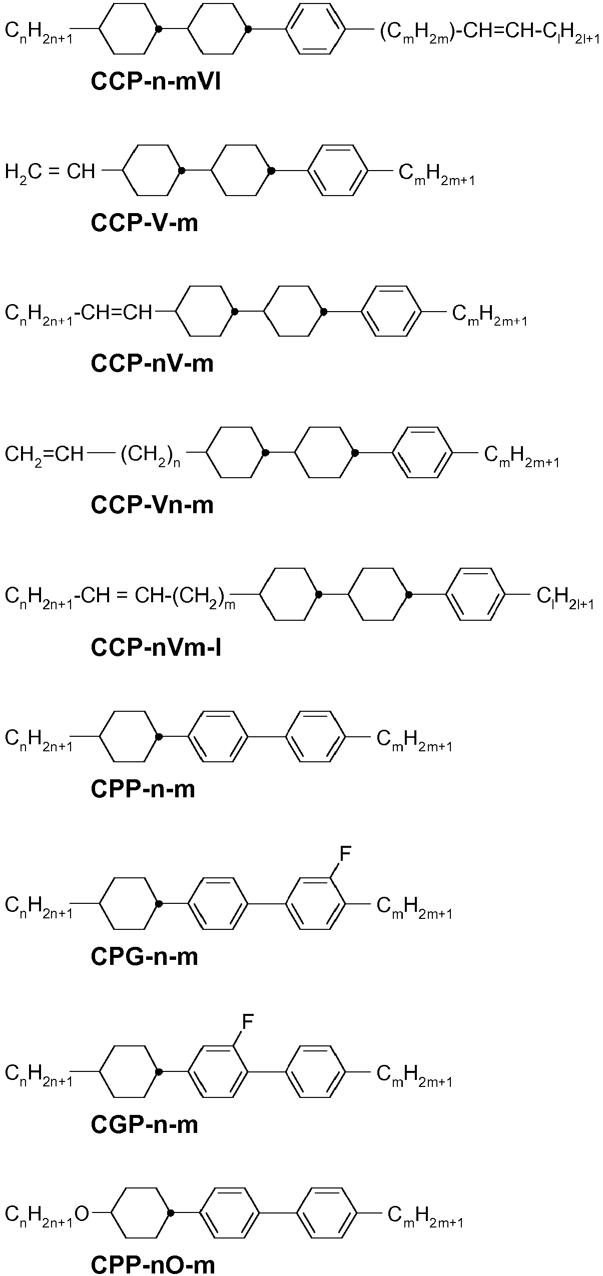

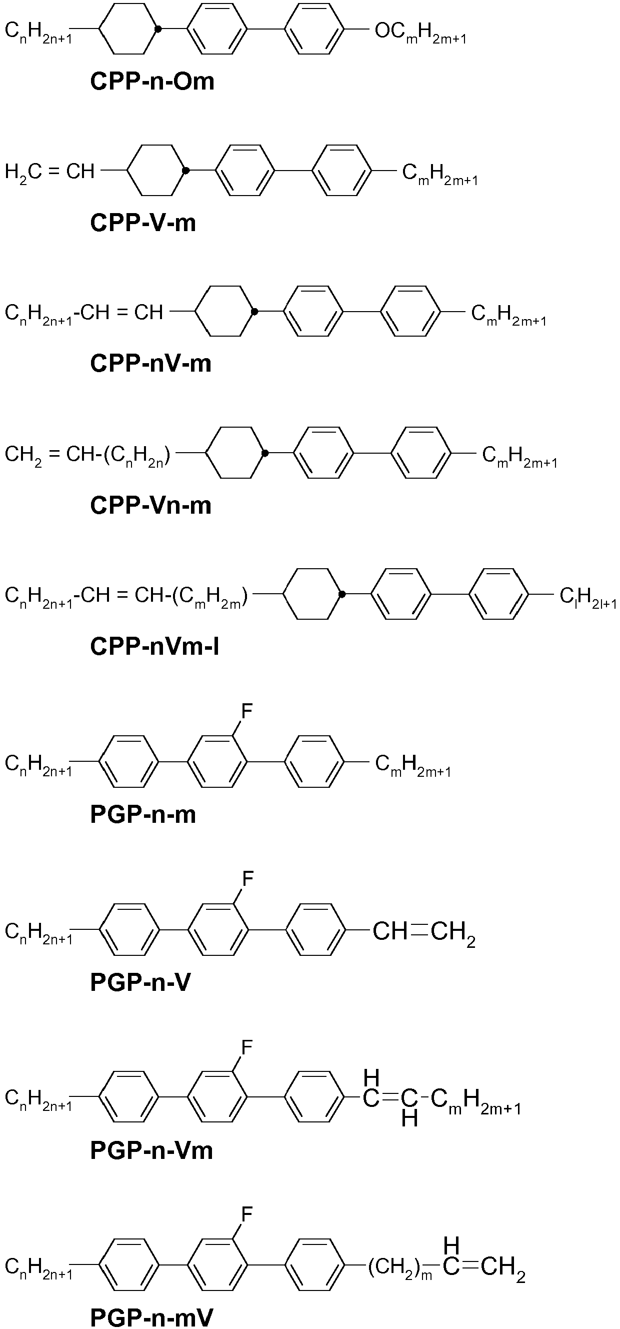

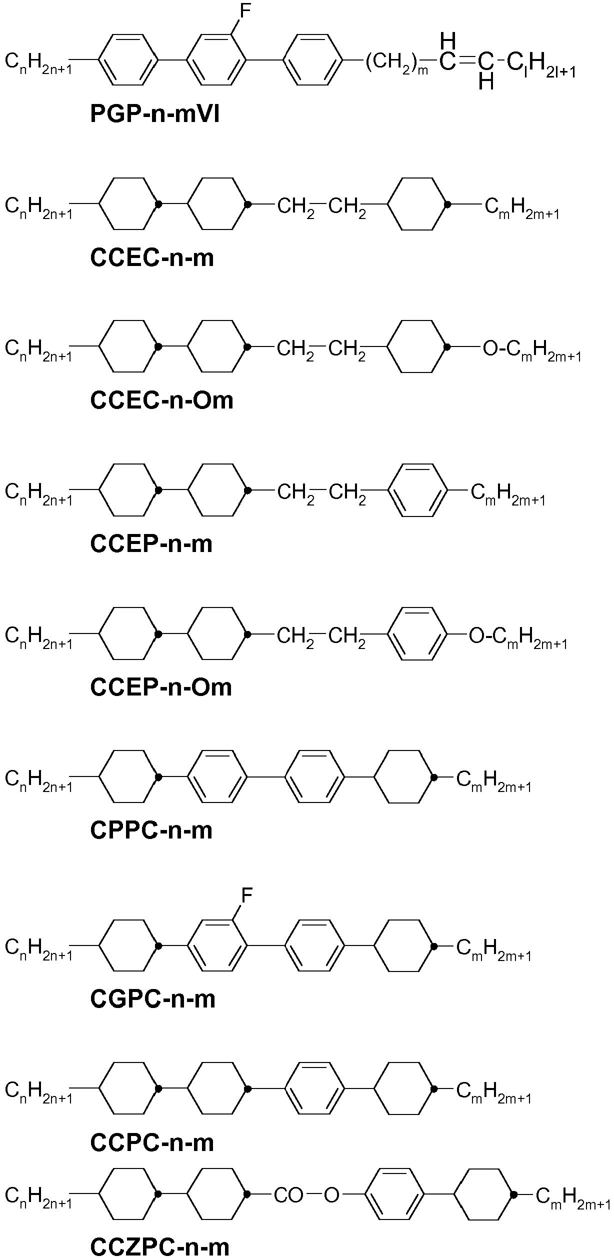

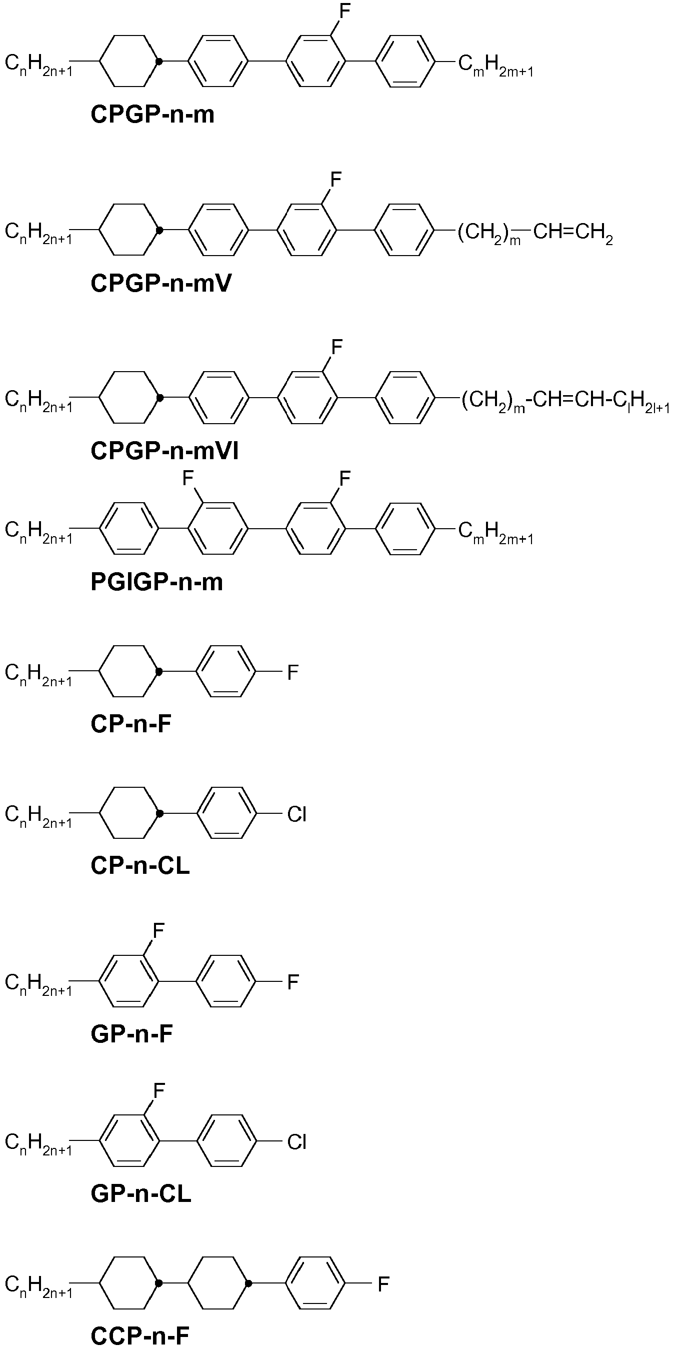

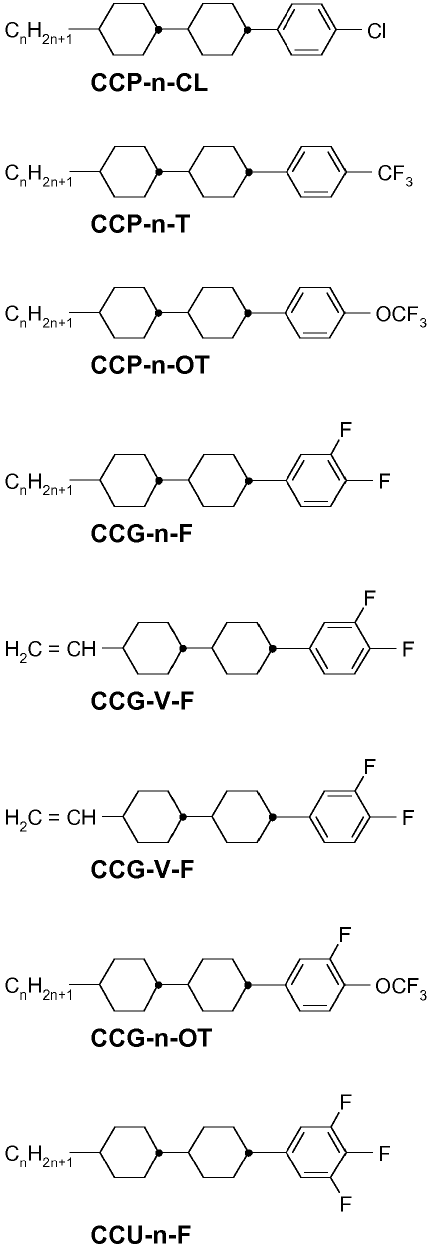

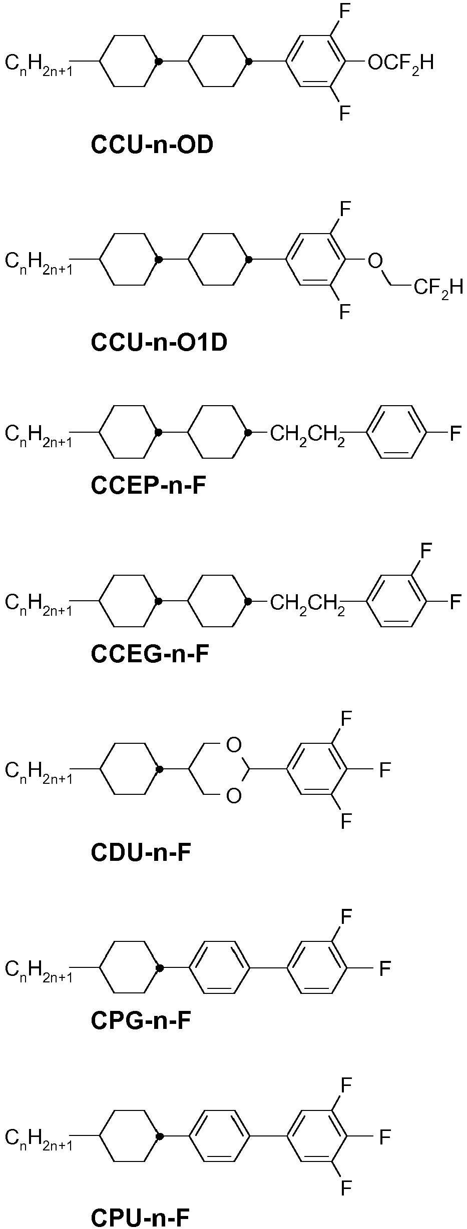

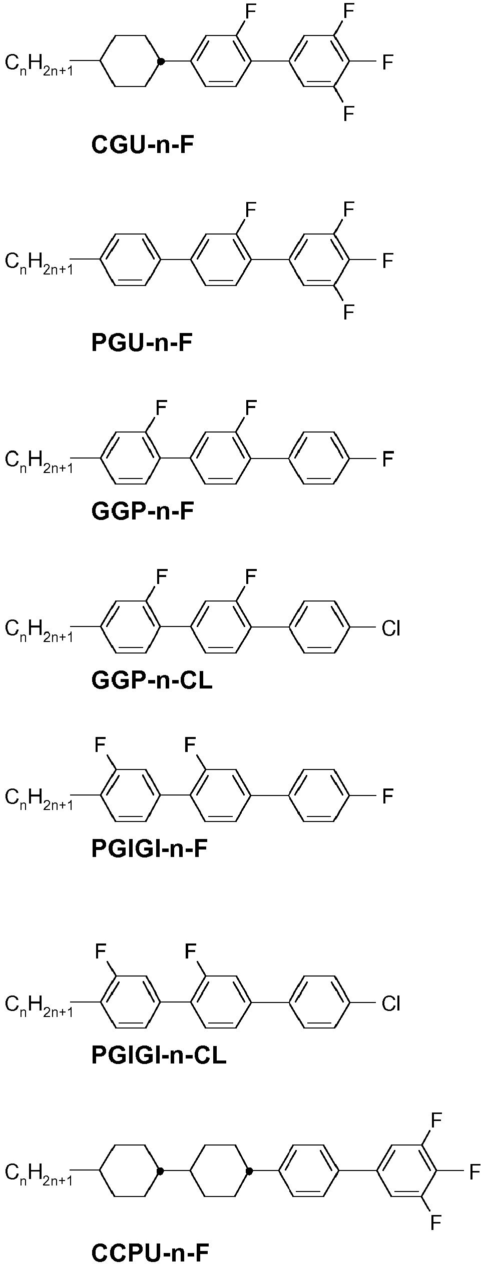

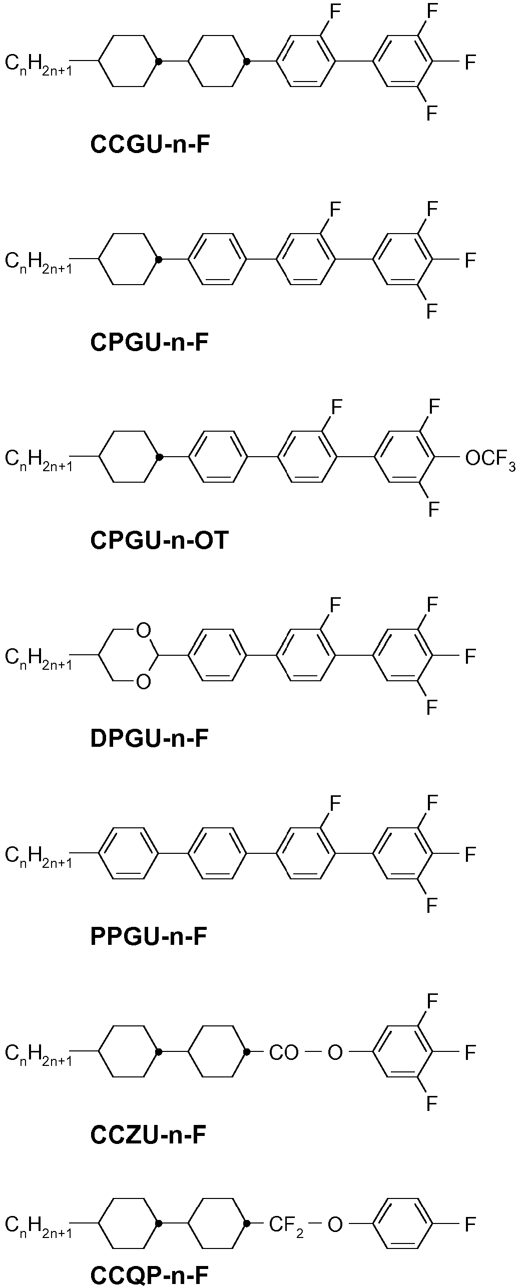

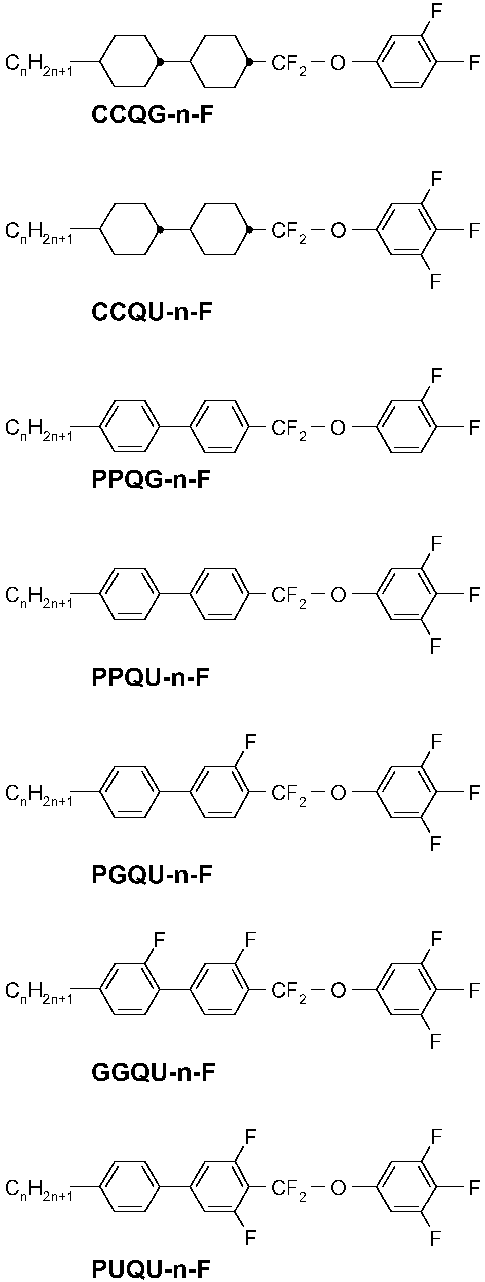

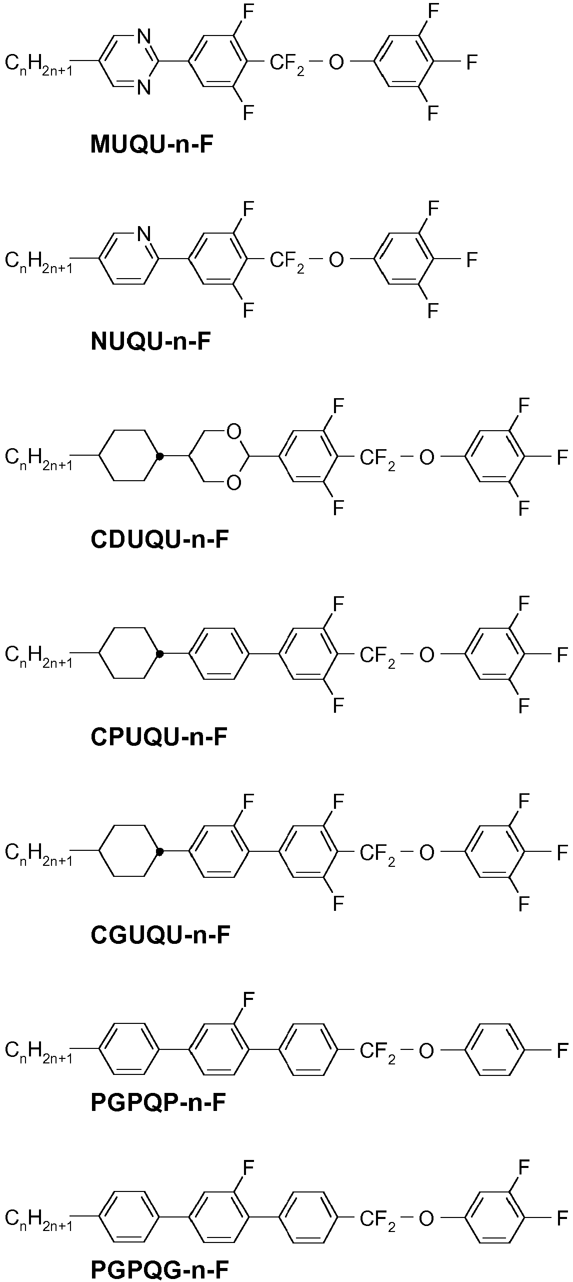

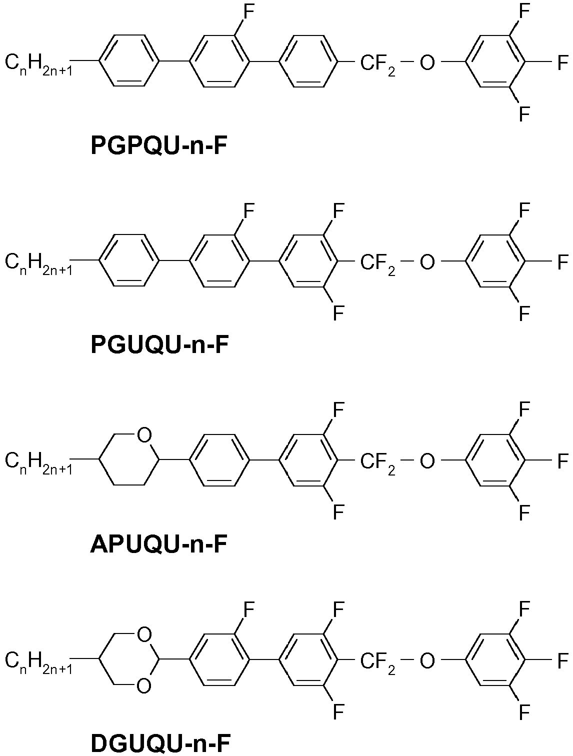

In der Tabelle E werden chirale Dotierstoffe genannt, die bevorzugt in den erfindungsgemäßen Mischungen eingesetzt werden.

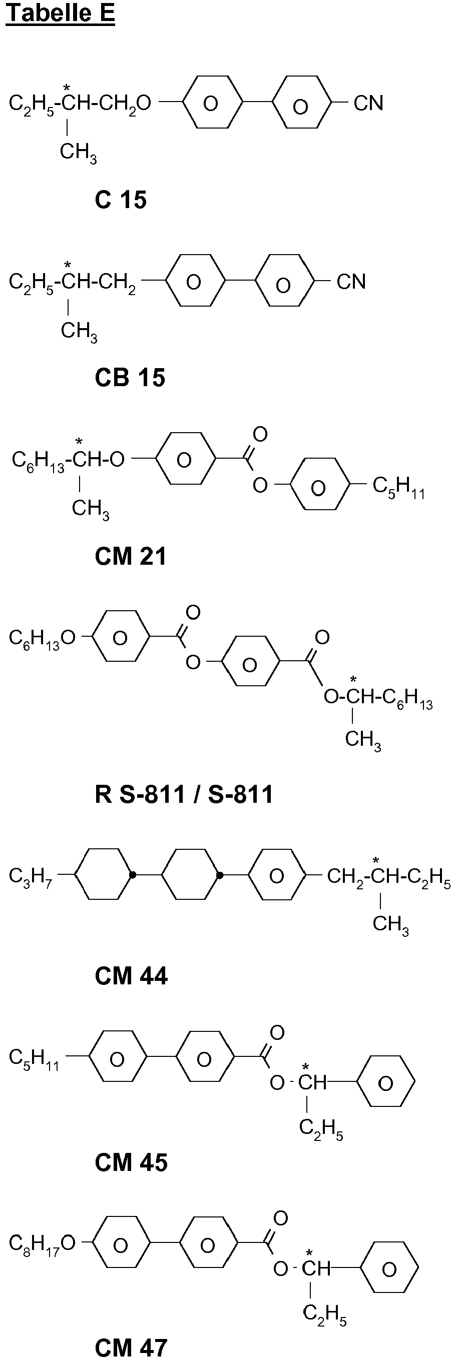

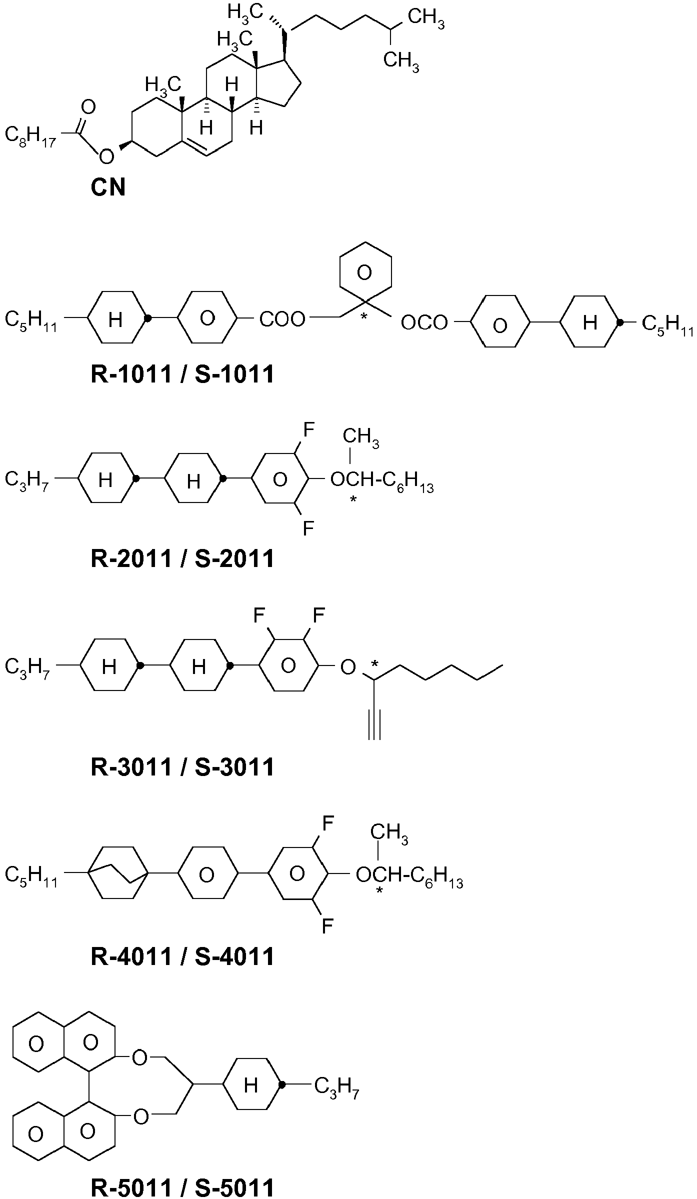

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

In der Tabelle F werden Stabilisatoren genannt, die bevorzugt zusätzlich zu den Verbindungen der Formel CC in den erfindungsgemäßen Mischungen eingesetzt werden können. Der Parameter n bedeutet hier eine ganze Zahl im Bereich von 1 bis 12. Insbesondere die gezeigten Phenolderivate sind als zusätzliche Stabilisatoren einsetzbar, da sie als Antioxidantien wirken.

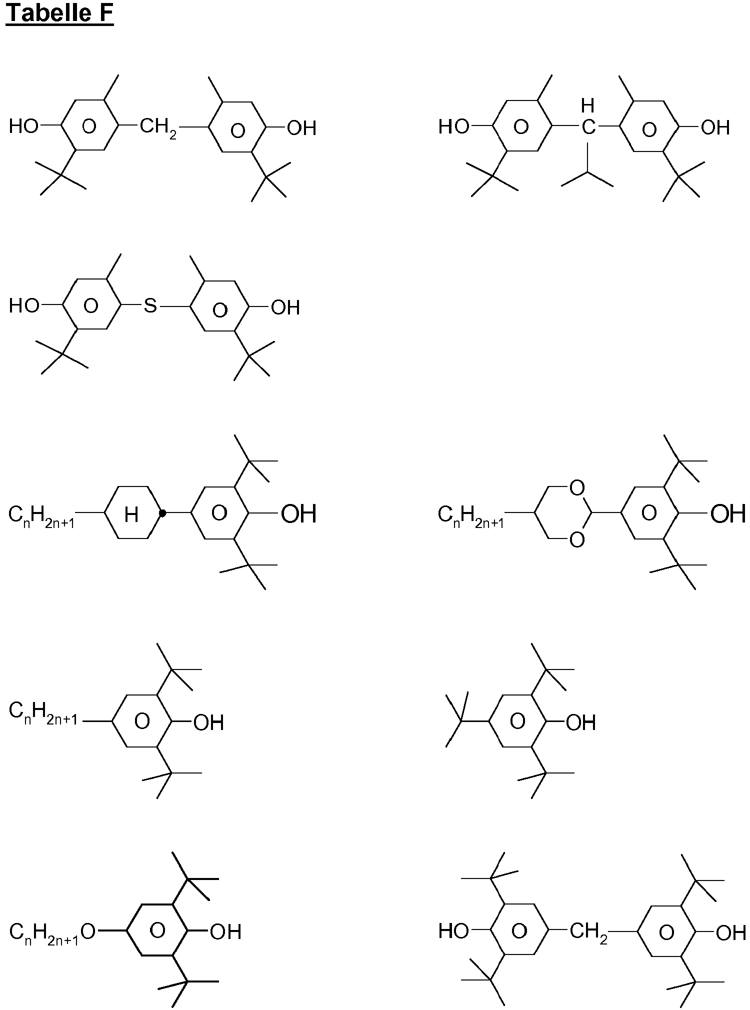

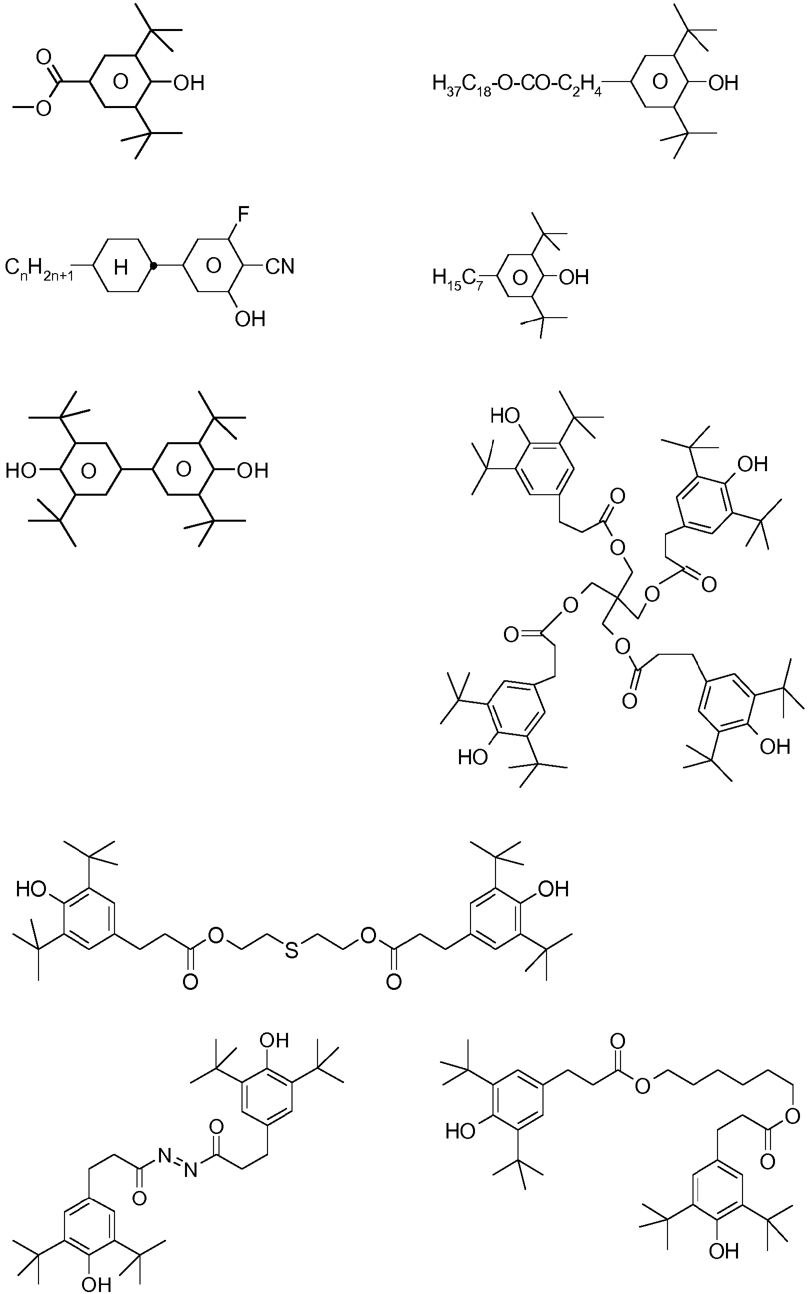

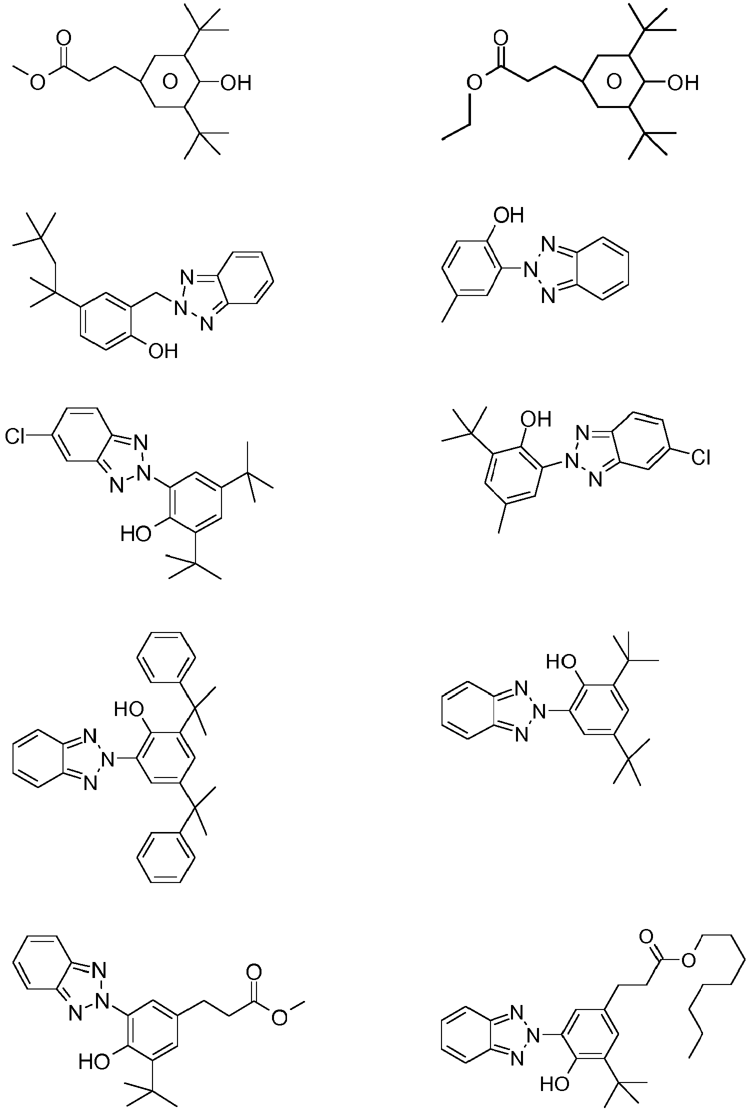

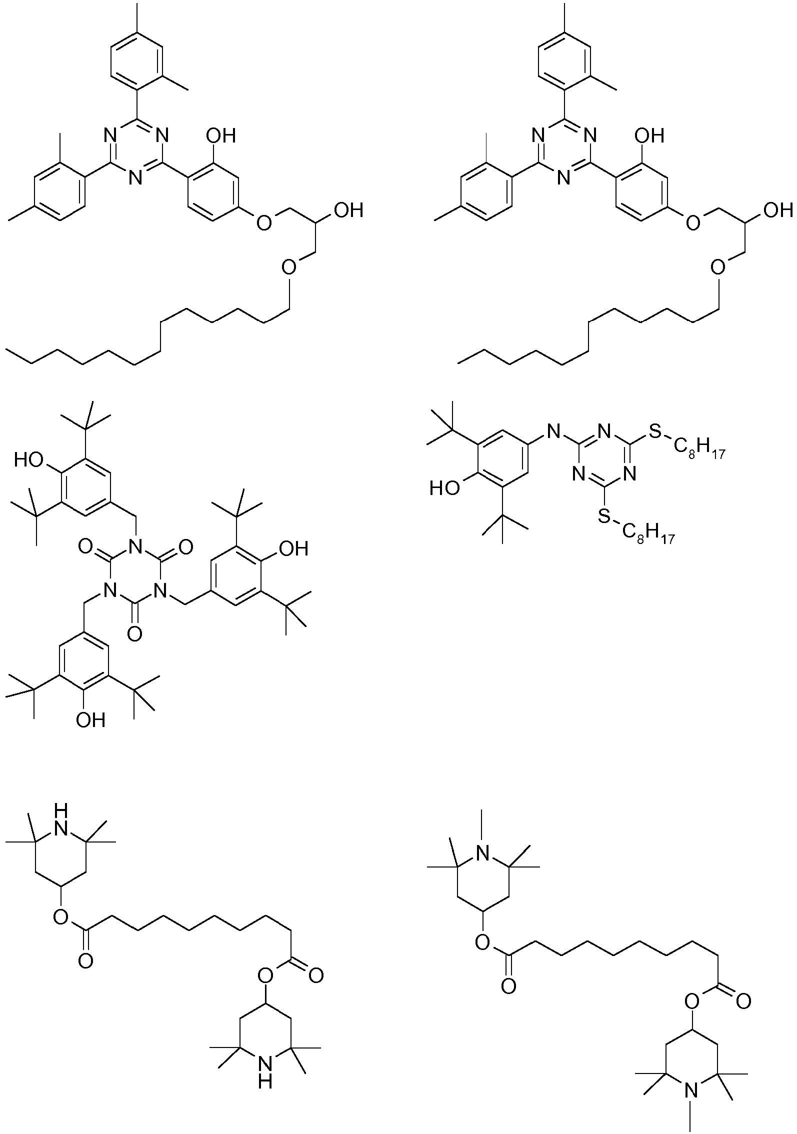

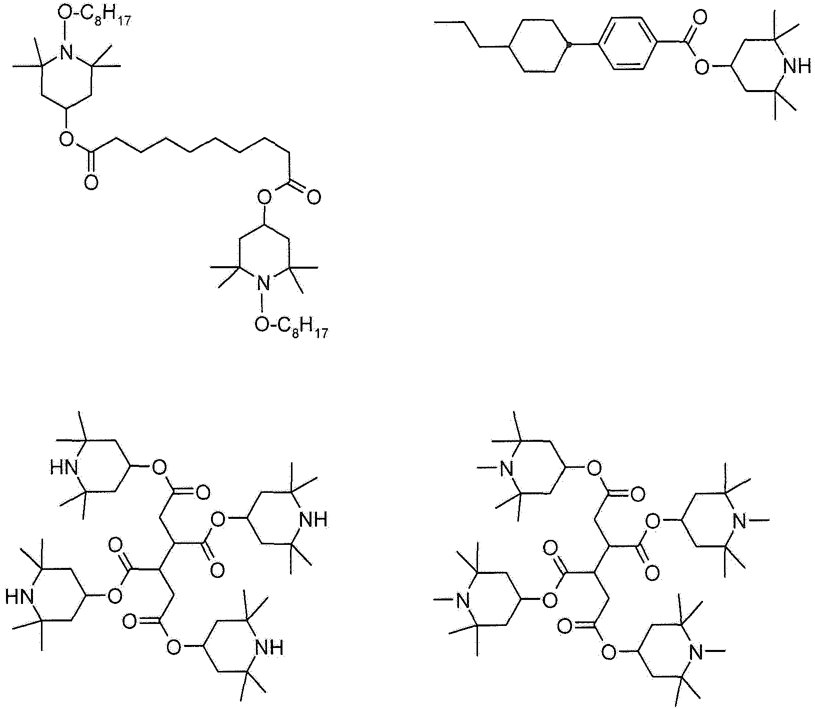

In einer bevorzugten Ausführungsform der vorliegenden Erfindung enthalten die Medien eine oder mehrere Verbindungen, ausgewählt aus der Gruppe der Verbindungen der Tabelle F, bevorzugt in einer Gesamtkonzentration im Bereich von 0.01% bis 2%.

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Schmp. bedeutet Schmelzpunkt, T_{(N,I)} = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε bedeutet dielektrische Anisotropie (1 kHz, 20°C); die Fließviskosität ν₂₀ (mm²/sec) und die Rotationsviskosität γ₁ (mPa·s) wurden jeweils bei 20 °C bestimmt.

### Beispiel M1

| | | | |
|---|---|---|---|
| CCP-3-F | 12,0 % | T_{(N,I)} [°C]: | 135 |
| CCU-2-O1D | 15,0 % | Δn: | 0,092 |
| CCU-3-O1D | 8,0 % | Δε: | 8,2 |
| CCU-5-O1D | 14,0 % | | |
| CCU-2-F | 7,0 % | | |
| CCU-3-F | 12,0 % | | |
| CCU-5-F | 5,0 % | | |
| CCP-3-1 | 8,0 % | | |
| CGPC-5-3 | 7,0 % | | |
| CGPC-3-3 | 4,0 % | | |
| CDUQU-3-F | 8,0 % | | |

### Beispiel M2

| | | | |
|---|---|---|---|
| CCU-2-O1D | 15,0 % | T_{(N,I)} [°C]: | 121 |
| CCU-3-O1D | 8,0 % | Δn: | 0,089 |
| CCU-5-O1D | 12,0 % | Δε: | 7,1 |
| CCU-3-OD | 20,0 % | | |
| CCU-4-OD | 20,0 % | | |
| CCU-5-OD | 10,0 % | | |
| CCP-3-1 | 8,0 % | | |
| CGPC-5-3 | 5,0 % | | |
| CGPC-3-3 | 2,0 % | | |

### Beispiel M3

| | | | |
|---|---|---|---|
| CCG-1-F | 6,0 % | T_{(N,I)} [°C]: | 122 |
| CCG-2-F | 15,0 % | Δn: | 0,087 |
| CCG-3-F | 16,0 % | Δε: | 8,0 |
| CCG-5-F | 14,0 % | γ₁ [mPa.s] | 216 |
| CCU-2-F | 7,0 % | | |
| CCU-3-F | 10,0 % | | |
| CCU-5-F | 5,0 % | | |
| CCP-3-1 | 8,0 % | | |
| CGPC-5-3 | 7,0 % | | |
| CGPC-3-3 | 4,0 % | | |
| CDUQU-3-F | 8,0 % | | |

### Beispiel M4

| | | | |
|---|---|---|---|
| CCG-2-F | 10,0 % | T_{(N,I)} [°C]: | 122 |
| CCG-3-F | 25,0 % | Δn: | 0,083 |
| CCG-5-F | 20,0 % | Δε: | 7,4 |
| CCU-3-F | 6,0 % | γ₁ [mPa.s] | 209 |
| CCQU-3-F | 15,0 % | | |
| CCQU-5-F | 15,0 % | | |
| CGPC-5-3 | 6,0 % | | |
| CGPC-3-3 | 3,0 % | | |

### Beispiel M5

| | | | |
|---|---|---|---|
| CCG-2-F | 10,0 % | T_{(N,I)} [°C]: | 123 |
| CCG-3-F | 20,0 % | Δn: | 0,087 |
| CCG-5-F | 20,0 % | Δε: | 7,5 |
| CCU-2-F | 6,0 % | γ₁ [mPa.s] | 215 |
| CCU-3-F | 16,0 % | | |
| CCU-5-F | 5,0 % | | |
| CCP-3-1 | 10,0 % | | |
| CCPU-3-F | 5,0 % | | |
| CCPU-4-F | 5,0 % | | |
| CCPU-5-F | 3,0 % | | |

### Beispiel M6

| | | | |
|---|---|---|---|
| CCG-2-F | 10,0 % | T_{(N,I)} [°C]: | 120 |
| CCG-3-F | 25,0 % | Δn: | 0,083 |
| CCG-5-F | 25,0 % | Δε: | 8,2 |
| CCQU-3-F | 15,0 % | γ₁ [mPa.s] | 207 |
| CCQU-5-F | 15,0 % | | |
| CCPU-3-F | 5,0 % | | |
| CCPU-4-F | 5,0 % | | |

### Beispiel M7

| | | | |
|---|---|---|---|
| CCG-2-F | 10,0 % | T_{(N,I)} [°C]: | 123 |
| CCG-3-F | 25,0 % | Δn: | 0,083 |
| CCG-5-F | 25,0 % | Δε: | 7,4 |
| CCP-3-Cl | 10,0 % | γ₁ [mPa·s] | 209 |
| CCP-5-Cl | 10,0 % | | |
| CCQU-3-F | 15,0 % | | |
| CCQU-5-F | 15,0 % | | |

### Beispiel M8

| | | | |
|---|---|---|---|
| CCG-3-F | 10,0 % | T_{(N,I)} [°C]: | 131 |
| CCG-5-F | 20,0 % | Δn: | 0,086 |
| CCP-3-Cl | 12,0 % | Δε: | 7,6 |
| CCP-5-Cl | 18,0 % | γ₁ [mPa.s] | 237 |
| CCQU-3-F | 15,0 % | | |
| CCQU-5-F | 15,0 % | | |
| CCU-3-F | 10,0 % | | |

### Beispiel M9

| | | | |
|---|---|---|---|
| CCG-2-F | 10,0 % | T_{(N,I)} [°C]: | 143 |
| CCG-3-F | 20,0 % | Δn: | 0,095 |
| CCG-5-F | 20,0 % | Δε: | 5,8 |
| CCP-2-Cl | 15,0 % | γ₁ [mPa.s] | 255 |
| CCP-3-Cl | 15,0 % | | |
| CCP-5-Cl | 20,0 % | | |

### Beispiel M10

| | | | |
|---|---|---|---|
| CCG-2-F | 5,0 % | T_{(N,I)}. [°C]: | 124 |
| CCG-3-F | 20,0 % | Δn: | 0,084 |
| CCP-2-Cl | 15,0 % | Δε: | 3,9 |
| CCP-3-Cl | 15,0 % | γ₁ [mPa.s] | 151 |
| CCP-5-Cl | 20,0 % | | |
| CC-2-3 | 10,0 % | | |
| CC-3-4 | 10,0 % | | |
| CC-3-5 | 5,0 % | | |

### Beispiel M11

| | | | |
|---|---|---|---|
| CCG-3-F | 20,0 % | T_{(N,I)} [°C]: | 124 |
| CCG-5-F | 16,0 % | Δn: | 0,080 |
| CCQU-3-F | 15,0 % | Δε: | 7,9 |
| CCQU-5-F | 15,0 % | γ₁ [mPa·s] | 185 |
| CC-3-4 | 10,0 % | | |
| CC-4-5 | 5,0 % | | |
| CGPC-3-3 | 4,0 % | | |
| CGPC-5-3 | 7,0 % | | |
| CDUQU-3-F | 8,0 % | | |

### Beispiel M12

| | | | |
|---|---|---|---|
| CCEG-1-F | 16,0 % | T_{(N,I)} [°C]: | 121 |
| CCEG-3-F | 12,0 % | Δn: | 0,0915 |
| CCEG-4-F | 12,0 % | Δε: | 8,2 |
| CCU-2-F | 7,0 % | γ₁ [mPa·s] | 276 |
| CCU-3-F | 15,0 % | | |
| CCU-5-F | 5,0 % | | |
| CCGU-3-F | 6,0 % | | |
| CCP-3-1 | 8,0 % | | |
| CGPC-5-3 | 7,0 % | | |
| CGPC-3-3 | 4,0 % | | |
| CDUQU-3-F | 8,0 % | | |

### Beispiel M13

| | | | |
|---|---|---|---|
| CCU-1-F | 5,0 % | T_{(N,I)} [°C]: | 121 |
| CCU-2-F | 7,0 % | Δn: | 0,0915 |
| CCU-3-F | 10,0 % | Δε: | 8,2 |
| CCU-5-F | 5,0 % | γ₁ [mPa.s] | 276 |
| CCGU-3-F | 6,0 % | | |
| CCP-3-1 | 8,0 % | | |
| CGPC-5-3 | 7,0 % | | |
| CGPC-3-3 | 4,0 % | | |
| CDUQU-3-F | 8,0 % | | |
| CCEP-1-F | 25,0 % | | |
| CCEP-4-F | 15,0 % | | |

### Beispiel M14

| | | | |
|---|---|---|---|
| CCEG-1-F | 15,0 % | T_{(N,I)} [°C]: | 121 |
| CCEG-3-F | 15,0 % | Δn: | 0,0893 |
| CCEG-4-F | 20,0 % | Δε: | 6,2 |
| CCU-2-F | 7,0 % | γ₁ [mPa.s] | 265 |
| CCU-3-F | 15,0 % | | |
| CCU-5-F | 4,0 % | | |
| CCGU-3-F | 5,0 % | | |
| CCP-3-1 | 8,0 % | | |
| CGPC-5-3 | 7,0 % | | |
| CGPC-3-3 | 4,0 % | | |

### Beispiel M15

| | | | |
|---|---|---|---|
| CCQU-3-F | 15,0 % | T_{(N,I)} [°C]: | 121 |
| CCQU-5-F | 8,0 % | Δn: | 0,0878 |
| CCU-2-F | 15,0 % | Δε: | 10,1 |
| CCU-3-F | 20,0 % | γ₁ [mPa.s] | 249 |
| CCU-5-F | 8,0 % | | |
| CCGU-3-F | 5,0 % | | |
| CCP-3-1 | 8,0 % | | |
| CGPC-5-3 | 7,0 % | | |
| CGPC-3-3 | 5,0 % | | |
| CDUQU-3-F | 3,0 % | | |

### Beispiel M16

| | | | |
|---|---|---|---|
| CDU-2-F | 10,0 % | T_{(N,I)} [°C]: | 121 |
| CDU-3-F | 15,0 % | Δn: | 0,0885 |
| CDU-5-F | 20,0 % | Δε: | 13,2 |
| CCQU-3-F | 10,0 % | γ₁ [mPa.s] | 280 |
| CCQU-5-F | 10,0 % | | |
| CCGU-3-F | 8,0 % | | |
| CCP-3-1 | 8,0 % | | |
| CGPC-5-3 | 7,0 % | | |
| CGPC-3-3 | 5,0 % | | |
| CDUQU-3-F | 7,0 % | | |

### Beispiel M17

| | | | |
|---|---|---|---|
| CCEU-2-F | 6,0 % | T_{(N,I)} [°C]: | 121 |
| CCEU-3-F | 15,0 % | Δn: | 0,0885 |
| CCEU-5-F | 20,0 % | Δε: | 6,3 |
| CCEG-3-F | 12,0 % | γ₁ [mPa·s] | 253 |
| CCEP-3-F | 12,0 % | | |
| CCQU-5-F | 10,0 % | | |
| CCP-3-1 | 8,0 % | | |
| CGPC-5-3 | 7,0 % | | |
| CGPC-3-3 | 5,0 % | | |
| CP-3-CI | 5,0 % | | |

### Beispiel M18

| | | | |
|---|---|---|---|
| CCG-2-F | 10,0 % | T_{(N,I)} [°C]: | 143 |
| CCG-3-F | 25,0 % | Δn [589 nm, 20°C]: | 0,0934 |
| CCG-5-F | 25,0 % | nₑ [589 nm, 20°C]: | 1,5700 |
| CCQU-3-F | 15,0 % | ε_{∥} [1 kHz, 20°C]: | 15,2 |
| CCQU-5-F | 15,0 % | ε_{┴} [1 kHz, 20°C]: | 3,6 |
| CCPU-3-F | 5,0 % | Δε [1 kHz, 20°C]: | 11,6 |
| CCPU-4-F | 5,0 % | K₁ [pN, 20°C]: | 15,6 |
| | | K₃ [pN, 20°C]: | 23,8 |
| | | K₃/K₁ [pN, 20°C]: | 1,53 |
| | | V₀ [V, 20°C]: | 1,22 |
| | | γ₁ [mPa s, 20°C]: | 329 |
| | | LTS bulk [h, -20°C]: | 1000 |
| | | LTS bulk [h, -30°C]: | 72 |

## Patentansprüche

1. Beleuchtungseinrichtung für Fahrzeuge enthaltend ein elektrooptisches Bauelement, **dadurch gekennzeichnet, daß** das elektrooptische Bauelement ein flüssigkristallines Medium enthält, welches eine oder mehrere Verbindungen der Formel CC enthält: 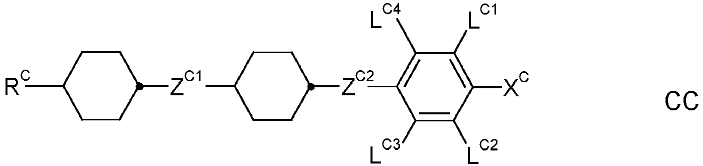 worin
R^{c} einen Alkyl-, Alkenyl oder Alkoxyrest mit 1 bis 15 C-Atomen, in denen eine Methylengruppe durch 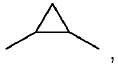 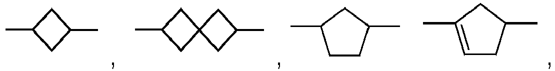 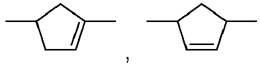 ersetzt sein kann und worin jeweils ein oder mehrere H-Atome durch F ersetzt sein können,
X^{c} F, Cl, halogenierter Alkylrest, halogenierter Alkenylrest, halogenierter Alkoxyrest oder halogenierter Alkenyloxyrest mit bis zu 6 C-Atomen,
Z^{C1}, Z^{C2} unabhängig voneinander -CH₂CH₂- oder eine Einfachbindung,
L^{C1} und L^{C2} unabhängig voneinander H oder F,
L^{C3} und L^{C4} unabhängig voneinander H oder Methyl
bedeuten, und **dadurch gekennzeichnet, daß** das Medium einen Klärpunkt von 120°C oder mehr aufweist, wobei die Gesamtkonzentration der einen oder mehreren Verbindungen der Formel CC im Medium 55 Gew.-% oder mehr beträgt.

2. Beleuchtungseinrichtung nach Anspruch 1, wobei das darin enthaltene Medium eine Doppelbrechung bei 20 °C und einer Wellenlänge von 589.3 nm im Bereich von 0,060 bis 0,100 aufweist.

3. Beleuchtungseinrichtung nach Anspruch 1 oder 2, wobei das darin enthaltene Medium eine oder mehrere Verbindungen der Formel CP 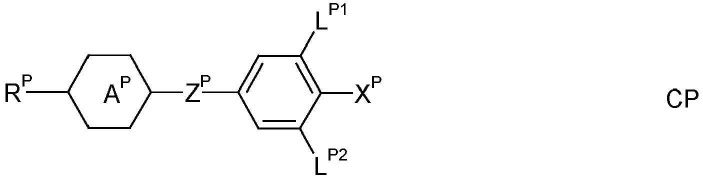 worin
R^{P} einen Alkyl-, Alkenyl oder Alkoxyrest mit 1 bis 15 C-Atomen, in denen eine Methylengruppe durch 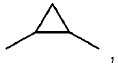 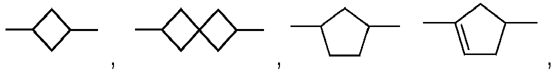 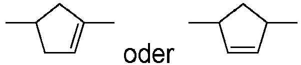 ersetzt sein kann und worin jeweils ein oder mehrere H-Atome durch F ersetzt sein können,
A^{P} 1,4-Cyclohexylen, worin ein oder zwei nicht benachbarte CH₂-Gruppen durch -O- ersetzt sein können, oder 1,4-Phenylen, worin ein oder zwei CH-Gruppen durch N ersetzt sein können,
X^{P} F, Cl, halogenierter Alkylrest, halogenierter Alkenylrest, halogenierter Alkoxyrest oder halogenierter Alkenyloxyrest mit bis zu 6 C-Atomen,
Z^{P} unabhängig voneinander -CH₂CH₂- oder eine Einfachbindung,
L^{P1} und L^{P2} unabhängig voneinander H oder F
bedeuten,
in einer Gesamtkonzentration von 2% oder weniger enthält.

4. Beleuchtungseinrichtung nach einem oder mehreren der Ansprüche 1 bis 3, wobei das darin enthaltene Medium eine oder mehrere Verbindungen der Formel IV-1 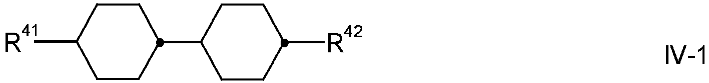 worin
R⁴¹ Alkyl mit bis zu 7 C-Atomen und
R⁴² Alkyl oder Alkoxy mit jeweils bis zu 7 C-Atomen,
oder
R⁴¹ Alkenyl mit bis zu 7 C-Atomen und R⁴² Alkyl oder Alkenyl mit jeweils bis zu 7 C-Atomen
bedeuten, wobei in den Resten R⁴¹ und R⁴² ein oder mehrere H-Atome durch F ersetzt sein können,
in einer Gesamtkonzentration von 25% oder weniger enthält.

5. Beleuchtungseinrichtung nach einem oder mehreren der Ansprüche 1 bis 4, wobei das darin enthaltene Medium eine oder mehrere Verbindungen der Formel CC ausgewählt aus der Gruppe der Verbindungen CC-1 bis CC-12 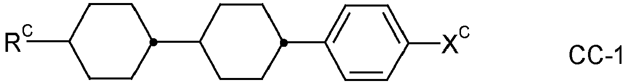 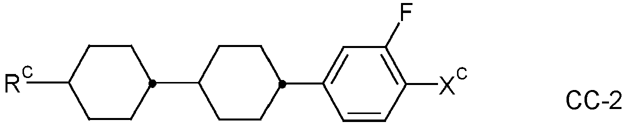 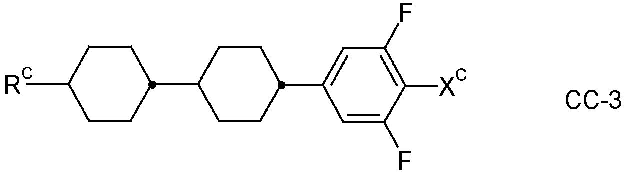 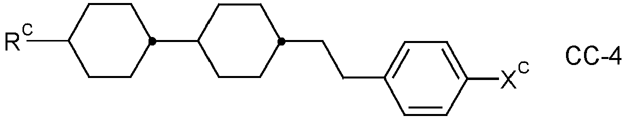 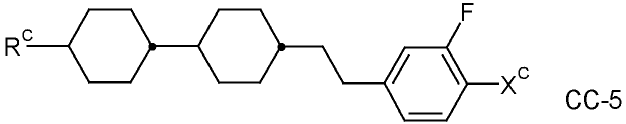 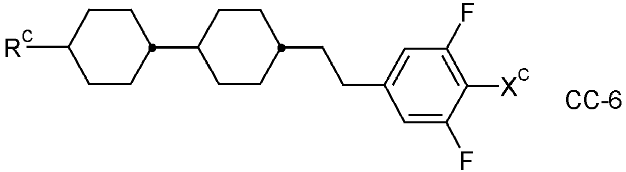 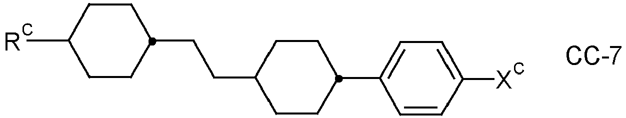 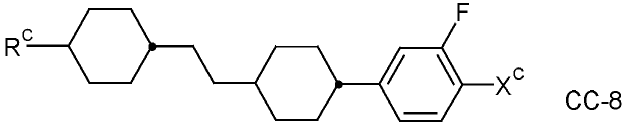 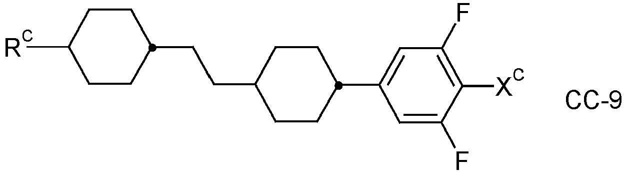 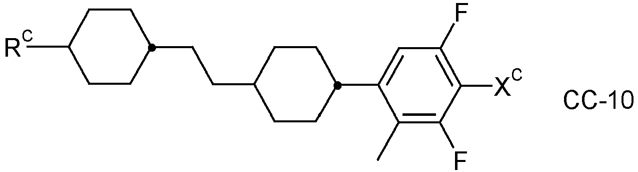 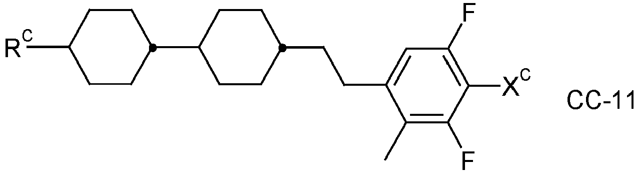 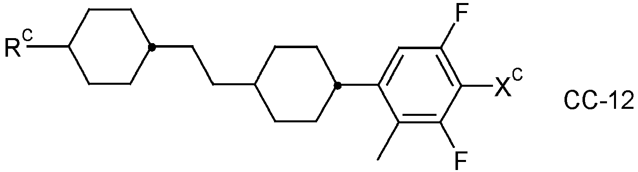 enthält, worin R^{C} und X^{C} die in Anspruch 1 angegebenen Bedeutungen haben.

6. Beleuchtungseinrichtung nach einem oder mehreren der Ansprüche 1 bis 5, **dadurch gekennzeichnet, daß** das darin enthaltene Medium zusätzlich eine oder mehrere Verbindungen der Formel II in einer Gesamtkonzentration von 40 % oder weniger enthält, 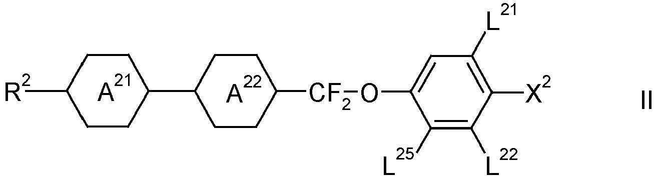 worin
R² einen Alkyl-, Alkenyl oder Alkoxyrest mit 1 bis 15 C-Atomen, in denen eine Methylengruppe durch 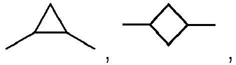 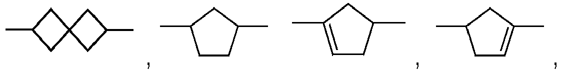 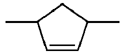 ersetzt sein kann und worin jeweils ein oder mehrere H-Atome durch F ersetzt sein können, 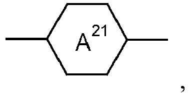 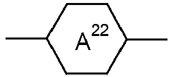 bei jedem Auftreten gleich oder verschieden 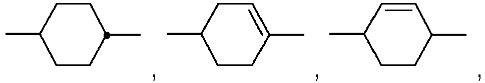 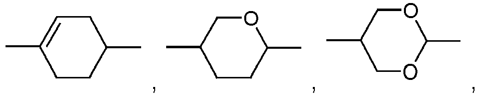 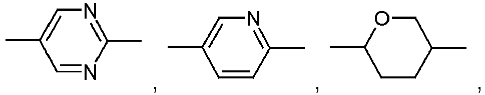 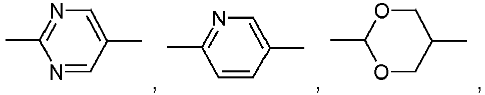 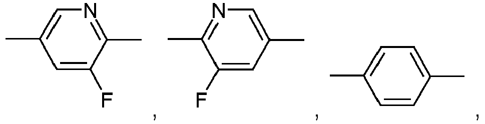 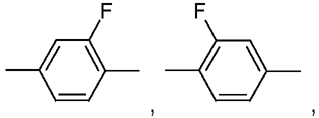 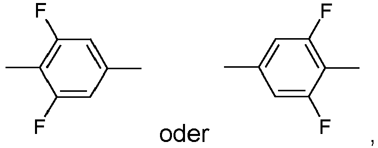
L²¹ und L²² unabhängig voneinander H oder F,
L²⁵ H oder Methyl,
X² F, Cl, CN, halogenierter Alkylrest, halogenierter Alkenylrest, halogenierter Alkoxyrest oder halogenierter Alkenyloxyrest mit 1 bis 6 C-Atomen,
bedeuten.

7. Beleuchtungseinrichtung nach Anspruch 6, wobei die Verbindungen der Formel II ausgewählt sind aus der Gruppe der Verbindungen II-1 bis II-6 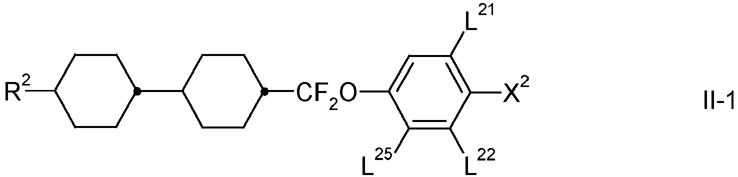 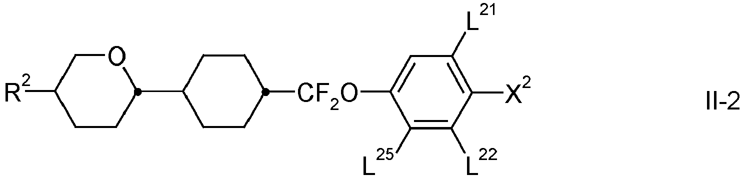 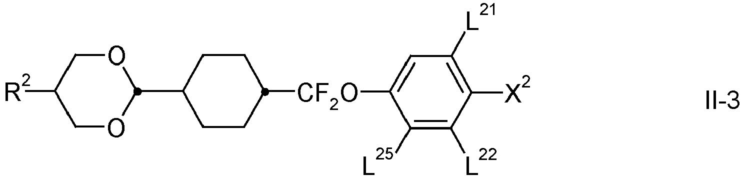 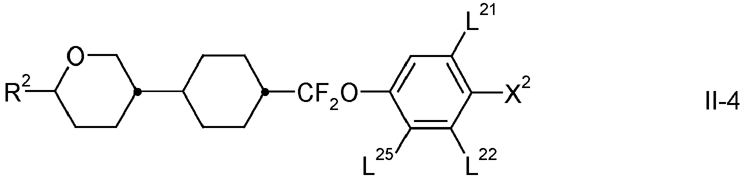 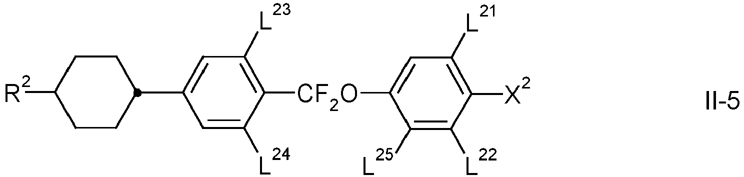 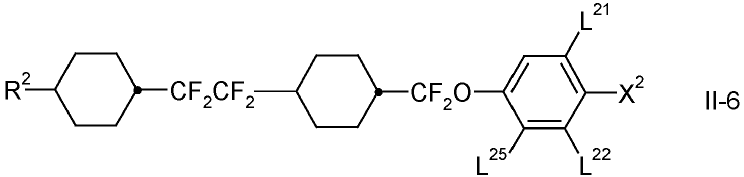 worin
R² n-Alkyl mit 1 bis 7 C-Atomen,
L²¹, L²², L²³ und L²⁴ unabhängig voneinander H oder F,
L²⁵ H oder Methyl, und
X² F, Cl, halogeniertes Alkyl oder halogeniertes Alkoxy mit 1 bis 6 C-Atomen
bedeuten.

8. Beleuchtungseinrichtung nach einem oder mehreren der Ansprüche 1 bis 7, **dadurch gekennzeichnet, daß** das darin enthaltene Medium zusätzlich eine oder mehrere Verbindungen ausgewählt aus der Gruppe der Verbindungen der Formeln IIA und IIB enthält, 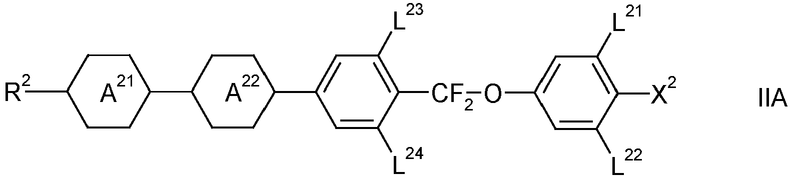 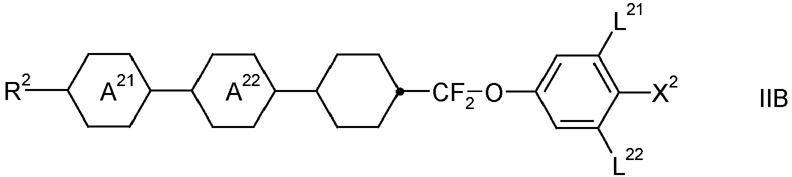 worin R², A²¹, A²², L²¹, L²², und X² die in Anspruch 7 für Formel II angegebenen Bedeutungen haben und L²³ und L²⁴ die für L²¹ angegebene Bedeutung haben.

9. Beleuchtungseinrichtung nach einem oder mehreren der Ansprüche 1 bis 8, **dadurch gekennzeichnet, daß** das darin enthaltene Medium zusätzlich eine oder mehrere Verbindungen der Formel III enthält, 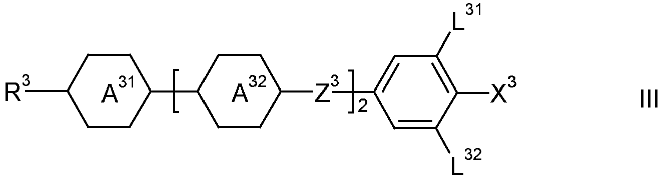 worin R³ die in Anspruch 7 für R² angegebene Bedeutung hat, 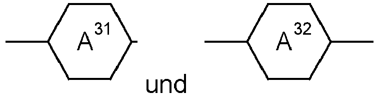 bei jedem Auftreten unabhängig voneinander 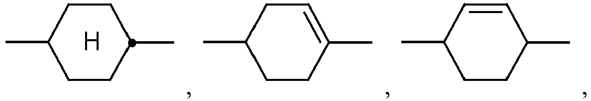 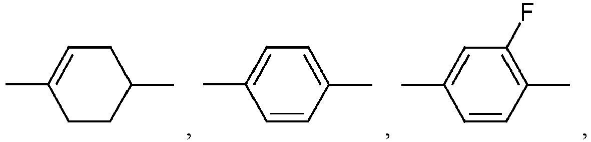 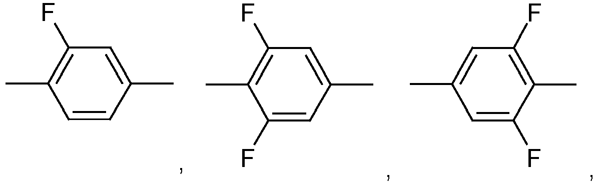 oder 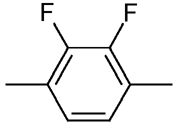 bedeuten,
Z³ bei jedem Auftreten unabhängig voneinander -CH₂CH₂-, -COO-, *trans-* -CH=CH-, *trans-* -CF=CF-, -CH₂O-, -C≡C- oder eine Einfachbindung,
L³¹, L³² H oder F,
X³ F, Cl, CN, halogenierter Alkylrest, halogenierter Alkenylrest, halogenierter Alkoxyrest oder halogenierter Alkenyloxyrest mit bis zu 6 C-Atomen
bedeuten.

10. Beleuchtungseinrichtung nach Anspruch 9, wobei die Verbindungen der Formel III ausgewählt sind aus den Verbindungen der Formeln III-1 bis III-9 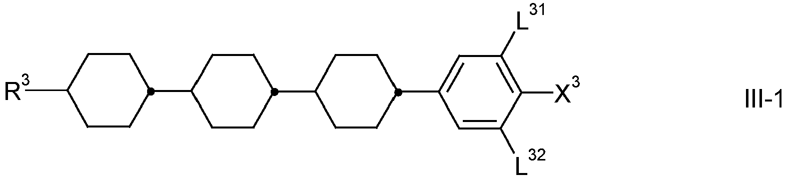 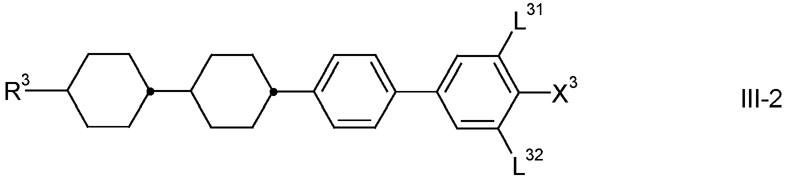 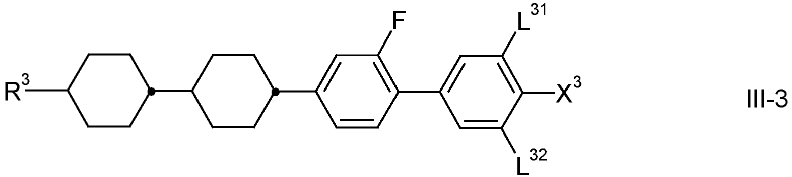 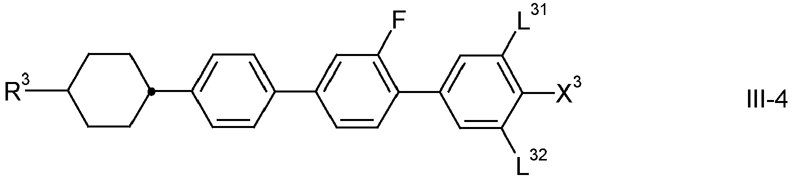 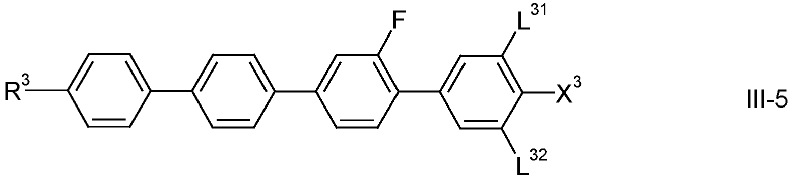 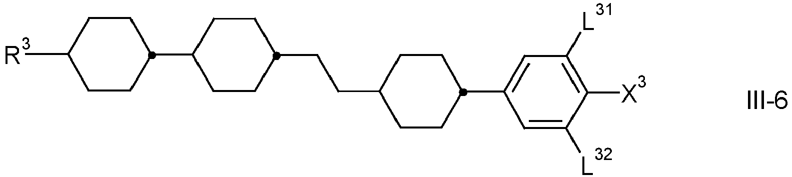 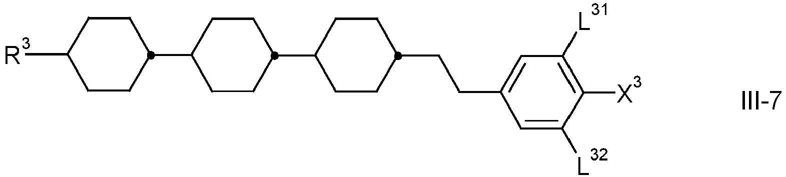 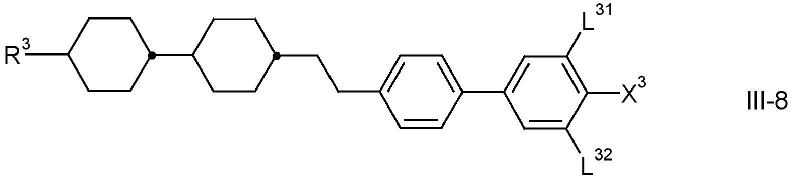 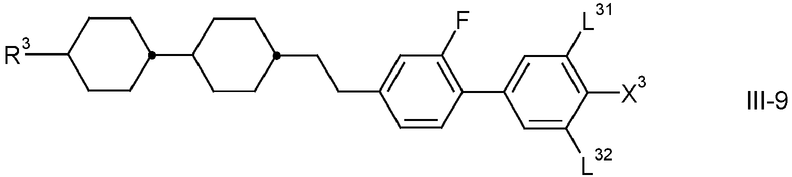 worin
R³, L³¹ und L³² die in Anspruch 10 angegebenen Bedeutungen haben
und
X³ F, Cl, halogeniertes Alkyl oder halogeniertes Alkoxy mit bis zu 6 C-Atomen
bedeutet.

11. Beleuchtungseinrichtung nach einem oder mehreren der Ansprüche 1 bis 10, **dadurch gekennzeichnet, daß** das darin enthaltene Medium zusätzlich eine oder mehrere Verbindungen ausgewählt aus der Gruppe der Verbindungen der Formeln IV-11 und IV-12 enthält 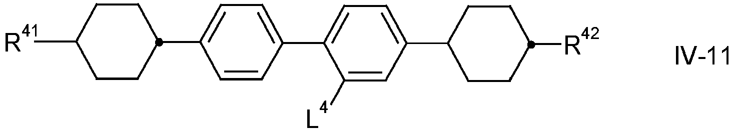 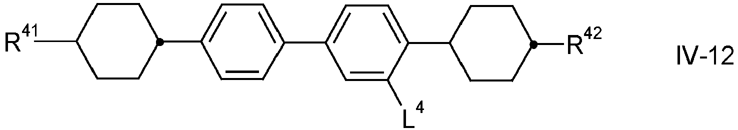 worin
R⁴¹ und R⁴² unabhängig voneinander n-Alkyl mit 1 bis 7 C-Atomen bedeuten, und
L⁴ H oder F bedeutet.

12. Flüssigkristallines Medium, wie es in dem Bauteil gemäß Anspruch 7 enthalten ist.

13. Verwendung des flüssigkristallinen Mediums nach Anspruch 12 in Flüssigkristallichtventilen in Beleuchtungseinrichtungen für Fahrzeuge.

## Claims

1. Lighting device for vehicles containing an electro-optical component, **characterised in that** the electro-optical component contains a liquid-crystalline medium which comprises one or more compounds of the formula CC: 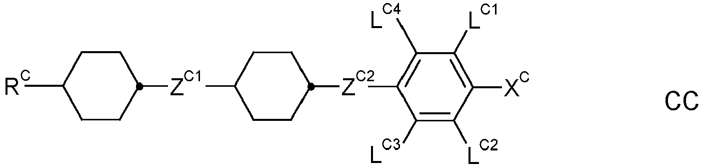 in which
R^{C} denotes an alkyl, alkenyl or alkoxy radical having 1 to 15 C atoms, in which a methylene group may be replaced by 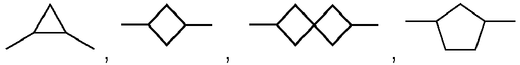 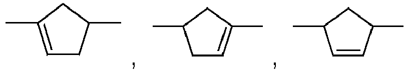 and in which in each case one or more H atoms may be replaced by F,
X^{C} denotes F, Cl, a halogenated alkyl radical, a halogenated alkenyl radical, a halogenated alkoxy radical or a halogenated alkenyloxy radical having up to 6 C atoms,
Z^{C1}, Z^{C2}, independently of one another, denote -CH₂CH₂- or a single bond,
L^{C1} and L^{C2}, independently of one another, denote H or F,
L^{C3} und L^{C4} independently of one another, denote H or methyl,
and **characterised in that** the medium has a clearing point of 120°C or more, where the total concentration of the one or more compounds of the formula CC in the medium is 55% by weight or more.

2. Lighting device according to Claim 1, where the medium present therein has a birefringence in the range from 0.060 to 0.100 at 20°C and a wavelength of 589.3 nm.

3. Lighting device according to Claim 1 or 2, where the medium present therein comprises one or more compounds of the formula CP 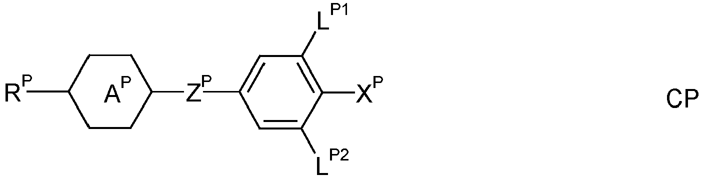 in which
R^{P} denotes an alkyl, alkenyl or alkoxy radical having 1 to 15 C atoms, in which a methylene group may be replaced by 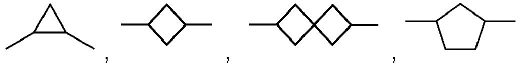 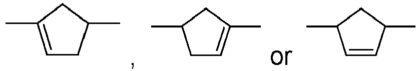 and in which in each case one or more H atoms may be replaced by F,
A^{P} denotes 1,4-cyclohexylene, in which one or two non-adjacent CH₂ groups may be replaced by -O-, or 1,4-phenylene, in which one or two CH groups may be replaced by N,
X^{P} denotes F, Cl, a halogenated alkyl radical, a halogen-ated alkenyl radical, a halogenated alkoxy radical or a halogenated alkenyloxy radical having up to 6 C atoms,
Z^{P}, independently of one another, denotes -CH₂CH₂- or a single bond,
L^{P1} and L^{P2}, independently of one another, denote H or F,
in a total concentration of 2% or less.

4. Lighting device according to one or more of Claims 1 to 3, where the medium present therein comprises one or more compounds of the formula IV-1 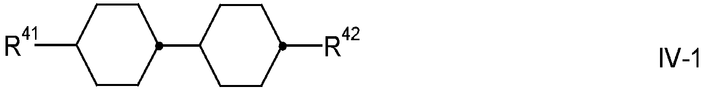 in which
R⁴¹ denotes alkyl having up to 7 C atoms and
R⁴² denotes alkyl or alkoxy, in each case having up to 7 C atoms,
or
R⁴¹ denotes alkenyl having up to 7 C atoms and R⁴² denotes alkyl or alkenyl, in each case having up to 7 C atoms,
where one or more H atoms in the radicals R⁴¹ and R⁴² may be replaced by F,
in a total concentration of 25% or less.

5. Lighting device according to one or more of Claims 1 to 4, where the medium present therein comprises one or more compounds of the formula CC selected from the group of the compounds CC-1 to CC-12 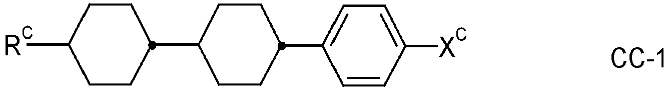 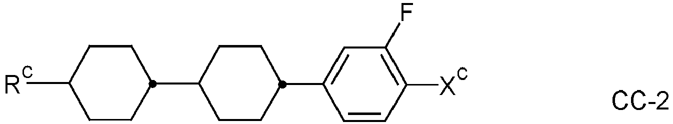 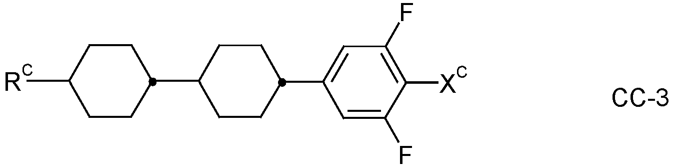 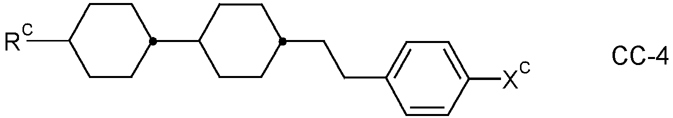 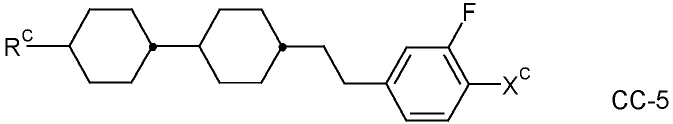 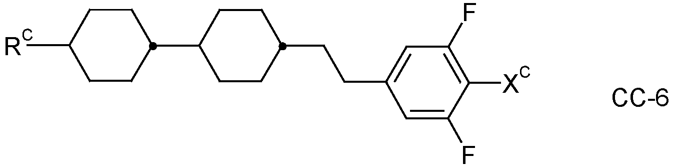 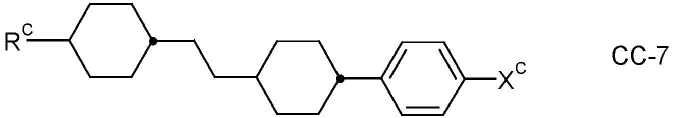 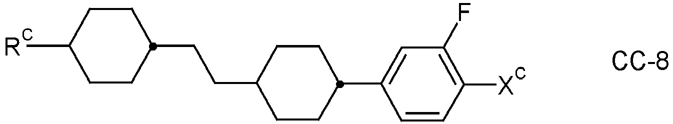 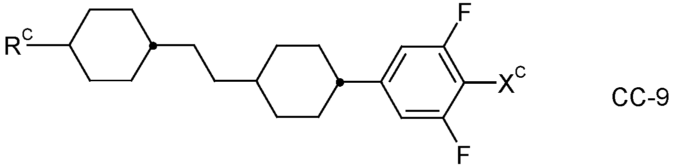 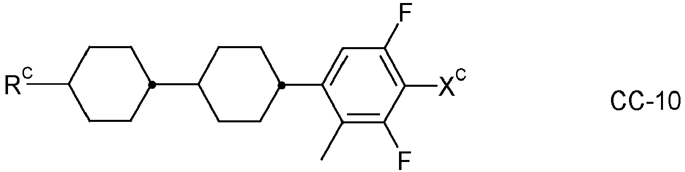 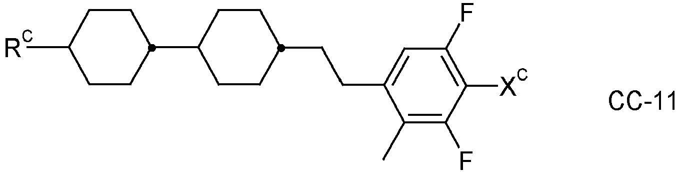 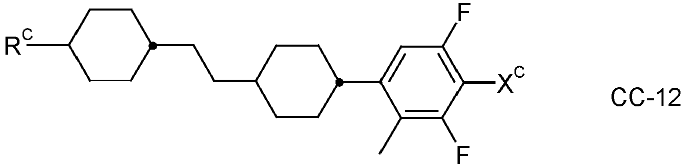 in which R^{C} and X^{C} have the meanings indicated in Claim 1.

6. Lighting device according to one or more of Claims 1 to 5, **characterised in that** the medium present therein additionally comprises one or more compounds of the formula II in a total concentration of 40% or less, 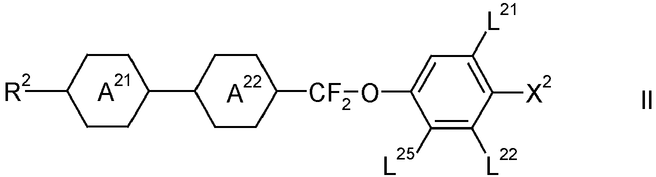 in which
R² denotes an alkyl, alkenyl or alkoxy radical having 1 to 15 C atoms, in which a methylene group may be replaced by 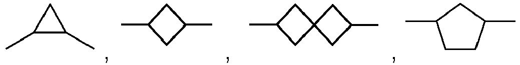 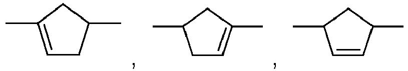 and in which in each case one or more H atoms may be replaced by F, 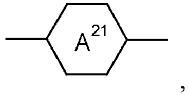 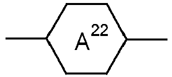 on each occurrence, identically or differently, denote 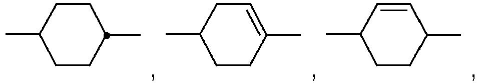 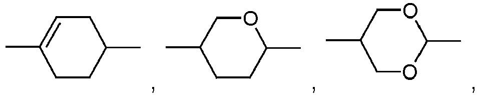 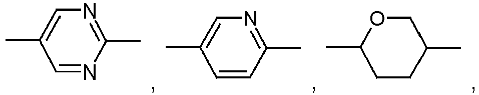 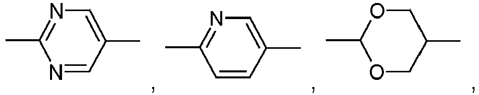 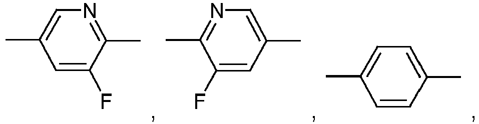 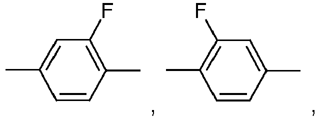 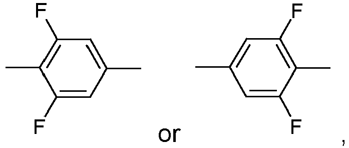
L²¹ and L²², independently of one another, denote H or F,
L²⁵ denotes H or methyl,
X² denotes F, Cl, CN, a halogenated alkyl radical, a halogenated alkenyl radical, a halogenated alkoxy radical or a halogenated alkenyloxy radical having 1 to 6 C atoms.

7. Lighting device according to Claim 6, where the compounds of the formula II are selected from the group of the compounds II-1 to II-6 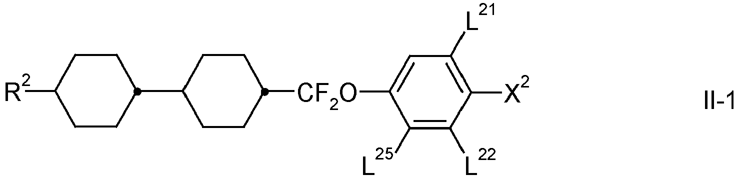 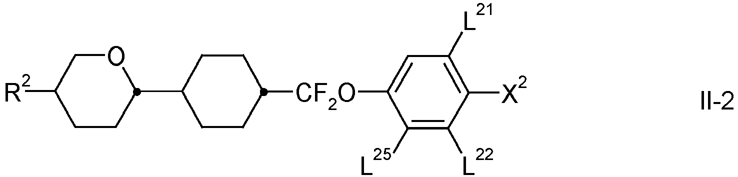 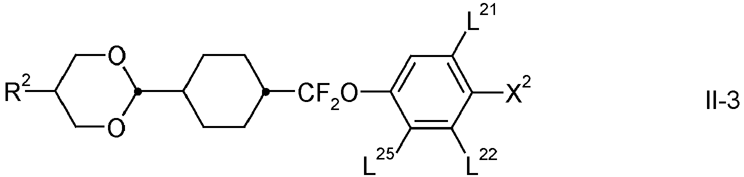 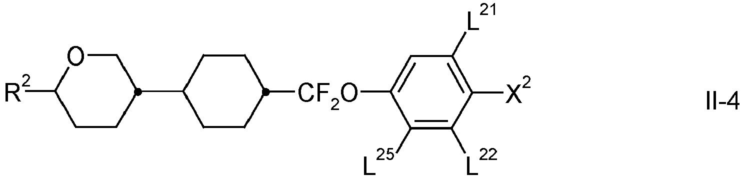 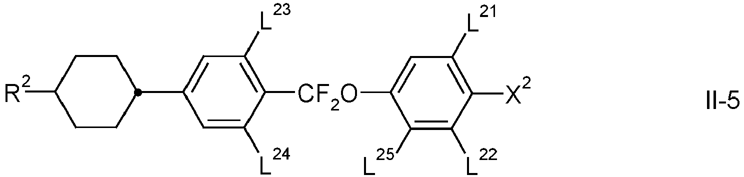 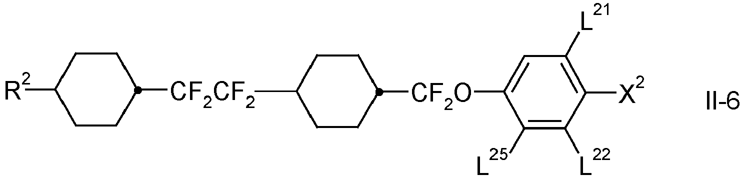 in which
R² denotes n-alkyl having 1 to 7 C atoms,
L²¹, L²², L²³ and L²⁴, independently of one another, denote H or F,
L²⁵ denotes H or methyl, and
X² denotes F, Cl, halogenated alkyl or halogenated alkoxy having 1 to 6 C atoms.

8. Lighting device according to one or more of Claims 1 to 7, **characterised in that** the medium present therein additionally comprises one or more compounds selected from the group of the compounds of the formulae IIA and IIB, 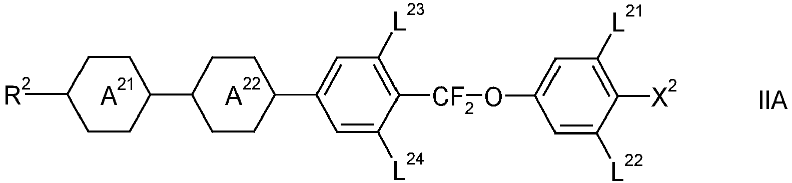 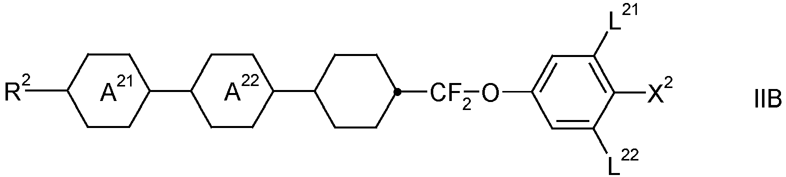 in which R², A²¹, A²², L²¹, L²² and X² have the meaning indicated for formula II in Claim 7 and L²³ and L²⁴ have the meaning indicated for L21.

9. Lighting device according to one or more of Claims 1 to 8, **characterised in that** the medium present therein additionally comprises one or more compounds of the formula III, 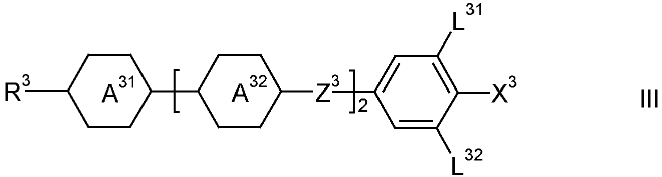 in which R³ has the meaning indicated for R² in Claim 7, 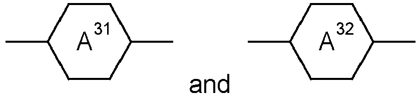 on each occurrence, independently of one another, denote 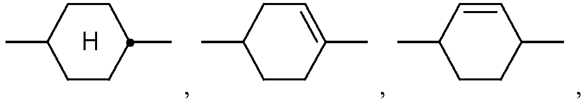 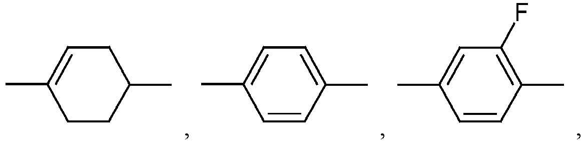 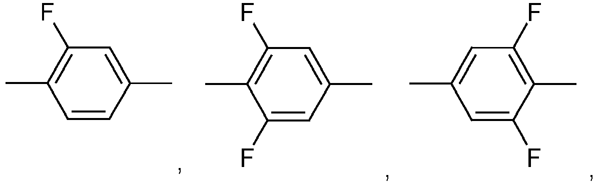 or 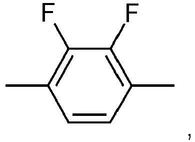
Z³ on each occurrence, independently of one another, denotes -CH₂CH₂-, -COO-, *trans-* -CH=CH-, *trans-* -CF=CF-, -CH₂O-, -C=C- or a single bond,
L³¹, L³² denote H or F,
X³ denotes F, Cl, CN, a halogenated alkyl radical, a halogenated alkenyl radical, a halogenated alkoxy radical or a halogenated alkenyloxy radical having up to 6 C atoms.

10. Lighting device according to Claim 9, where the compounds of the formula III are selected from the compounds of the formulae III-1 to III-9 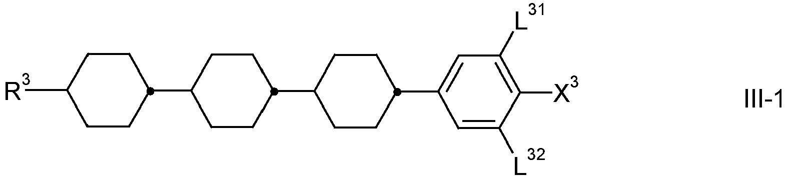 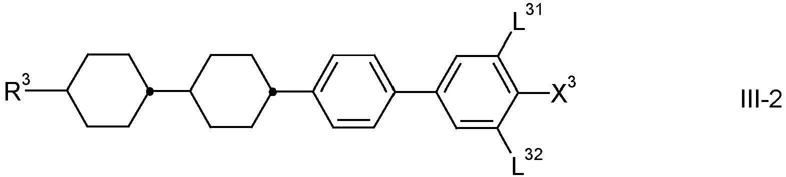 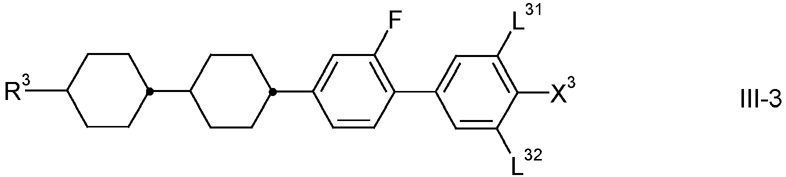 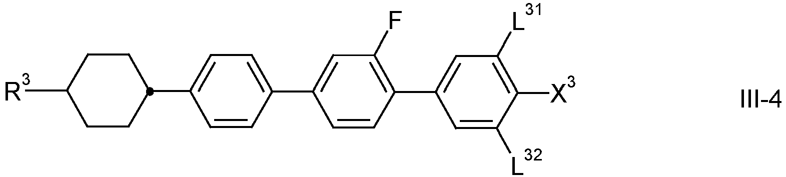 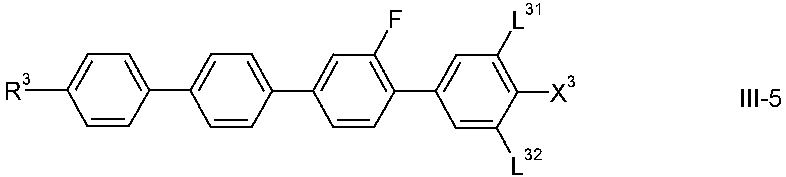 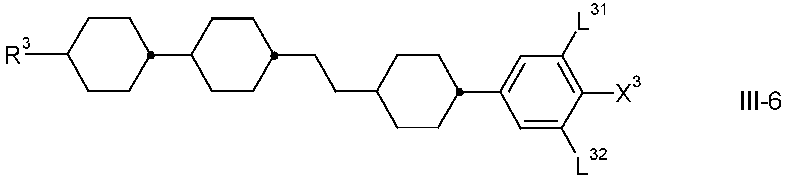 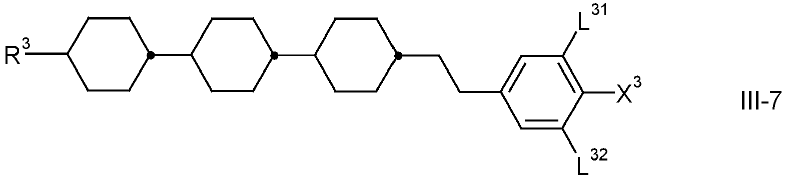 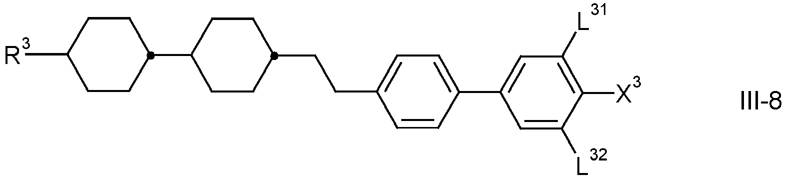 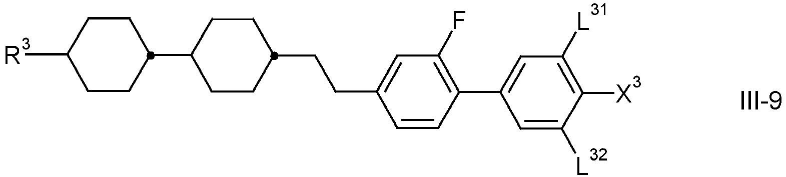 in which
R³, L³¹ and L³² have the meanings indicated in Claim 10
and
X³ denotes F, Cl, halogenated alkyl or halogenated alkoxy having up to 6 C atoms.

11. Lighting device according to one or more of Claims 1 bis 10, **characterised in that** the medium present therein additionally comprises one or more compounds selected from the group of the compounds of the formulae IV-11 and IV-12 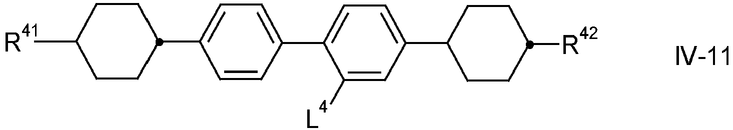 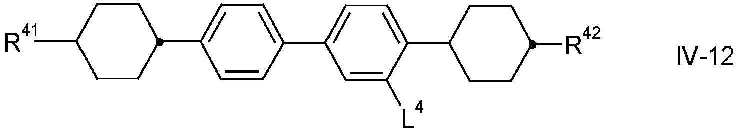 in which
R⁴¹ and R⁴², independently of one another, denote n-alkyl having 1 to 7 C atoms, and
L⁴ denotes H or F.

12. Liquid-crystalline medium as present in the component according to Claim 7.

13. Use of the liquid-crystalline medium according to Claim 12 in liquid-crystal light valves in lighting devices for vehicles.

## Revendications

1. Dispositif d'éclairage pour véhicules contenant un composant électro-optique, **caractérisé en ce que** le composant électro-optique contient un milieu cristallin liquide qui comprend un ou plusieurs composés de formule CC : 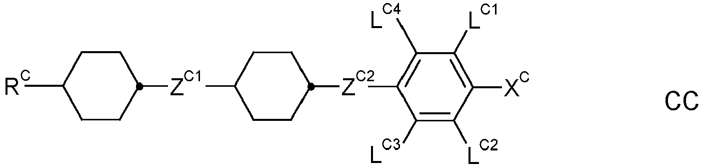 dans laquelle
R^{C} désigne un radical alkyle, alcényle ou alcoxy ayant de 1 à 15 atomes de C, dans lequel un groupement méthylène peut être remplacé par 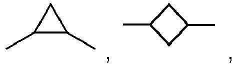 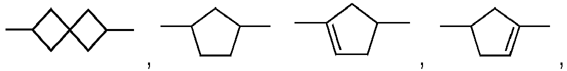 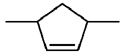 et dans lequel dans chaque cas un ou plusieurs atomes de H peuvent être remplacés par F,
X^{C} désigne F, Cl, un radical alkyle halogéné, un radical alcényle halogéné, un radical alcoxy halogéné ou un radical alcényloxy halogéné ayant jusqu'à 6 atomes de C,
Z^{C1}, Z^{C2}, indépendamment l'un de l'autre, désignent -CH₂CH₂- ou une liaison simple,
L^{C1} et L^{C2}, indépendamment l'un de l'autre, désignent H ou F,
L^{C3} et L^{C4} indépendamment l'un de l'autre, désignent H ou méthyle,
et **caractérisé en ce que** le milieu présente un point de clarification de 120°C ou plus, où la concentration totale des un ou plusieurs composés de formule CC dans le milieu est 55% en poids ou plus.

2. Dispositif d'éclairage selon la revendication 1, dans lequel le milieu qui y est présent possède une biréfringence dans la plage allant de 0,060 à 0,100 à 20°C et une longueur d'onde de 589,3 nm.

3. Dispositif d'éclairage selon la revendication 1 ou 2, dans lequel le milieu qui y est présent comprend un ou plusieurs composés de formule CP 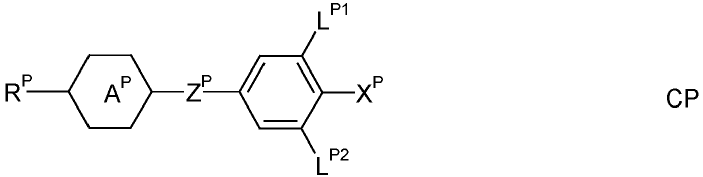 dans laquelle
R^{P} désigne un radical alkyle, alcényle ou alcoxy ayant de 1 à 15 atomes de C, dans lequel un groupement méthylène peut être remplacé par 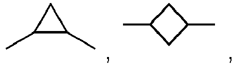 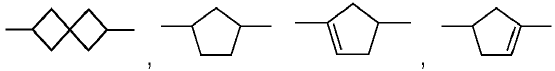 ou 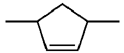 et dans lequel dans chaque cas un ou plusieurs atomes de H peuvent être remplacés par F,
A^{P} désigne 1,4-cyclohexylène, dans lequel un ou deux groupements CH₂ non adjacents peuvent être remplacés par -O-, ou 1,4-phénylène, dans lequel un ou deux groupements CH peuvent être remplacés par N,
X^{P} désigne F, Cl, un radical alkyle halogéné, un radical alcényle halogéné, un radical alcoxy halogéné ou un radical alcényloxy halogéné ayant jusqu'à 6 atomes de C,
Z^{P}, indépendamment les uns des autres, désigne -CH₂CH₂-ou une liaison simple,
L^{P1} et L^{P2}, indépendamment l'un de l'autre, désignent H ou F,
selon une concentration totale de 2% ou moins.

4. Dispositif d'éclairage selon l'une ou plusieurs parmi les revendications 1 à 3, dans lequel le milieu qui y est présent comprend un ou plusieurs composés de formule IV-1 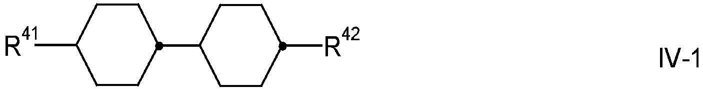 dans laquelle
R⁴¹ désigne alkyle ayant jusqu'à 7 atomes de C et
R⁴² désigne alkyle ou alcoxy, dans chaque cas ayant jusqu'à 7 atomes de C,
ou
R⁴¹ désigne alcényle ayant jusqu'à 7 atomes de C et R⁴² désigne alkyle ou alcényle, dans chaque cas ayant jusqu'à 7 atomes de C,
où un ou plusieurs atomes de H dans les radicaux R⁴¹ et R⁴² peuvent être remplacés par F,
selon une concentration totale de 25% ou moins.

5. Dispositif d'éclairage selon l'une ou plusieurs parmi les revendications 1 à 4, dans lequel le milieu qui y est présent comprend un ou plusieurs composés de formule CC choisis dans le groupe constitué par les composés CC-1 à CC-12 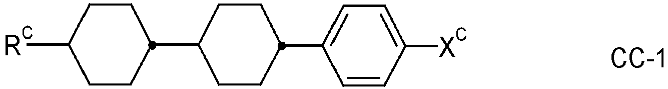 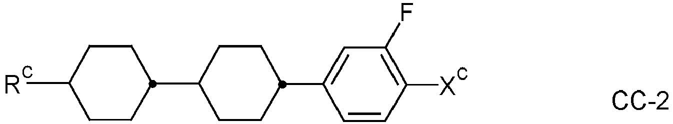 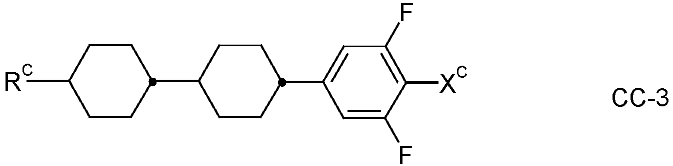 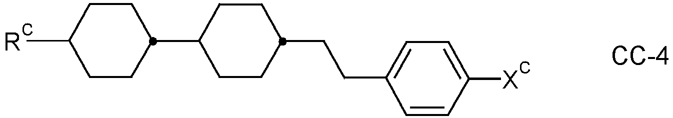 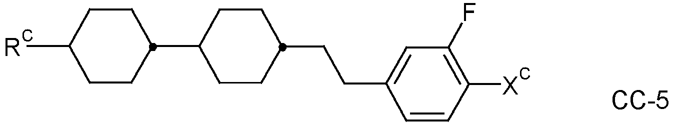 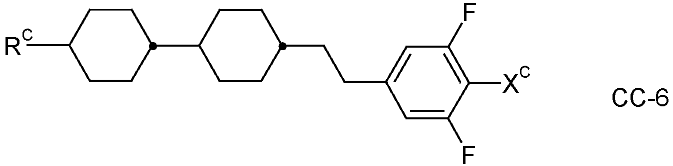 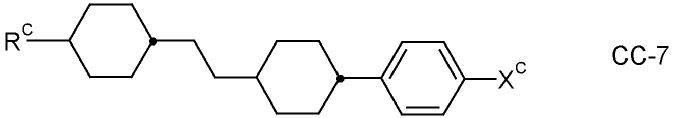 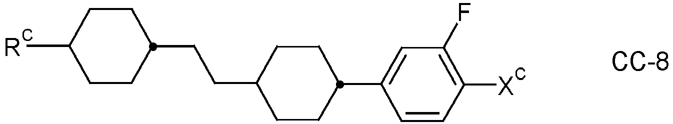 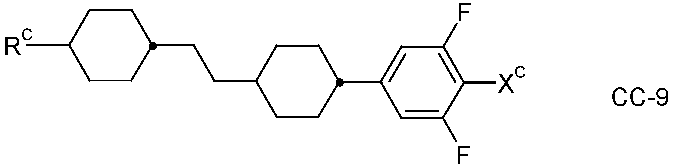 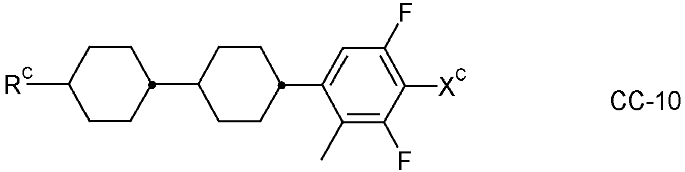 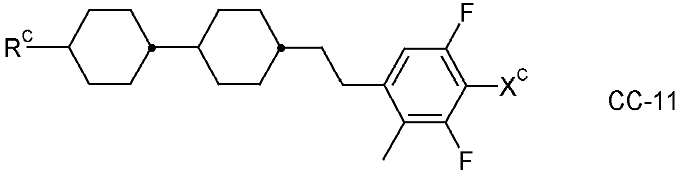 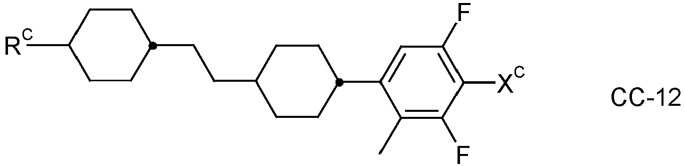 dans lesquels R^{C} et X^{C} revêtent les significations indiquées selon la revendication 1.

6. Dispositif d'éclairage selon l'une ou plusieurs parmi les revendications 1 à 5, **caractérisé en ce que** le milieu qui y est présent comprend en outre un ou plusieurs composés de formule II selon une concentration totale de 40% ou moins, 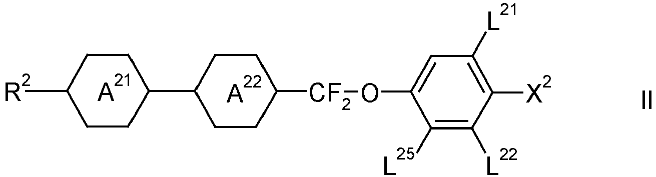 dans laquelle
R² désigne un radical alkyle, alcényle ou alcoxy ayant de 1 à 15 atomes de C, dans lequel un groupement méthylène peut être remplacé par 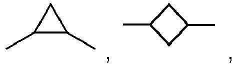 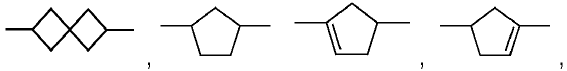 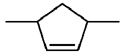 et dans lequel dans chaque cas un ou plusieurs atomes de H peuvent être remplacés par F, 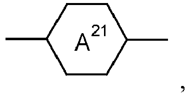 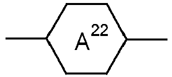 à chaque occurrence, de manière identique ou différente, désignent 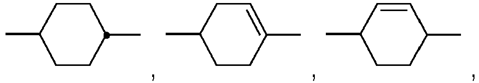 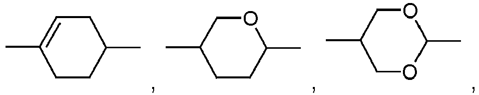 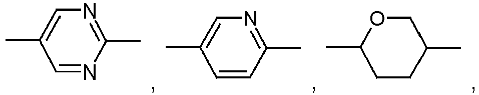 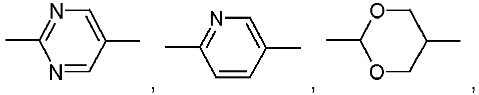 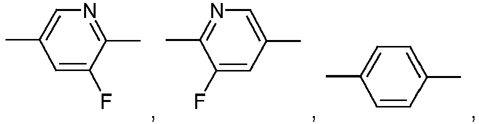 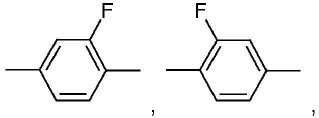 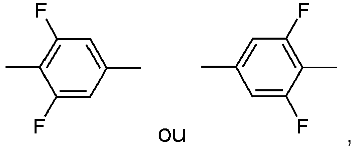
L²¹ et L²², indépendamment l'un de l'autre, désignent H ou F,
L²⁵ désigne H ou méthyle,
X² désigne F, Cl, CN, un radical alkyle halogéné, un radical alcényle halogéné, un radical alcoxy halogéné ou un radical alcényloxy halogéné ayant de 1 à 6 atomes de C.

7. Dispositif d'éclairage selon la revendication 6, dans lequel les composés de formule II sont choisis dans le groupe constitué par les composés II-1 à II-6 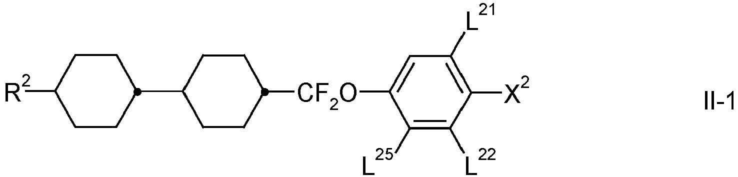 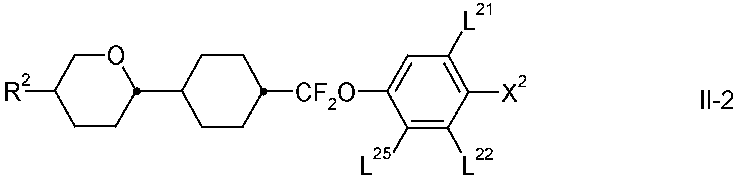 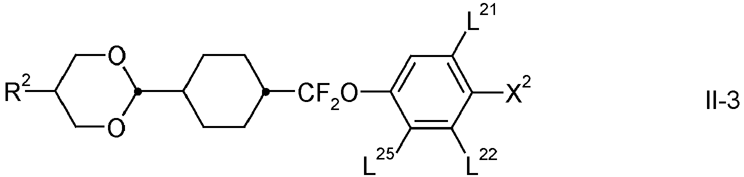 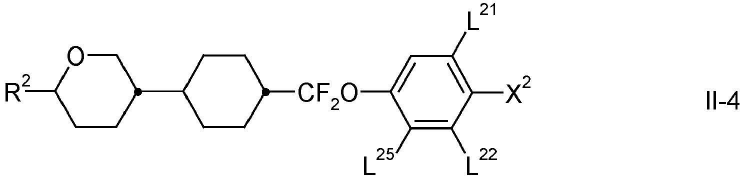 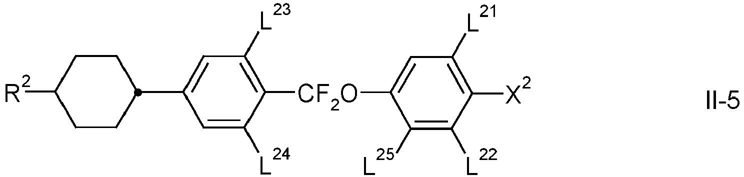 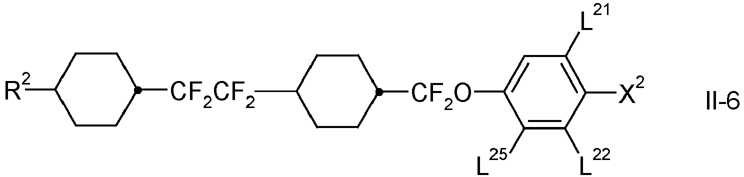 dans lesquels
R² désigne n-alkyle ayant de 1 à 7 atomes de C,
L²¹, L²², L²³ et L²⁴, indépendamment les uns des autres, désignent H ou F,
L²⁵ désigne H ou méthyle, et
X² désigne F, Cl, alkyle halogéné ou alcoxy halogéné ayant de 1 à 6 atomes de C.

8. Dispositif d'éclairage selon l'une ou plusieurs parmi les revendications 1 à 7, **caractérisé en ce que** le milieu qui y est présent comprend en outre un ou plusieurs composés choisis dans le groupe constitué par les composés de formules IIA et IIB, 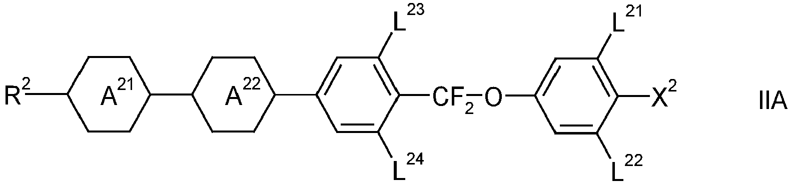 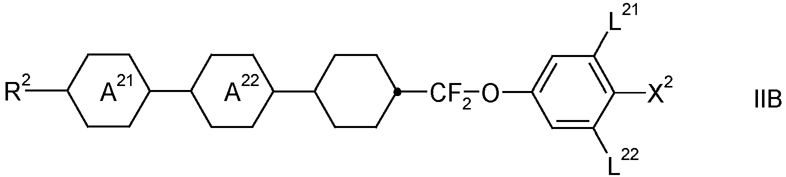 dans lesquelles R², A²¹, A²², L²¹, L²² et X² revêtent la signification indiquée pour la formule II selon la revendication 7 et L²³ et L²⁴ revêtent la signification indiquée pour L²¹.

9. Dispositif d'éclairage selon l'une ou plusieurs parmi les revendications 1 à 8, **caractérisé en ce que** le milieu qui y est présent comprend en outre un ou plusieurs composés de formule III, 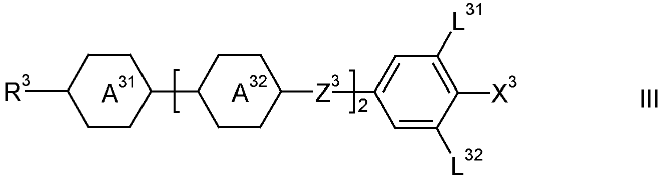 dans laquelle R³ revêt la signification indiquée pour R² selon la revendication 7, 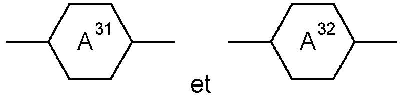 à chaque occurrence, indépendamment l'un de l'autre, désignent 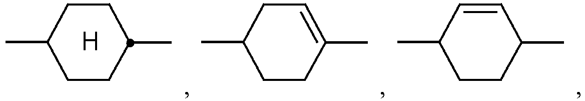 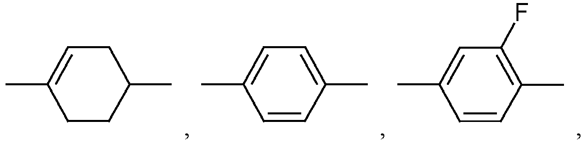 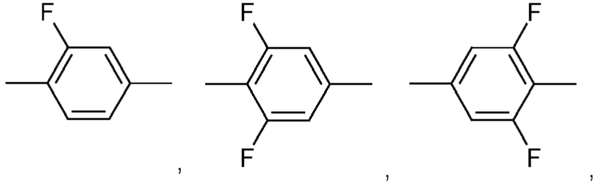 ou 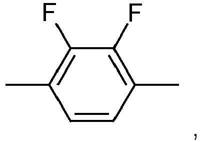
Z³ à chaque occurrence, indépendamment les uns des autres, désigne -CH₂CH₂-, -COO-, *trans-* -CH=CH-, *trans-* -CF=CF-, -CH₂O-, -C=C- ou une liaison simple,
L³¹, L³² désignent H ou F,
X³ désigne F, Cl, CN, un radical alkyle halogéné, un radical alcényle halogéné, un radical alcoxy halogéné ou un radical alcényloxy halogéné ayant jusqu'à 6 atomes de C.

10. Dispositif d'éclairage selon la revendication 9, dans lequel les composés de formule III sont choisis parmi les composés de formules III-1 à III-9 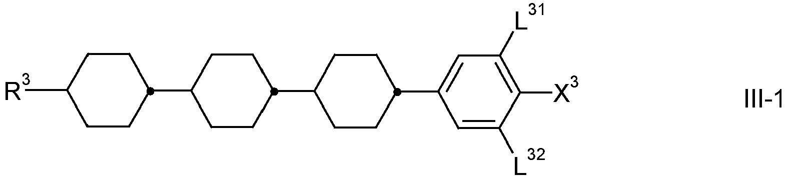 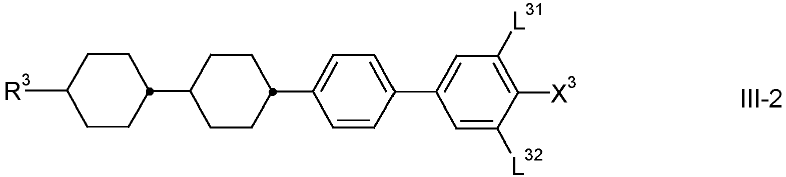 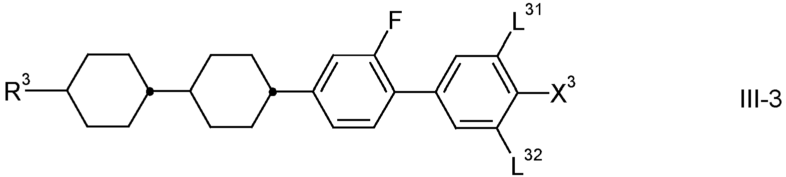 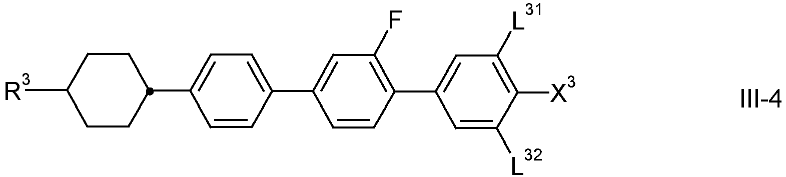 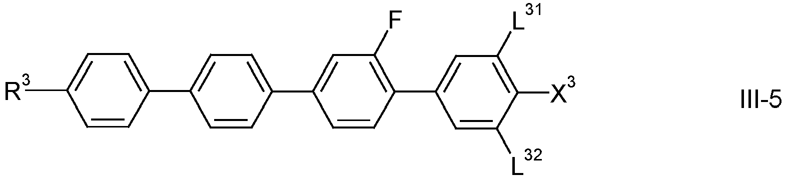 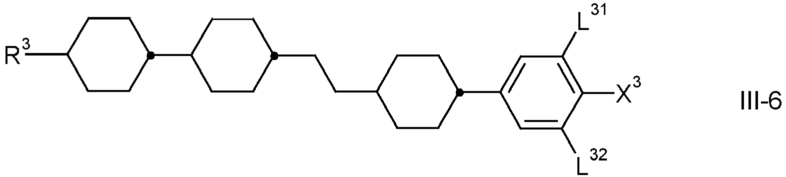 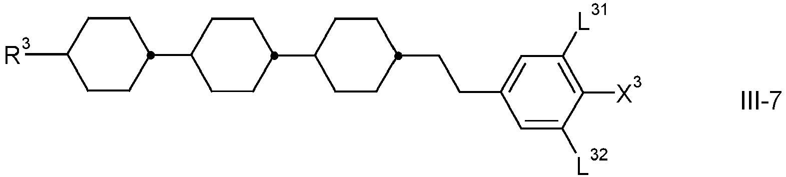 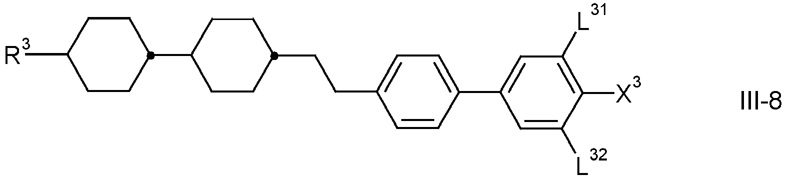 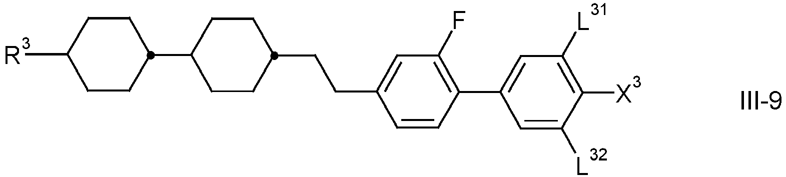 dans lesquelles
R³, L³¹ et L³² revêtent les significations indiquées selon la revendication 10
et
X³ désigne F, Cl, alkyle halogéné ou alcoxy halogéné ayant jusqu'à 6 atomes de C.

11. Dispositif d'éclairage selon l'une ou plusieurs parmi les revendications 1 à 10, **caractérisé en ce que** le milieu qui y est présent comprend en outre un ou plusieurs composés choisis dans le groupe constitué par les composés de formules IV-11 et IV-12 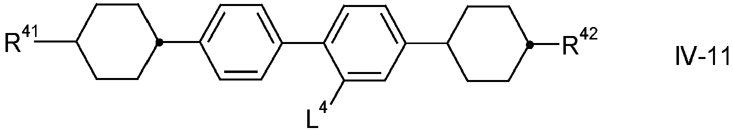 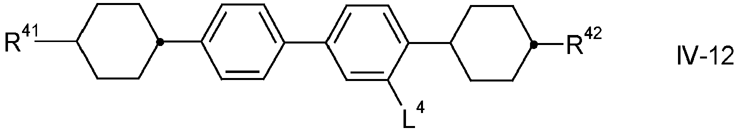 dans lesquelles
R⁴¹ et R⁴², indépendamment l'un de l'autre, désignent n-alkyle ayant de 1 à 7 atomes de C, et
L⁴ désigne H ou F.

12. Milieu cristallin liquide tel que présent dans le composant selon la revendication 7.

13. Utilisation du milieu cristallin liquide selon la revendication 12, dans les valves optiques à cristaux liquides dans les dispositifs d'éclairages pour véhicules.
